(19) Europäisches Patentamt
European Patent Office
Office européen des brevets

(11) **EP 2 849 313 A1**

(12) **EUROPEAN PATENT APPLICATION**
published in accordance with Art. 153(4) EPC

(43) Date of publication:
**18.03.2015 Bulletin 2015/12**

(51) Int Cl.:
***H02J 17/00*** *(2006.01)*   ***H02J 7/00*** *(2006.01)*

(21) Application number: **12876153.3**

(22) Date of filing: **09.05.2012**

(86) International application number:
**PCT/JP2012/061830**

(87) International publication number:
**WO 2013/168241 (14.11.2013 Gazette 2013/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventor: **ICHIKAWA, Shinji
Toyota-shi
Aichi 471-8571 (JP)**

(74) Representative: **Smith, Samuel Leonard
J A Kemp
14 South Square
Gray's Inn
London WC1R 5JJ (GB)**

(54) **VEHICLE**

(57)     An electrically powered vehicle (10) includes: a connection portion to which a supply unit that supplies energy is connected; and a power reception unit (20) that receives electric power contactlessly from a power transmission unit provided externally, the vehicle including a front region (R2) disposed at a front side relative to a center of the vehicle in a front-rear direction, and a rear region (R3) disposed at a rear portion relative to the center of the vehicle, the power reception unit (20) being disposed to be displaced to one of the front region (R2) and the rear region (R3) relative to the center in the front-rear direction, the connection portion being provided in the other of the front region (R2) and the rear region (R3).

FIG.14

**Description**

TECHNICAL FIELD

The present invention relates to a vehicle capable of contactlessly receiving electric power.

BACKGROUND ART

In recent years, due to concerns with environment, attention has been drawn to a hybrid vehicle, an electric vehicle, and the like, each of which drives driving wheels using electric power from a battery or the like.

Particularly drawing attention in recent years is wireless charging, by which such a battery included in an electrically powered vehicle can be charged contactlessly without using a plug or the like. Recently, various types of charging methods have been proposed with regard to the contactless charging methods. Particularly, a technique of contactlessly transferring electric power using a resonance phenomenon is receiving attention.

For example, a vehicle described in each of Japanese Patent Laying-Open No. 2010-172084 and Japanese Patent Laying-Open No. 2011-49230 includes a primary side core, and a primary side coil wound around the primary side core.

Also, a vehicle described in Japanese Patent Laying-Open No. 2011-193671 includes a power reception unit that receives electric power from a power transmission unit provided externally.

CITATION LIST

PATENT DOCUMENT

PTD 1: Japanese Patent Laying-Open No. 2010-172084
PTD 2: Japanese Patent Laying-Open No. 2011-49230
PTD 3: Japanese Patent Laying-Open No. 2011-193671

SUMMARY OF INVENTION

TECHNICAL PROBLEM

Some vehicles include: a connection portion to which a charging plug, a refueling plug, or the like is connected; and a power reception unit that contactlessly receives electric power. However, in none of the patent documents described above, layout positions of the connection portion and the power reception unit are taken into consideration.

Accordingly, for example, if a refueling operation or a charging operation is performed using the connection portion while contactlessly receiving electric power using the power reception unit, an electronic device possessed by the operator may be affected by an electromagnetic field formed around the power reception unit, depending on the layout positions of the power reception unit and the connection portion.

The present invention has been made in view of the foregoing problem, and has an object to provide a vehicle capable of reducing an influence over an electronic device carried by an operator who performs an operation using a connection portion, by devising layout positions of a power reception unit and the connection portion.

SOLUTION TO PROBLEM

A vehicle according to the present invention include: a connection portion to which a supply unit that supplies energy is connected; and a power reception unit that receives electric power contactlessly from a power transmission unit provided externally. The vehicle includes a front region located at a front side relative to a center of the vehicle in a front-rear direction, and a rear region located at a rear portion relative to the center of the vehicle. The power reception unit is disposed to be displaced to one of the front region and the rear region relative to the center in the front-rear direction.

Preferably, the vehicle includes a front surface, a rear surface, a right side surface, and a left side surface. The power reception unit includes a coil formed to surround a winding axis, the coil being disposed such that the winding axis passes through the front surface and the rear surface. The connection portion is provided in at least one of the right side surface and the left side surface.

Preferably, the vehicle includes a front surface, a rear surface, a right side surface, and a left side surface. The power reception unit includes a coil formed to surround a winding axis, the coil being disposed such that the winding axis passes through the right side surface and the left side surface. The power reception unit is disposed to be displaced to the front region relative to the center in the front-rear direction. The connection portion is provided in the rear surface.

Preferably, the vehicle includes a front surface, a rear surface, a right side surface, and a left side surface. The power reception unit includes a coil formed to surround a winding axis, the coil being disposed such that the winding axis passes through the front surface and the rear surface. The power reception unit is disposed to be displaced to the rear region relative to the center in the front-rear direction. The connection portion is provided in the front surface. Preferably, the vehicle includes an upper surface. The connection portion is provided in the upper surface.

Preferably, the vehicle includes a front surface, a rear surface, a right side surface, and a left side surface. The connection portion is provided in a surface farthest from the power reception unit among the front surface, the rear surface, the right side surface, and the left side surface.

Preferably, the vehicle further includes a battery. The connection portion includes a charging portion to which a power supply unit that supplies electric power is connected. The battery is provided between the power reception unit and the charging portion. Preferably, the vehicle includes a bottom surface. The power reception unit is disposed at the bottom surface side.

Preferably, a difference between a natural frequency of the power transmission unit and a natural frequency of the power reception unit is 10% or less of the natural frequency of the power reception unit. Preferably, a coupling coefficient between the power reception unit and the power transmission unit is 0.1 or less.

Preferably, the power reception unit receives electric power from the power transmission unit through at least one of a magnetic field and an electric field, the magnetic field being formed between the power reception unit and the power transmission unit and oscillating at a specific frequency, the electric field being formed between the power reception unit and the power transmission unit and oscillating at the specific frequency.

In another aspect, a vehicle according to the present invention includes: a connection portion to which a supply unit that supplies energy is connected; and a power reception unit that receives electric power contactlessly from a power transmission unit provided externally. The vehicle includes a right region located on the right relative to a center of the vehicle in a width direction, and a left region located on the left relative to the center of the vehicle in the width direction. The power reception unit is disposed to be displaced to one of the right region and the left region relative to the center in the width direction, and the connection portion is provided in the other of the right region and the left region.

Preferably, the vehicle includes a front surface, a rear surface, a right side surface, and a left side surface. The power reception unit includes a coil formed to surround a winding axis, the coil being disposed such that the winding axis passes through the front surface and the rear surface. The power reception unit is disposed to be displaced to the right region relative to the center in the width direction, and the connection portion is provided in the left side surface.

Preferably, the vehicle includes a front surface, a rear surface, a right side surface, and a left side surface. The power reception unit includes a coil formed to surround a winding axis, the coil being disposed such that the winding axis passes through the front surface and the rear surface. The power reception unit is disposed to be displaced to the left region relative to the center in the width direction, and the connection portion is provided in the right side surface.

Preferably, the vehicle includes a front surface, a rear surface, a right side surface, and a left side surface. The power reception unit includes a coil formed to surround a winding axis, the coil being disposed such that the winding axis passes through the right side surface and the left side surface. The connection portion is provided in at least one of the front surface and the rear surface. Preferably, the vehicle includes an upper surface. The connection portion is provided in the upper surface.

Preferably, the vehicle includes a front surface, a rear surface, a right side surface, and a left side surface. The connection portion is provided in a surface farthest away from the power reception unit among the front surface, the rear surface, the right side surface, and the left side surface.

Preferably, the vehicle further includes a battery. The connection portion includes a charging portion to which a power supply unit that supplies electric power is connected. The battery is provided between the power reception unit and the charging portion. Preferably, the vehicle includes a bottom surface. The power reception unit is disposed at the bottom surface side.

Preferably, a difference between a natural frequency of the power transmission unit and a natural frequency of the power reception unit is 10% or less of the natural frequency of the power reception unit. Preferably, a coupling coefficient between the power reception unit and the power transmission unit is 0.1 or less.

Preferably, the power reception unit receives electric power from the power transmission unit through at least one of a magnetic field and an electric field, the magnetic field being formed between the power reception unit and the power transmission unit and oscillating at a specific frequency, the electric field being formed between the power reception unit and the power transmission unit and oscillating at the specific frequency.

ADVANTAGEOUS EFFECTS OF INVENTION

According to the vehicle in the present invention, the electronic device carried by the operator who performs an operation using the connection portion can be less affected when receiving electric power using the power reception unit.

BRIEF DESCRIPTION OF DRAWINGS

Fig. 1 is a schematic view schematically showing a power reception device, a power transmission device, and a power transfer system according to the present embodiment.

Fig. 2 is a side view showing the left side surface of electrically powered vehicle 10.

Fig. 3 is a side view showing the right side surface of electrically powered vehicle 10.

Fig. 4 is a front view of electrically powered vehicle 10.

Fig. 5 is a rear view of electrically powered vehicle 10.

Fig. 6 is a top view of electrically powered vehicle 10.

Fig. 7 is a bottom view of electrically powered vehicle 10.

Fig. 8 is a cross sectional view showing power reception device 11.

Fig. 9 is an exploded perspective view of power reception device 11.

Fig. 10 is an exploded perspective view showing a fixation member 27 and a ferrite core 21.

Fig. 11 is a perspective view showing a secondary coil 22.

Fig. 12 is a plan view of secondary coil 22 when viewed in plan.

Fig. 13 is a perspective view showing a state in which power reception unit 20 and power transmission unit 56 are arranged to face each other.

Fig. 14 is a plan view schematically showing a layout of a power reception unit 20 (secondary coil 22), a refueling portion 77, and a charging portion 78 when electrically powered vehicle 10 is viewed from above in a direction vertical to electrically powered vehicle 10.

Fig. 15 is a schematic view showing a simulation model of the power transfer system.

Fig. 16 is a graph showing a relation between power transfer efficiency and deviation in natural frequency between power transmission unit 93 and power reception unit 96.

Fig. 17 is a graph showing a relation between the power transfer efficiency and frequency f3 of current supplied to a primary coil 58 when an air gap AG is changed with natural frequency f0 being fixed.

Fig. 18 is a graph showing distribution of a magnetic field in a direction in which a winding axis O1 extends.

Fig. 19 is a graph showing distribution of a magnetic field in a direction perpendicular to winding axis O1.

Fig. 20 is a graph showing distribution of an electric field in the direction in which winding axis O1 extends.

Fig. 21 is a graph showing distribution of an electric field in the direction perpendicular to winding axis O1.

Fig. 22 is a plan view schematically showing a modification of electrically powered vehicle 10 according to the first embodiment.

Fig. 23 is a left side view of an electrically powered vehicle 10 according to a second embodiment.

Fig. 24 is a plan view showing upper surface 75 of electrically powered vehicle 10.

Fig. 25 is a plan view schematically showing a power reception unit 20, a refueling portion 77, and a charging portion 78.

Fig. 26 is a left side view of an electrically powered vehicle 10 according to a third embodiment.

Fig. 27 is a plan view schematically showing layout positions of a power reception unit 20, a refueling portion 77, and a charging portion 78.

Fig. 28 is a plan view schematically showing a first modification of electrically powered vehicle 10 according to the third embodiment.

Fig. 29 is a plan view showing upper surface 75 of an electrically powered vehicle 10 according to a fourth embodiment.

Fig. 30 is a plan view schematically showing a layout of a power reception unit 20, a refueling portion 77, and a charging portion 78.

Fig. 31 is a left side view of an electrically powered vehicle 10 according to a fifth embodiment.

Fig. 32 is a right side view of electrically powered vehicle 10.

Fig. 33 is a plan view schematically showing layout positions of a power reception unit 20, a refueling portion 77, and a charging portion 78.

Fig. 34 is a plan view showing upper surface 75 of an electrically powered vehicle 10 according to a sixth embodiment.

Fig. 35 is a plan view schematically showing electrically powered vehicle 10.

Fig. 36 is a plan view schematically showing a modification of electrically powered vehicle 10 according to the sixth embodiment.

Fig. 37 is a left side view of an electrically powered vehicle 10 according to a seventh embodiment.

Fig. 38 is a rear view of electrically powered vehicle 10.

Fig. 39 is a plan view schematically showing electrically powered vehicle 10.

Fig. 40 is a left side view of an electrically powered vehicle 10 according to an eighth embodiment.

Fig. 41 is a right side view of electrically powered vehicle 10.

Fig. 42 is a plan view schematically showing layout positions of a power reception unit 20, a refueling portion 77, and a charging portion 78.

Fig. 43 is a plan view showing an electrically powered vehicle 10 according to a ninth embodiment.

Fig. 44 is a left side view of electrically powered vehicle 10.

Fig. 45 is a plan view schematically showing mounting positions of a power reception unit 20, a refueling portion 77, and a charging portion 78.

Fig. 46 is a plan view schematically showing a modification of electrically powered vehicle 10 according to the ninth embodiment.

Fig. 47 is a left side view of an electrically powered vehicle 10 according to a tenth embodiment.

Fig. 48 is a plan view schematically showing layout positions of a power reception unit 20, a refueling portion 77, and a charging portion 78.

Fig. 49 is a plan view schematically showing a first modification according to the tenth embodiment.

Fig. 50 is a plan view schematically showing a second modification of electrically powered vehicle 10 according to the tenth embodiment.

Fig. 51 is a plan view schematically showing a third modification of electrically powered vehicle 10 according to the tenth embodiment.

Fig. 52 is a front view of an electrically powered vehicle 10 according to an eleventh embodiment.

Fig. 53 is a plan view schematically showing layout positions of a refueling portion 77, a charging portion 78, and a power reception unit 20.

Fig. 54 is a plan view showing a first modification of electrically powered vehicle 10 according to the eleventh embodiment.

Fig. 55 is a plan view schematically showing layout positions of refueling portion 77, charging portion 78, and power reception unit 20.

Fig. 56 is a left side view of an electrically powered vehicle 10 according to a twelfth embodiment.

Fig. 57 is a right side view of electrically powered vehicle 10.

Fig. 58 is a plan view schematically showing mounting positions of a refueling portion 77, a charging portion 78, and a power reception unit 20.

Fig. 59 is a plan view schematically showing a first modification of the twelfth embodiment.

Fig. 60 is a plan view schematically showing a second modification of electrically powered vehicle 10 according to the twelfth embodiment.

Fig. 61 is a right side view showing an electrically powered vehicle 10 according to a thirteenth embodiment.

Fig. 62 is a plan view schematically showing mounting positions of a refueling portion 77, a charging portion 78, and a power reception unit 20.

Fig. 63 is a plan view showing a modification of electrically powered vehicle 10 according to the thirteenth embodiment.

Fig. 64 is a plan view schematically showing layout positions of refueling portion 77, charging portion 78, and power reception unit 20 in electrically powered vehicle 10.

Fig. 65 is a front view of an electrically powered vehicle 10 according to a fourteenth embodiment.

Fig. 66 is a right side view of electrically powered vehicle 10.

Fig. 67 is a plan view schematically showing layout positions of a power reception unit 20, a refueling portion 77, and a charging portion 78.

Fig. 68 is a plan view showing a modification of electrically powered vehicle 10 according to the fourteenth embodiment.

Fig. 69 is a plan view schematically showing layout positions of power reception unit 20, refueling portion 77, and charging portion 78.

Fig. 70 is a left side view showing an electrically powered vehicle 10 according to a fifteenth embodiment.

Fig. 71 is a right side view of electrically powered vehicle 10.

Fig. 72 is a plan view schematically showing layout positions of power reception unit 20, refueling portion 77, and charging portion 78.

Fig. 73 is a plan view schematically showing a modification of electrically powered vehicle 10 according to the fifteenth embodiment.

Fig. 74 is a left side view of an electrically powered vehicle 10 according to a sixteenth embodiment.

Fig. 75 is a plan view schematically showing layout positions of a refueling portion 77, a charging portion 78, and a power reception unit 20.

Fig. 76 is a plan view schematically showing a first modification of electrically powered vehicle 10 according to the sixteenth embodiment.

Fig. 77 is a front view of an electrically powered vehicle 10 according to a seventeenth embodiment.

Fig. 78 is a plan view schematically showing mounting positions of a power reception unit 20, a refueling portion 77, and a charging portion 78.

Fig. 79 is a plan view schematically showing a first modification of the seventeenth embodiment.

Fig. 80 is a plan view schematically showing a second modification of the seventeenth embodiment.

Fig. 81 is a plan view schematically showing a third modification of the seventeenth embodiment.

Fig. 82 is a front view of an electrically powered vehicle 10 according to an eighteenth embodiment.

Fig. 83 is a left side view of electrically powered vehicle 10.

Fig. 84 is a plan view schematically showing mounting positions of a power reception unit 20, a refueling portion 77, and a charging portion 78.

Fig. 85 is a plan view schematically showing a modification of electrically powered vehicle 10 according to the eighteenth embodiment.

Fig. 86 is a left side view of an electrically powered vehicle 10 according to a nineteenth embodiment.

Fig. 87 is a plan view schematically showing electrically powered vehicle 10.

Fig. 88 is a plan view of electrically powered vehicle 10.

Fig. 89 is a plan view schematically showing electrically powered vehicle 10.

Fig. 90 is a left side view of an electrically powered vehicle 10 according to a twentieth embodiment.

Fig. 91 is a right side view of electrically powered vehicle 10.

Fig. 92 is a plan view schematically showing mounting positions of a power reception unit 20, a refueling portion 77, and a charging portion 78.

Fig. 93 is a plan view schematically showing a first modification of electrically powered vehicle 10 according to the twentieth embodiment.

Fig. 94 is a left side view of an electrically powered vehicle 10 according to a twenty-first embodiment.

Fig. 95 is a right side view of electrically powered vehicle 10.

Fig. 96 is a plan view schematically showing mounting positions of a power reception unit 20, a refueling portion 77, and a charging portion 78.

Fig. 97 is a plan view schematically showing a first modification of the twenty-first embodiment.

Fig. 98 is a front view of electrically powered vehicle 10.

Fig. 99 is a right side view of an electrically powered vehicle 10 according to a twenty-second embodiment.

Fig. 100 is a plan view schematically showing mounting positions of a power reception unit 20, a refueling portion 77, and a charging portion 78.

Fig. 101 is a plan view schematically showing a modification of the twenty-second embodiment.

Fig. 102 is a plan view showing an electrically powered vehicle 10 according to a twenty-third embodiment.

Fig. 103 is a plan view schematically showing mounting positions of a power reception unit 20 and a charging portion 78 of electrically powered vehicle 10 shown in Fig. 102.

Fig. 104 is a plan view schematically showing an electrically powered vehicle 10 according to a twenty-fourth embodiment.

Fig. 105 is a plan view schematically showing an electrically powered vehicle 10 according to a twenty-fifth embodiment.

Fig. 106 is a plan view showing a power reception unit 20.

Fig. 107 is a cross sectional view taken along a CVII-CVII line shown in Fig. 106.

Fig. 108 is a perspective view showing power reception unit 20 and a power transmission unit 56.

Fig. 109 is a plan view schematically showing an electrically powered vehicle 10 according to a twenty-sixth embodiment.

Fig. 110 is a plan view schematically showing a power reception unit 20.

Fig. 111 is a perspective view schematically showing power reception unit 20 and a power transmission unit 56.

Fig. 112 is a perspective view showing power reception unit 20 and power transmission unit 56.

Fig. 113 is a plan view showing a modification of power reception unit 20.

Fig. 114 is a perspective view showing that electric power is being transferred between power reception unit 20 shown in Fig. 113 and power transmission unit 56 of the same type as power reception unit 20.

Fig. 115 is a perspective view showing that electric power is being transferred between power reception unit 20 shown in Fig. 113 and power transmission unit 56 of a type different from power reception unit 20.

Fig. 116 is a plan view schematically showing an electrically powered vehicle 10 according to a twenty-seventh embodiment.

Fig. 117 is a perspective view showing a power reception unit 20 and a power transmission unit 56.

Fig. 118 is a perspective view showing that electric power is being transferred between power reception unit 20 shown in Fig. 117 and power reception unit 20 of the same type as this power reception unit 20.

Fig. 119 is a perspective view showing that electric power is being transferred between power reception unit 20 and power transmission unit 56.

Fig. 120 is a plan view schematically showing electrically powered vehicle 10.

Fig. 121 is a perspective view showing power reception unit 20 included in electrically powered vehicle 10 according to the present embodiment and power transmission unit 56 that transmits electric power to this power reception unit 20.

Fig. 122 is a plan view schematically showing an electrically powered vehicle 10 according to a twenty-ninth embodiment.

Fig. 123 is a perspective view schematically showing power reception unit 20 and power transmission unit 56.

Fig. 124 is a plan view schematically showing an electrically powered vehicle 10 according to a thirtieth embodiment.

Fig. 125 is a perspective view schematically showing a power reception unit 20 and a power transmission unit 56.

Fig. 126 is a plan view schematically showing an electrically powered vehicle 10 according to a thirty-first embodiment.

Fig. 127 is a perspective view showing a power reception unit 20 and a power transmission unit 56.


DESCRIPTION OF EMBODIMENTS

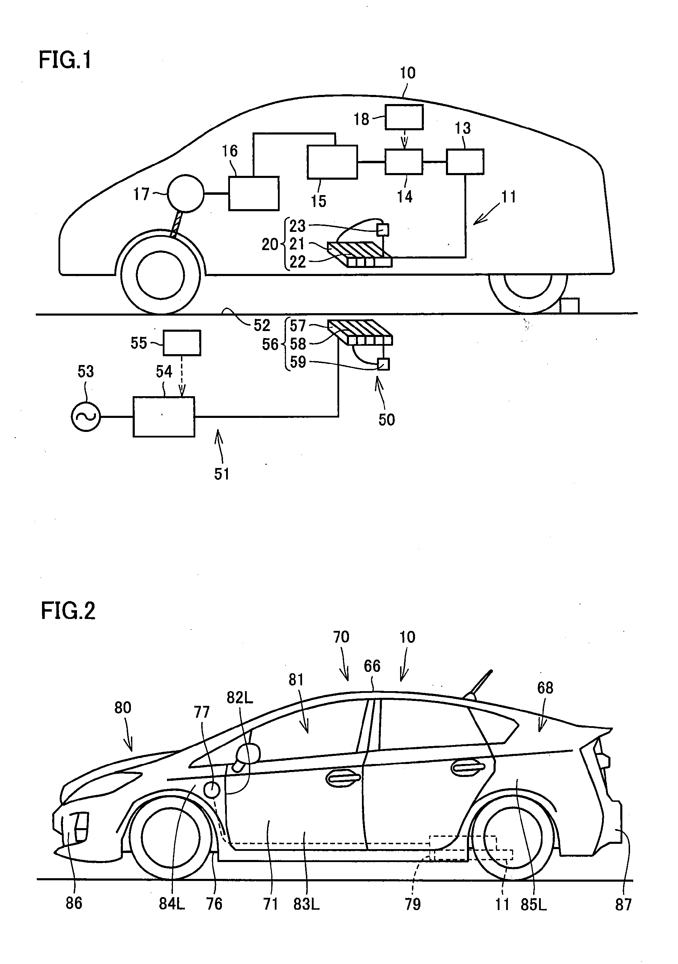

With reference to Fig. 1 to Fig. 127, the following describes electrically powered vehicles according to the present invention.


(First Embodiment)

Fig. 1 is a schematic view schematically showing a power reception device, a power transmission device, and a power transfer system according to the present embodiment.

The power transfer system according to the first embodiment includes: an electrically powered vehicle 10 including a power reception device 11; and an external power feeding device 51 including a power transmission device 50. Power reception device 11 of electrically powered vehicle 10 receives electric power mainly from power transmission device 50 when parked in a predetermined position of a parking space 52 provided with power transmission device 50.

Parking space 52 is provided with a sprag as well as lines indicating a parking position and a parking range such that electrically powered vehicle 10 is parked at the predetermined position.

External power feeding device 51 includes: a high-frequency power driver 54 connected to an AC power supply 53; a control unit 55 that controls driving of high-frequency power driver 54 or the like; and power transmission device 50 connected to this high-frequency power driver 54. Power transmission device 50 includes a power transmission unit 56. Power transmission unit 56 includes: a ferrite core 57; a primary coil (resonance coil) 58 wound around ferrite core 57; and a capacitor 59 connected to this primary coil 58. It is to be noted that capacitor 59 is not an essential configuration. Primary coil 58 is connected to high-frequency power driver 54.

Power transmission unit 56 includes an electric circuit formed by inductance of primary coil 58, stray capacitance of primary coil 58, and capacitance of capacitor 59.

In Fig. 1, electrically powered vehicle 10 includes: power reception device 11; a rectifier 13 connected to power reception device 11; a DC/DC converter 14 connected to rectifier 13; a battery 15 connected to DC/DC converter 14; a power control unit (PCU) 16; a motor unit 17 connected to power control unit 16; and a vehicle ECU (Electronic Control Unit) 18 that controls driving of DC/DC converter 14, power control unit 16, or the like. It is to be noted that electrically powered vehicle 10 according to the present embodiment is a hybrid vehicle including an engine not shown in the figures, but includes a fuel cell vehicle as long as it is a vehicle driven by a motor.

Rectifier 13, which is connected to power reception device 11, converts alternating current supplied from power reception device 11 into direct current, and supplies it to DC/DC converter 14.

DC/DC converter 14 adjusts the voltage of the direct current supplied from rectifier 13, and supplies it to battery 15. It is to be noted that DC/DC converter 14 is not an essential configuration and may be omitted. In such a case, DC/DC converter 14 can be replaced with a matching device to match the impedance between power transmission device 50 and high-frequency power driver 54 in external power feeding device 51.

Power control unit 16 includes a converter connected to battery 15 and an inverter connected to this converter, and the converter adjusts (boosts) the direct current supplied from battery 15 and supplies it to the inverter. The inverter converts the direct current supplied from the converter into alternating current, and supplies it to motor unit 17.

For motor unit 17, a three-phase alternating current motor or the like is employed, for example. Motor unit 17 is driven using the alternating current supplied from the inverter of power control unit 16.

It is to be noted that electrically powered vehicle 10 further includes an engine or a fuel cell. Motor unit 17 includes: a motor generator that mainly functions as a power generator; and a motor generator that mainly functions as a motor.

Power reception device 11 includes a power reception unit 20. Power reception unit 20 includes: a ferrite core 21; a secondary coil 22 wound around the outer circumferential surface of ferrite core 21; and a capacitor 23 connected to secondary coil 22. Also in power reception unit 20, capacitor 23 is not an essential configuration. Secondary coil 22 is connected to rectifier 13. Secondary coil 22 has stray capacitance. Accordingly, power reception unit 20 has an electric circuit formed by inductance of secondary coil 22 and capacitances of secondary coil 22 and capacitor 23. It is to be noted that capacitor 23 is not an essential configuration and can be omitted.

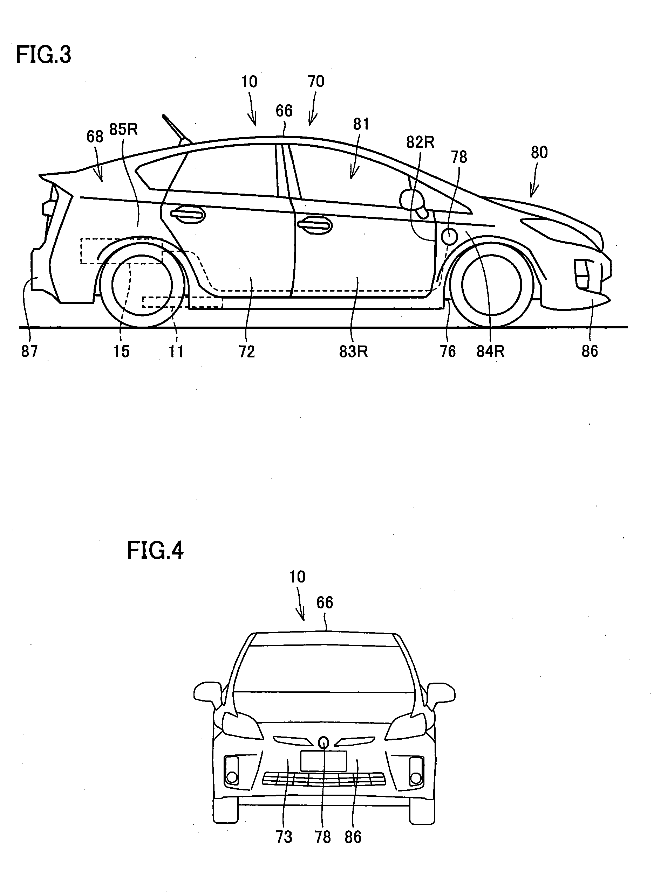

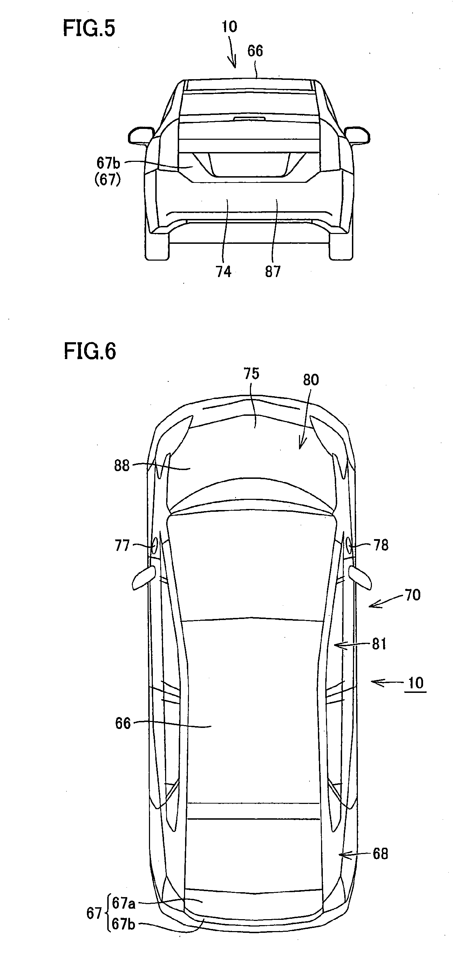

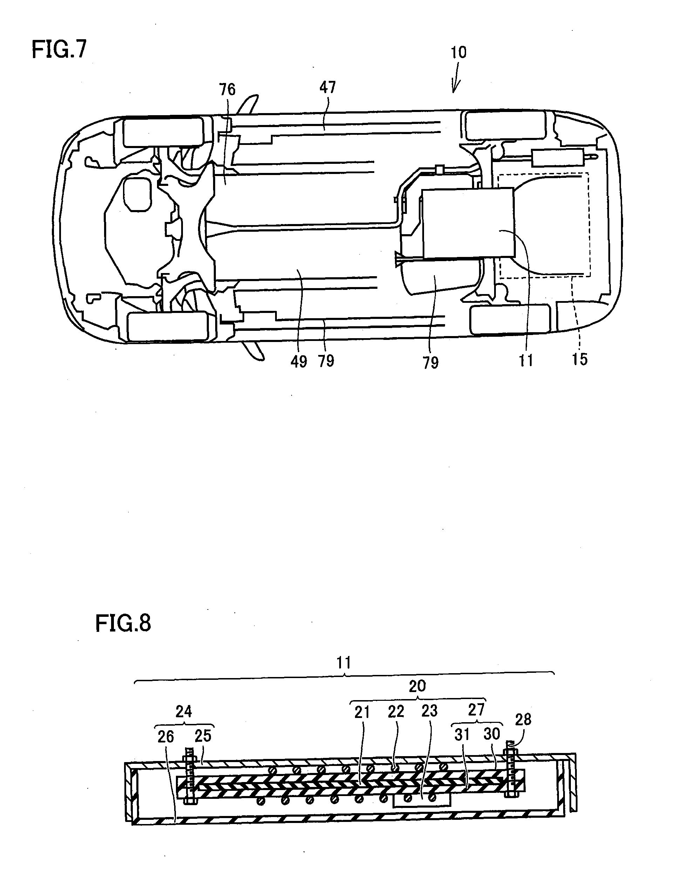

Fig. 2 is a side view showing the left side surface of electrically powered vehicle 10. Fig. 3 is a side view showing the right side surface of electrically powered vehicle 10. Fig. 4 is a front view of electrically powered vehicle 10. Fig. 5 is a rear view of electrically powered vehicle 10. Fig. 6 is a plan view of electrically powered vehicle 10. Fig. 7 is a bottom view of electrically powered vehicle 10.

In Fig. 2, electrically powered vehicle 10 includes a vehicle main body 70 and wheels provided in vehicle main body 70. Formed in vehicle main body 70 are: a driving compartment 80 having motor unit 17, the engine, and the like contained therein; a passenger compartment 81 disposed at a rear side relative to driving compartment 80 in the traveling direction of electrically powered vehicle 10; and a luggage compartment 68 disposed at a rear side relative to passenger compartment 81 in the traveling direction.

In left side surface 71 of electrically powered vehicle 10, a boarding opening 82L is formed to communicate with passenger compartment 81. Vehicle main body 70 includes: a door 83L that opens/closes boarding opening 82L; a front fender 84L disposed at a front side relative to boarding opening 82L in the traveling direction; and a front bumper 86 disposed at a front side relative to front fender 84 in the traveling direction.

Vehicle main body 70 includes: a rear fender 85L disposed at a rear side relative to boarding opening 82L in the traveling direction; and a rear bumper 87 disposed at a rear side relative to rear fender 85L in the travelling direction.

In Fig. 3, in right side surface 72 of electrically powered vehicle 10, a boarding opening 82R is formed to communicate with passenger compartment 81. Vehicle main body 70 includes: a door 83R that opens/closes boarding opening 82R; a front fender 84R disposed at a front side relative to boarding opening 82R in the traveling direction; and a rear fender 85R disposed at a rear side relative to boarding opening 82R in the traveling direction. In Fig. 6, vehicle main body 70 includes: an engine roof 88 that opens/closes driving compartment 80; a roof 66 that defines the upper surface of passenger compartment 81; and a hatch 67 that opens/closes an opening formed in luggage compartment 68. Hatch 67 includes an upper surface portion 67a and a rear surface portion 67b.

Left side surface 71 of electrically powered vehicle 10 is a surface that is in the width direction of electrically powered vehicle 10 and that can be seen when electrically powered vehicle 10 is viewed from a position away from electrically powered vehicle 10 leftward as shown in Fig. 2.

Hence, left side surface 71 of electrically powered vehicle 10 is mainly defined by the side portion of front bumper 86, front fender 84L, door 83L, rear fender 85L, and the side portion of rear bumper 87.

In Fig. 3, right side surface 72 of electrically powered vehicle 10 is a surface that is in the width direction of electrically powered vehicle 10 and that can be seen when electrically powered vehicle 10 is viewed from a position away from electrically powered vehicle 10 rightward as shown in Fig. 3. Hence, right side surface 72 of electrically powered vehicle 10 is mainly defined by the side portion of front bumper 86, front fender 84R, door 83R, rear fender 85R, and the side portion of rear bumper 87.

In Fig. 4, front surface 73 of electrically powered vehicle 10 is a surface that can be seen when electrically powered vehicle 10 is viewed from a position away from electrically powered vehicle 10 forwardly in the traveling direction.

Accordingly, front surface 73 of electrically powered vehicle 10 is mainly defined by the front surface portion of front bumper 86 and members provided between engine roof 88 and front bumper 86.

In Fig. 5, rear surface 74 of electrically powered vehicle 10 is a surface that can be seen when electrically powered vehicle 10 is viewed from a position away from electrically powered vehicle 10 backwardly in the traveling direction.

Accordingly, rear surface 74 of electrically powered vehicle 10 is mainly defined by the rear surface portion of rear bumper 87 and rear surface portion 67b of hatch 67.

In Fig. 6, upper surface 75 of electrically powered vehicle 10 is a surface that can be seen when electrically powered vehicle 10 is viewed from a position away upwardly in a direction vertical to the ground in a state such that the wheels (tires) of electrically powered vehicle 10 are in contact with the ground.

Accordingly, upper surface 75 of electrically powered vehicle 10 is mainly defined by engine roof 88, roof 66, and upper surface portion 67a of hatch 67.

In Fig. 7, bottom surface 76 of electrically powered vehicle 10 is a surface that can be seen when electrically powered vehicle 10 is viewed from a position away downwardly in the direction vertical to the ground in a state such that the wheels (tires) of electrically powered vehicle 10 are in contact with the ground.

Here, as shown in Fig. 2 and Fig. 4, electrically powered vehicle 10 includes: a refueling portion (second connection portion) 77 provided in left side surface 71; a charging portion (first connection portion) 78 provided in front surface 73; and a fuel tank 79 connected to refueling portion 77 via a pipe or the like. In the present specification, the term "connection portion" is intended to mean at least one of refueling portion 77 and charging portion 78.

In the present embodiment, refueling portion 77 is provided at front fender 84L and charging portion 78 is provided at front fender 84R. Charging portion 78 is connected to battery 15. Between charging portion 78 and battery 15, an interconnection and a transducer, which converts alternating current supplied from charging portion 78 into direct current, are provided.

Refueling portion 77 is connected to a refueling plug provided in a refueling device. The refueling plug (fuel supply unit) supplies fuel such as gasoline or liquid hydrogen to refueling portion 77, and the fuel supplied to refueling portion 77 is supplied to fuel tank 79. Thus, energy supplied from refueling portion 77 is energy different from electric power and is obtained from fuel such as gasoline or a hydrogen compound including hydrogen element.

A charging plug provided in a charging device is connected to charging portion 78. The charging plug (power supply unit) supplies electric power to charging portion 78. Alternating current, which is supplied to charging portion 78, is converted into direct current and is accumulated in battery 15.

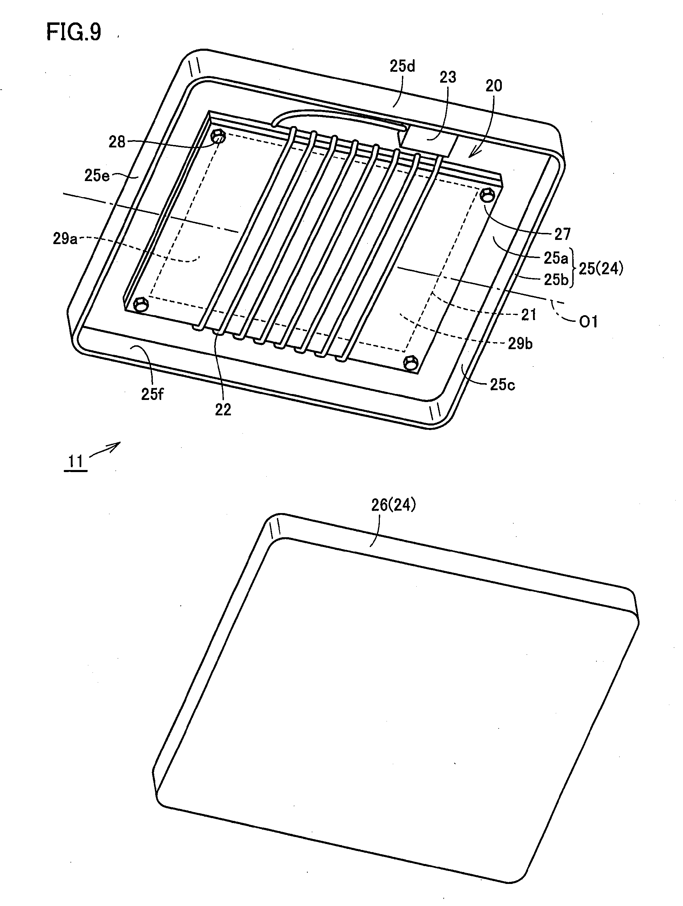

Fig. 8 is a cross sectional view showing power reception device 11 and Fig. 9 is an exploded perspective view of power reception device 11. As shown in Fig. 8 and Fig. 9, power reception device 11 includes power reception unit 20 and a case 24 having power reception unit 20 accommodated therein.

Case 24 includes: a shield 25 formed to open downwardly; and a cover portion 26 provided to close the opening of shield 25.

Shield 25 includes: a top plate portion 25a; and a circumferential wall portion 25b formed to extend downwardly from the circumferential edge portion of top plate portion 25a. Circumferential wall portion 25b includes a plurality of wall portions 25c to 25f, and the plurality of wall portions 25c to 25f are connected to one another to form annular circumferential wall portion 25b. Wall portion 25c and wall portion 25e are arranged in a direction in which winding axis O1 of secondary coil 22 extends, whereas wall portion 25d and wall portion 25f are arranged in a direction perpendicular to winding axis O1 of secondary coil 22. It is to be noted that the shape of shield 25 is not limited to such a shape and various types of shapes can be employed such as a polygonal shape, a circular shape, and an oval shape.

The bottom end portion of circumferential wall portion 25b forms an opening, which is closed by cover portion 26.

Power reception unit 20 includes: a ferrite core 21 formed to have a plate-like shape; a fixation member 27 that sandwiches ferrite core 21 from the upper and lower sides; a secondary coil 22 wound around fixation member 27; and a capacitor 23 connected to secondary coil 22.

Ferrite core 21 includes a protrusion portion 29a and a protrusion portion 29b, each of which protrudes from the inside of secondary coil 22 in the direction in which winding axis O1 extends. Protrusion portion 29a protrudes from one end side of secondary coil 22, whereas protrusion portion 29b protrudes from the other end side of secondary coil 22. Thus, ferrite core 21 is formed to be longer than the length of secondary coil 22 in the direction in which winding axis O1 extends.

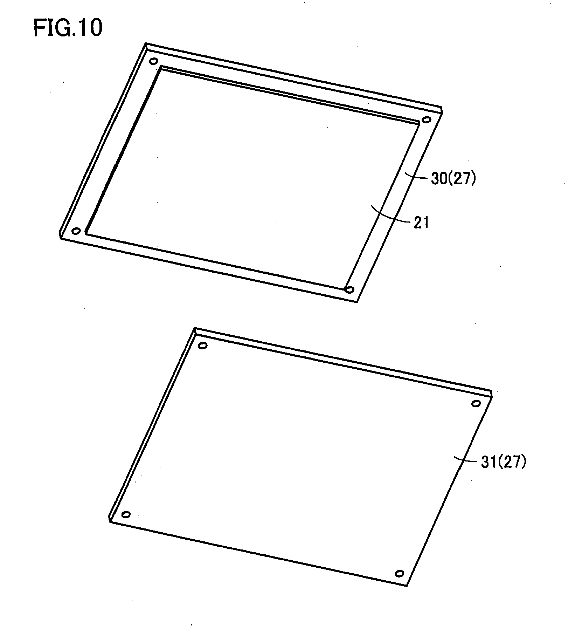

Fig. 10 is an exploded perspective view showing fixation member 27 and ferrite core 21. As shown in Fig. 10, fixation member 27 includes: an insulation piece 30 disposed at the upper surface side of ferrite core 21; and an insulation piece 31 disposed at the lower surface side of ferrite core 21.

Insulation piece 30 and insulation piece 31 are fixed to each other through a bolt 28 shown in Fig. 9 or the like, and ferrite core 21 is sandwiched between insulation piece 30 and insulation piece 31. Because ferrite core 21 is sandwiched between insulation piece 30 and insulation piece 31, ferrite core 21 is protected.

Power reception device 11 thus formed is provided at the bottom surface 76 side of electrically powered vehicle 10 as shown in Fig. 7. Various types of methods can be employed to fix power reception device 11. For example, electrically powered vehicle 10 may include: side members 47 arranged in the width direction of the vehicle; and a plurality of cross members provided to connect side members 47 to each other, power reception device 11 being suspended from side members 47 and the cross members.

Regarding the expression "power reception device 11 is disposed at the bottom surface 76 side", power reception device 11 does not need to be necessarily provided at a position that can be visually seen when electrically powered vehicle 10 is viewed from below electrically powered vehicle 10. Hence, for example, power reception device 11 is disposed at the lower side relative to floor panel 49.

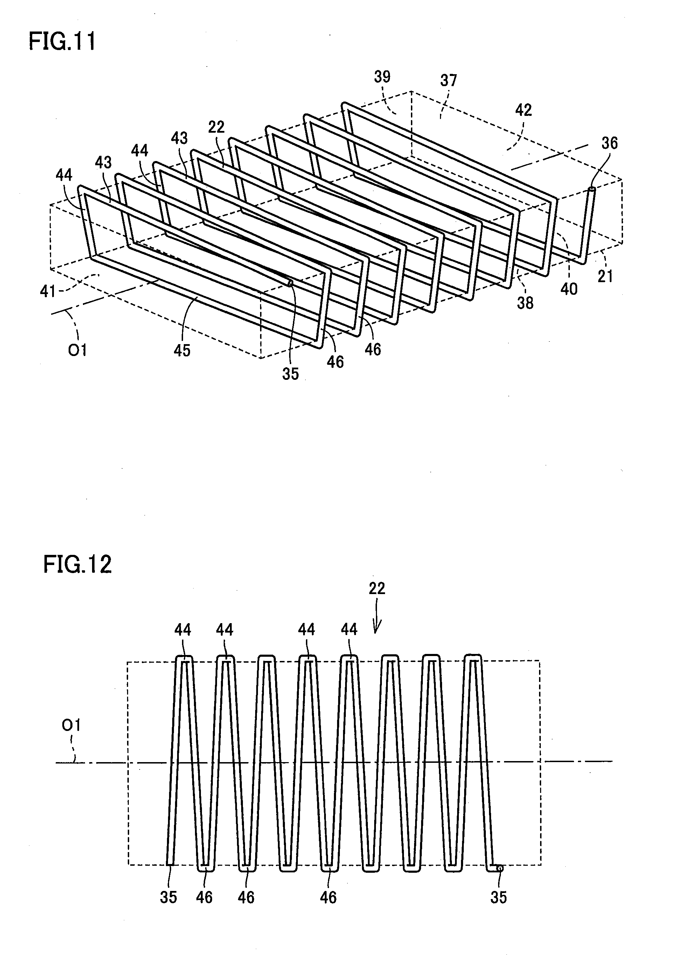

Fig. 11 is a perspective view showing secondary coil 22. As shown in Fig. 11, secondary coil 22 includes a first end portion 35 and a second end portion 36. As secondary coil 22 extends from first end portion 35 to second end portion 36, secondary coil 22 is formed to surround winding axis O1 and be displaced in the direction in which winding axis O1 extends. Secondary coil 22 is formed by winding a coil wire for a plurality of times. It is to be noted that first end portion 35 and second end portion 36 are disposed at the both ends of secondary coil 22 in the direction in which winding axis O1 extends.

In the example shown in Fig. 11, ferrite core 21 is formed to have a substantially rectangular solid shape, and ferrite core 21 includes: an upper surface 37; a bottom surface 38 opposite to upper surface 37 in the thickness direction; side surfaces 39 and 40 arranged in the short direction; and end surfaces 41 and 42 arranged in the longitudinal direction. It is to be noted that ferrite core 21 may be constructed of a plurality of divided ferrite pieces.

Secondary coil 22 includes: long side portions 43 disposed on upper surface 37; short side portions 44 extending downwardly from the end portions of long side portions 43 and disposed on side surface 39; long side portions 45 connected to short side portions 44 and disposed on bottom surface 38; and short side portions 46 connected to the end portions of long side portions 45 and disposed on side surface 40.

One turn of the coil wire around the circumferential surfaces of ferrite core 21 is provided by one long side portion 43, one short side portion 44, one long side portion 45, and one short side portion 46.

Secondary coil 22, which is wound for a plurality of times, includes the plurality of long side portions 43, the plurality of short side portions 44, the plurality of long side portions 45, and the plurality of short side portions 46.

Fig. 12 is a plan view of secondary coil 22 when viewed in plan. As shown in Fig. 12, the plurality of short side portions 46 are arranged in the direction in which winding axis O1 extends, and the plurality of short side portions 44 are arranged in a similar manner in the direction in which winding axis O1 extends.

Short side portions 44 and short side portions 46 are disposed on the same imaginary plane, face each other with winding axis O1 being interposed therebetween, and are arranged in the horizontal direction.

In the present embodiment, secondary coil 22 is formed to have a quadrangular shape when viewed from the front surface, but various types of shapes can be employed for the shape of the coil, such as an elliptical shape, an oval shape, and a polygon shape.

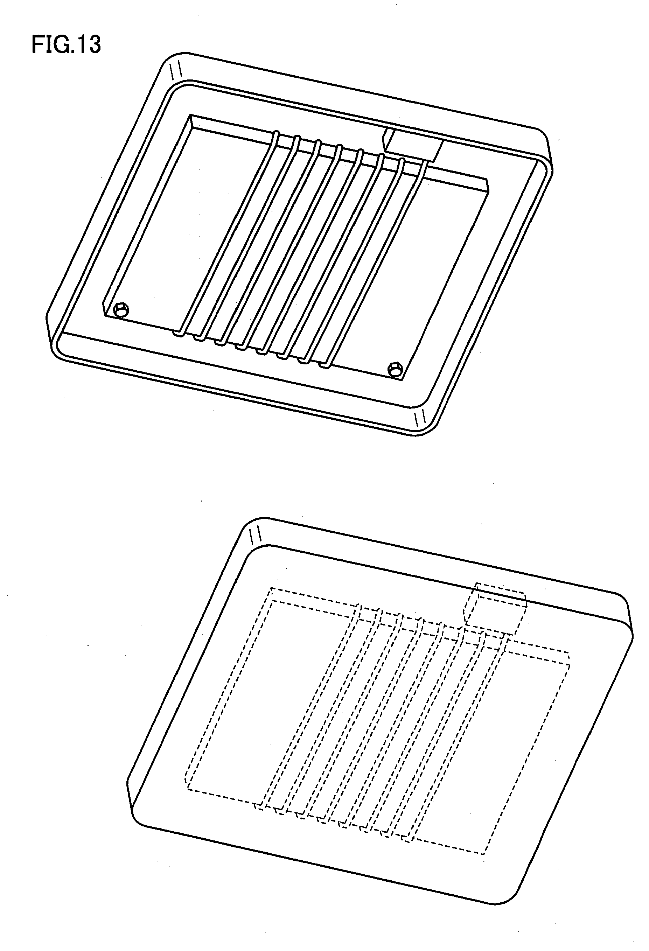

Fig. 13 is a perspective view showing a state in which power reception unit 20 and power transmission unit 56 are disposed to face each other. It is to be noted that in Fig. 13, cover portion 26 provided in power reception device 11 is not shown in the figure.

As shown in Fig. 13, during transfer of electric power, power reception unit 20 and power transmission unit 56 are disposed to face each other with an air gap therebetween.

Power transmission unit 56 includes: a case 60 having primary coil 58 and the like contained therein; a fixation member 61 contained in case 60; ferrite core 57 contained in fixation member 61; primary coil 58 attached onto the outer circumferential surface of fixation member 61; and capacitor 59 contained in case 60.

Case 60 includes: a shield 62 made of a metal material such as copper; and a cover member 63 made of a resin and provided on shield 62.

Shield 62 includes a bottom surface portion, and a circumferential wall portion formed to have an annular shape rising upwardly from the outer circumferential edge of the bottom surface portion, and the circumferential wall portion has an upper end portion extending in an annular manner to provide an opening that opens upwardly. Cover member 63 is formed to close the opening formed by the upper end portion of the circumferential wall portion of shield 62.

Ferrite core 57 includes an protrusion portion 64a and an protrusion portion 64b, each of which protrudes in the direction in which the winding axis of primary coil 58 extends. Protrusion portion 64a is formed to protrude from one end side of primary coil 58, whereas protrusion portion 64b protrudes from the other end side of primary coil 58.

Fixation member 61 includes: an insulation piece disposed at the upper surface side of ferrite core 57; and an insulation piece disposed at the lower surface side of ferrite core 57. Ferrite core 57 is sandwiched between these two insulation pieces. The two insulation pieces are fixed to each other by a fastening member such as a bolt and a nut, thereby sandwiching ferrite core 57 between the two insulation pieces. Primary coil 58 is wound around the outer circumferential surface of fixation member 61.

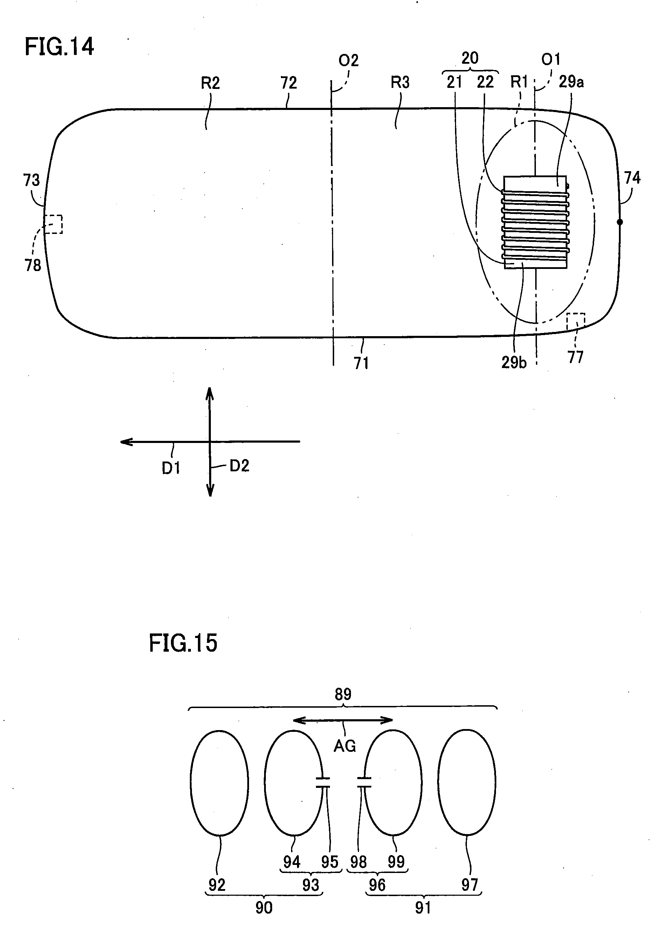

Fig. 14 is a plan view schematically showing a layout of power reception unit 20 (secondary coil 22), refueling portion 77, and charging portion 78 when electrically powered vehicle 10 is viewed from above in the direction vertical to electrically powered vehicle 10.

As shown in Fig. 14, electrically powered vehicle 10 includes left side surface 71, right side surface 72, front surface 73, and rear surface 74.

In the example shown in Fig. 14, central line 02 represents the center of electrically powered vehicle 10 in the front-rear direction. Central line 02 extends in width direction D2 of electrically powered vehicle 10 and passes through the center in the front-rear direction. A front region R2 represents a region located at the front side of electrically powered vehicle 10 relative to central line 02. A rear region R3 represents a region located at the rear side of electrically powered vehicle 10 relative to central line 02.

Power reception unit 20 is provided at a position displaced to rear region R3 relative to central line 02. It is to be noted that in the example shown in Fig. 14, power reception unit 20 is disposed with a space from central line 02, but may overlap with central line 02. In this case, the volume of power reception unit 20 (secondary coil 22) in rear region R3 is larger than the volume of power reception unit 20 (secondary coil 22) in front region R2. Of the circumferential surfaces of electrically powered vehicle 10, power reception unit 20 is disposed closest to rear surface 74.

Secondary coil 22 is disposed such that winding axis O1 is directed in the horizontal direction, and winding axis O1 extends to pass through right side surface 72 and left side surface 71. The expression "winding axis O1 is directed in the horizontal direction" includes both a case where winding axis O1 extends completely in the horizontal direction and a case where winding axis O1 is directed substantially in the horizontal direction. The expression "winding axis O1 is directed substantially in the horizontal direction" is intended to mean that a crossing angle between the imaginary horizontal plane and winding axis O1 is 10° or less, for example. In the first embodiment, secondary coil 22 is disposed such that winding axis O1 passes through right side surface 72 and left side surface 71.

Charging portion 78 is provided in front region R2 and is provided in front surface 73. Refueling portion 77 is provided in rear region R3 and is provided in left side surface 71.

In Fig. 1, in the power transfer system according to the present embodiment, a difference between the natural frequency of power transmission unit 56 and the natural frequency of power reception unit 20 is 10% or less of the natural frequency of power reception unit 20 or power transmission unit 56. By setting the natural frequency of each of power transmission unit 56 and power reception unit 20 to fall within such a range, power transfer efficiency can be improved. Meanwhile, if the difference in natural frequency becomes larger than 10% of the natural frequency of powder reception unit 20 or power transmission unit 56, the power transfer efficiency becomes less than 10%, which results in problems such as a long charging time for battery 15.

Here, when no capacitor 59 is provided, the expression "natural frequency of power transmission unit 56" is intended to mean an oscillation frequency at which the electric circuit formed by the inductance of primary coil 58 and the capacitance of primary coil 58 freely oscillates. When capacitor 59 is provided, the expression "natural frequency of power transmission unit 56" is intended to mean an oscillation frequency at which the electric circuit formed by the capacitances of primary coil 58 and capacitor 59 and the inductance of primary coil 58 freely oscillates. In the above-described electric circuit, the natural frequency when the damping force and the electric resistance are set at zero or substantially zero is also called "resonance frequency of power transmission unit 56".

Likewise, when no capacitor 23 is provided, the expression "natural frequency of power reception unit 20" is intended to mean an oscillation frequency at which the electric circuit formed by the inductance of secondary coil 22 and the capacitance of secondary coil 22 freely oscillates. When capacitor 23 is provided, the expression "natural frequency of power reception unit 20" is intended to mean an oscillation frequency at which the electric circuit formed by the capacitances of secondary coil 22 and capacitor 23 and the inductance of secondary coil 22 freely oscillates. In the above-described electric circuit, the natural frequency when the damping force and the electric resistance are set at zero or substantially zero is also called "resonance frequency of power reception unit 20".

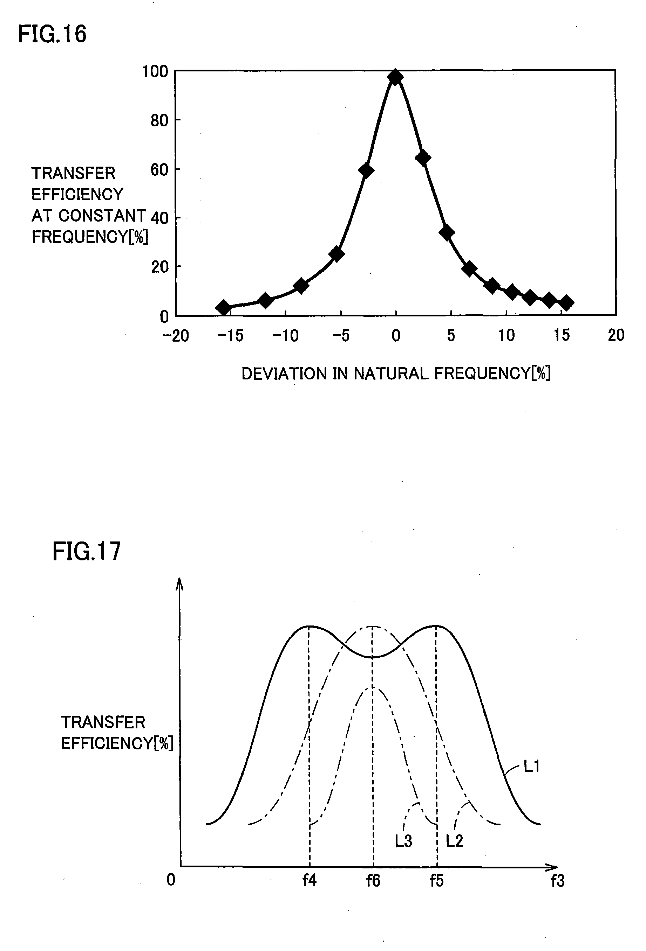

With reference to Fig. 15 and Fig. 16, the following describes a result of simulation in which a relation is analyzed between the difference in natural frequency and the power transfer efficiency. Fig. 15 shows a simulation model of the power transfer system. The power transfer system includes a power transmission device 90 and a power reception device 91. Power transmission device 90 includes a coil 92 (electromagnetic induction coil) and a power transmission unit 93. Power transmission unit 93 includes a coil 94 (resonance coil) and a capacitor 95 provided in coil 94.

Power reception device 91 includes a power reception unit 96 and a coil 97 (electromagnetic induction coil). Power reception unit 96 includes a coil 99 and a capacitor 98 connected to coil 99 (resonance coil).

Assume that the inductance of coil 94 is inductance Lt and the capacitance of capacitor 95 is capacitance C1. Assume that the inductance of coil 99 is inductance Lr and the capacitance of capacitor 98 is capacitance C2. By setting each of the parameters in this way, natural frequency f1 of power transmission unit 93 is indicated by the following formula (1) and natural frequency f2 of power reception unit 96 is indicated by the following formula (2):

$$f1 = 1/\{2\pi \, (Lt \times C1)^{1/2}\} \ ... \ (1)$$

$$f2 = 1/\{2\pi \, (Lr \times C2)^{1/2}\} \ ... \ (2)$$

Here, Fig. 16 shows a relation between the power transfer efficiency and the deviation in natural frequency between power transmission unit 93 and power reception unit 96 when only inductance Lt is changed with inductance Lr and capacitances C1, C2 being fixed. In this simulation, a relative positional relation between coil 94 and coil 99 is fixed, and the frequency of current supplied to power transmission unit 93 is constant.

In the graph shown in Fig. 16, the horizontal axis represents the deviation (%) in natural frequency whereas the vertical axis represents the transfer efficiency (%) at the constant frequency. The deviation (%) in natural frequency is indicated by the following formula (3):

$$(\text{Deviation in natural frequency}) = \{(f1 - f2)/f2\} \times 100 \ (\%) \ ... \ (3)$$

As apparent from Fig. 16, when the deviation (%) in natural frequency is $\pm 0\%$, the power transfer efficiency is close to 100%. When the deviation (%) in natural frequency is $\pm 5\%$, the power transfer efficiency is 40%. When the deviation (%) in natural frequency is $\pm 10\%$, the power transfer efficiency is 10%. When the deviation (%) in natural frequency is $\pm 15\%$, the power transfer efficiency is 5%. Thus, it is understood that the power transfer efficiency can be improved by setting the natural frequency of each of the power transmission unit and the power reception unit such that the absolute value (difference in natural frequency) of the deviation (%) in natural frequency falls within a range of 10% or less of the natural frequency of power reception unit 96. Further, it is understood that the power transfer efficiency can be more improved by setting the natural frequency of each of the power transmission unit and the power reception unit such that the absolute value of the deviation (%) in natural frequency falls within a range of 5% or less of the natural frequency of power reception unit 96. It is to be noted that electromagnetic field analysis software (JMAG® provided by JSOL Corporation) is employed as simulation software.

The following describes an operation of the power transfer system according to the present embodiment.

In Fig. 1, primary coil 58 is supplied with AC power from high-frequency power driver 54. On this occasion, the electric power is supplied such that the alternating current flowing in primary coil 58 has a specific frequency.

When the current having the specific frequency flows in primary coil 58, an electromagnetic field, which oscillates at the specific frequency, is formed around primary coil 58.

Secondary coil 22 is disposed in a predetermined range from primary coil 58 and receives electric power from the electromagnetic field formed around primary coil 58.

In the present embodiment, helical coils are employed for secondary coil 22 and primary coil 58. Accordingly, magnetic field and electric field, which oscillate at the specific frequency, are formed around primary coil 58 and secondary coil 22 receives electric power mainly from the magnetic field.

Here, the following describes the magnetic field formed around primary coil 58 and having the specific frequency. The "magnetic field having the specific frequency" is typically relevant to the power transfer efficiency and the frequency of current supplied to primary coil 58. First described is a relation between the power transfer efficiency and the frequency of current supplied to primary coil 58. The power transfer efficiency when transferring electric power from primary coil 58 to secondary coil 22 is changed depending on various factors such as a distance between primary coil 58 and secondary coil 22. For example, the natural frequencies (resonance frequencies) of power transmission unit 56 and power reception unit 20 are assumed as natural frequency f0, the frequency of current supplied to primary coil 58 is assumed as frequency f3, and the air gap between secondary coil 22 and primary coil 58 is assumed as air gap AG.

Fig. 17 is a graph indicating a relation between the power transfer efficiency and frequency f3 of current supplied to primary coil 58 when air gap AG is changed with natural frequency f0 being fixed.

In the graph shown in Fig. 17, the horizontal axis represents frequency f3 of the current supplied to primary coil 58 whereas the vertical axis represents the power transfer efficiency (%). An efficiency curve L1 schematically represents a relation between the power transfer efficiency when air gap AG is small and frequency f3 of the current supplied to primary coil 58. As indicated by efficiency curve L1, when air gap AG is small, peaks of the power transfer efficiency appear at frequencies f4, f5 (f4 < f5). When air gap AG is made larger, the two peaks at which the power transfer efficiency becomes high are changed to come closer to each other. Then, as indicated by an efficiency curve L2, when air gap AG is made larger than a predetermined distance, one peak of the power transfer efficiency appears. The peak of the power transfer efficiency appears when the current supplied to primary coil 58 has a frequency f6. When air gap AG is made further larger from the state of efficiency curve L2, the peak of the power transfer efficiency becomes smaller as indicated by an efficiency curve L3.

For example, as a technique of improving the power transfer efficiency, the following first technique can be considered. The first technique is to change a characteristic of the power transfer efficiency between power transmission unit 56 and power reception unit 20 by changing the capacitances of capacitor 59 and capacitor 23 in accordance with air gap AG with the frequency of the current supplied to primary coil 58 shown in Fig. 1 being constant. Specifically, with the frequency of the current supplied to primary coil 58 being constant, the capacitances of capacitor 59 and capacitor 23 are adjusted to attain a peak of the power transfer efficiency. In this technique, irrespective of the size of air gap AG, the frequency of the current flowing in primary coil 58 and secondary coil 22 is constant. It is to be noted that as the technique of changing the characteristic of the power transfer efficiency, the following techniques can be also employed: a technique of using a matching device provided between power transmission device 50 and high-frequency power driver 54; and a technique of using converter 14.

Meanwhile, a second technique is a technique of adjusting, based on the size of air gap AG, the frequency of the current supplied to primary coil 58. For example, in Fig. 17, when the power transfer characteristic corresponds to efficiency curve L1, primary coil 58 is supplied with current having frequency f4 or frequency f5. On the other hand, when the frequency characteristic corresponds to efficiency curve L2 or L3, primary coil 58 is supplied with current having frequency f6. In this case, the frequency of the current flowing in each of primary coil 58 and secondary coil 22 is changed in accordance with the size of air gap AG.

In the first technique, the frequency of the current flowing in primary coil 58 becomes a fixed, constant frequency. In the second technique, the frequency thereof flowing in primary coil 58 becomes a frequency appropriately changed according to air gap AG. With the first technique, the second technique, or the like, primary coil 58 is supplied with current having a specific frequency set to attain high power transfer efficiency. Because the current having the specific frequency flows in primary coil 58, a magnetic field (electromagnetic field), which oscillates at the specific frequency, is formed around primary coil 58. Power reception unit 20 receives electric power from power transmission unit 56 via the magnetic field formed between power reception unit 20 and power transmission unit 56 and oscillating at the specific frequency. Therefore, "the magnetic field oscillating at the specific frequency" is not necessarily a magnetic field having a fixed frequency. It is to be noted that in the above-described example, the frequency of the current supplied to primary coil 58 is set based on air gap AG, but the power transfer efficiency is also changed according to other factors such as a deviation in the horizontal direction between primary coil 58 and secondary coil 22, so that the frequency of the current supplied to primary coil 58 may be adjusted based on the other factors.

It is to be also noted that the example employing the helical coil as the resonance coil has been illustrated, but when an antenna such as a meander line antenna is employed as the resonance coil, an electric field having the specific frequency is formed around primary coil 58 as a result of flow of the current having the specific frequency in primary coil 58. Through this electric field, electric power is transferred between power transmission unit 56 and power reception unit 20.

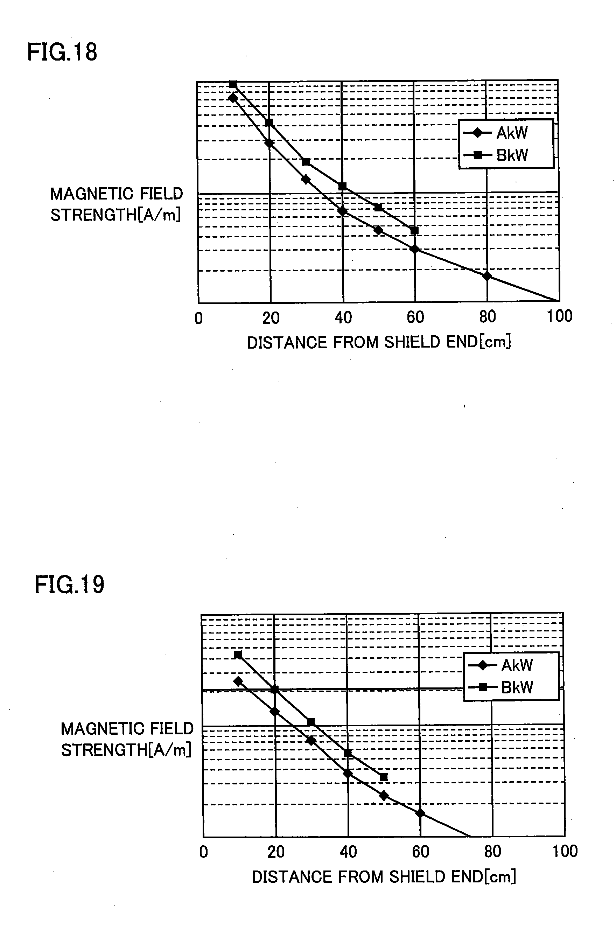

In the power transfer system according to the present embodiment, efficiency in power transmission and power reception is improved by employing a near field (evanescent field) in which an "electrostatic magnetic field" of the electromagnetic field is dominant. Fig. 18 shows a relation between a distance from the electric current source or magnetic current source and the strength of the electromagnetic field. Referring to Fig. 18, the electromagnetic field is constituted of three components. A curve k1 represents a component in inverse proportion to the distance from the wave source, and is referred to as "radiation electromagnetic field". A curve k2 represents a component in inverse proportion to the square of the distance from the wave source, and is referred to as "induction electromagnetic field". A curve k3 represents a component in inverse proportion to the cube of the distance from the wave source, and is referred to as "electrostatic magnetic field". Assuming that the wavelength of the electromagnetic field is represented by "$\lambda$", $\lambda/2\pi$ represents a distance in which the strengths of the "radiation electromagnetic field", the "induction electromagnetic field", and the "electrostatic magnetic field" are substantially the same.

The "electrostatic magnetic field" is a region in which the strength of the electromagnetic wave is abruptly decreased as the distance is farther away from the wave source. In the power transfer system according to the present embodiment, the near field (evanescent field), in which this "electrostatic magnetic field" is dominant, is utilized for transfer of energy (electric power). In other words, by resonating power transmission unit 56 and power reception unit 20 (for example, a pair of LC resonant coils) having close natural frequencies in the near field in which the "electrostatic magnetic field" is dominant, the energy (electric power) is transferred from power transmission unit 56 to the other side, i.e., power reception unit 20. This "electrostatic magnetic field" does not propagate energy to a distant place. Hence, the resonance method allows for electric power transmission with less energy loss as compared with the electromagnetic wave in which the "radiation electromagnetic field" propagating energy to a distance place is utilized to transfer energy (electric power).

Thus, in this power transfer system, by resonating the power transmission unit and the power reception unit with each other through the electromagnetic field, electric power can be transmitted contactlessly between the power transmission unit and the power reception unit. The electromagnetic field thus formed between the power reception unit and the power transmission unit may be called, for example, "near field resonance coupling field". Further, a coupling coefficient $\kappa$ between the power transmission unit and the power reception unit is about 0.3 or less, preferably, 0.1 or less, for example. Coupling coefficient $\kappa$ may also fall within a range of about 0.1 to about 0.3. Coupling coefficient $\kappa$ is not limited to such a value, and various values to attain excellent electric power transfer can be employed.

The coupling between power transmission unit 56 and power reception unit 20 during electric power transfer in the present embodiment is called, for example, "magnetic resonance coupling", "magnetic field resonance coupling", "magnetic field resonance coupling", "near field resonance coupling", "electromagnetic field resonance coupling", or "electric field resonance coupling".

The term "electromagnetic field resonance coupling" is intended to indicate coupling including any of the "magnetic resonance coupling", the "magnetic field resonance coupling", and the "electric field resonance coupling".

Each of primary coil 58 of power transmission unit 56 and secondary coil 22 of power reception unit 20 as described in the present specification employs an antenna having a coil shape, so that power transmission unit 56 and power reception unit 20 are coupled to each other mainly by a magnetic field. Thus, power transmission unit 56 and power reception unit 20 are coupled to each other by means of the "magnetic resonance coupling" or the "magnetic field resonance coupling".

It is to be noted that an antenna such as a meander line antenna can be employed as primary coil 58, 22, for example. In this case, power transmission unit 56 and power reception unit 20 are coupled to each other mainly through electric field. On this occasion, power transmission unit 56 and power reception unit 20 are coupled to each other by means of the "electric field resonance coupling".

In Fig. 13, when transferring electric power between power reception unit 20 and power transmission unit 56, primary coil 58 is supplied with alternating current having a predetermined frequency.

By supplying the predetermined alternating current to primary coil 58, an electromagnetic field oscillating at a predetermined frequency is formed around primary coil 58. Then, secondary coil 22 receives electric power from the electromagnetic field. Moreover, a magnetic path 65 is formed between power reception unit 20 and power transmission unit 56.

Magnetic path 65 is formed to pass through protrusion portion 29a, the inside of secondary coil 22, protrusion portion 29b, the air gap, protrusion portion 64b, the inside of primary coil 58, protrusion portion 64a, the air gap, and protrusion portion 29a.

Each of Fig. 18 and Fig. 19 is a graph showing distribution of strength of the magnetic field formed around secondary coil 22. Fig. 18 is a graph showing distribution of the magnetic field in the direction in which winding axis O1 extends. The horizontal axis of the graph shown in Fig. 18 represents a distance (cm) from wall portion 25c or wall portion 25e shown in Fig. 9 in the direction in which winding axis O1 extends. The vertical axis of the graph represents the magnetic field strength.

Fig. 19 is a graph showing distribution of the magnetic field in the direction perpendicular to winding axis O1. As shown in Fig. 18, the horizontal axis of the graph represents a distance (cm) from wall portion 25d or wall portion 25f shown in Fig. 13 in the direction perpendicular to winding axis O1. The vertical axis of the graph represents the strength of the magnetic field.

As shown in Fig. 18 and Fig. 19, it is understood that a magnetic field having high strength is distributed to be long in the direction in which winding axis O1 extends.

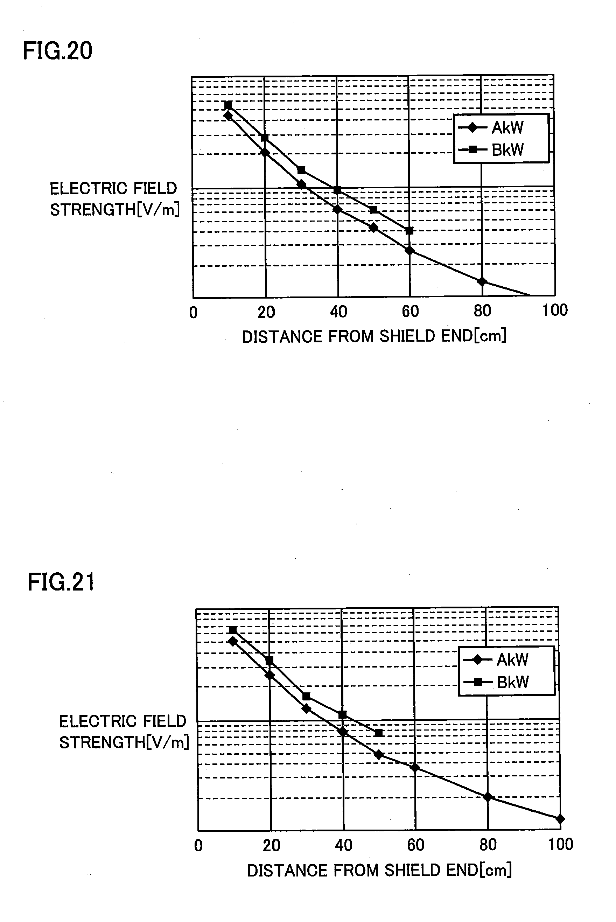

Each of Fig. 20 and Fig. 21 is a graph showing distribution of the electric field formed around secondary coil 22. Fig. 20 is a graph showing distribution of the electric field in the direction in which winding axis O1 extends. The horizontal axis of the graph represents a distance (cm) from wall portion 25c or wall portion 25e shown in Fig. 13 in the direction in which winding axis O1 extends. The vertical axis represents the strength of the electric field.

Fig. 21 is a graph showing distribution of the electric field in the direction perpendicular to winding axis O1. The horizontal axis represents a distance (cm) from wall portion 25d or wall portion 25f shown in Fig. 13 in the direction perpendicular to winding axis O1.

As shown in Fig. 20 and Fig. 21, it is understood that the electric field is distributed to be long in the direction perpendicular to winding axis O1. On the other hand, as apparent from Fig. 20 and Fig. 21, it is understood that the strength of the electric field itself is weak.

Here, in Fig. 14, secondary coil 22 is disposed such that winding axis O1 extends in width direction D2. Accordingly, protrusion portion 29a and protrusion portion 29b sandwich secondary coil 22 therebetween, and are arranged in width direction D2.

In Fig. 14, region R1 surrounded by a double dashed line represents a region having high strength in the electromagnetic field formed around secondary coil 22 during transfer of electric power.

A magnetic path is formed to pass through protrusion portion 29a and protrusion portion 29b arranged in the direction in which winding axis O1 extends. As shown in Fig. 14, the electromagnetic field having high strength is distributed to be long in the direction in which winding axis O1 extends and to be short in the direction perpendicular to the direction in which winding axis O1 extends.

In particular, winding axis O1 passes through left side surface 71 and right side surface 72, so that region R1 is distributed to be wider in width direction D2 than in traveling direction D 1.

Here, power reception unit 20 is provided in rear region R3 whereas charging portion 78 is provided in front region R2. Hence, when receiving electric power using power reception unit 20, the electromagnetic field having high strength and formed around power reception unit 20 can be suppressed from reaching charging portion 78.

In particular, because charging portion 78 is provided in front surface 73 farthest away from power reception unit 20 among the circumferential surfaces of electrically powered vehicle 10, an electromagnetic field having high strength can be suppressed from reaching charging portion 78.

Accordingly, in the case where charging is performed using charging portion 78 when receiving electric power at power reception unit 20, an electronic device possessed by the operator can be less affected by the electromagnetic field formed around power reception unit 20.

Further, charging portion 78 is provided with a sensor or the like that senses whether or not a charging connector is connected thereto, and this sensor can be suppressed from being affected by the electromagnetic field.

It is to be noted that in the example shown in Fig. 14, refueling portion 77 is provided in rear region R3 at left side surface 71, but may be provided at front region R2.

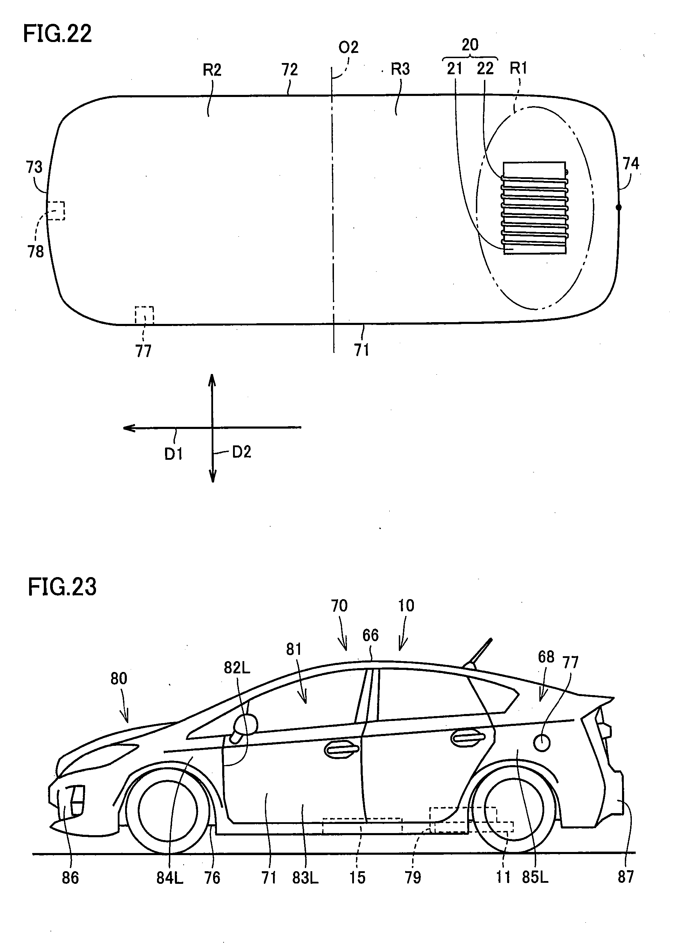

Fig. 22 is a plan view schematically showing a modification of electrically powered vehicle 10 according to the first embodiment. In the example shown in Fig. 22, refueling portion 77 is provided in left side surface 71 at a portion disposed in front region R2.

Thus, by providing refueling portion 77 in front region R2, even in the case where the operator performs a refueling operation using refueling portion 77 when receiving electric power at power reception unit 20, the electronic device carried by the operator can be less affected by the electromagnetic field.

It is to be noted that refueling portion 77 is not limited to be disposed in left side surface 71, and may be provided in any of right side surface 72, front surface 73, and upper surface 75 disposed in front region R2.

Thus, in electrically powered vehicle 10 according to the first embodiment, power reception unit 20 is provided in rear region R3 and at least one of refueling portion 77 and charging portion 78 is provided in front region R2. It is to be noted that the electric power received by secondary coil 22 of power reception unit 20 may be extracted by an electromagnetic induction coil and the capacitor and the rectifier may be connected to each other as in the present embodiment. It is to be noted that also in power transmission unit 56, the electric power from power supply 53 may be supplied to primary coil 58 using an electromagnetic induction coil, and high-frequency power driver 54 and primary coil 58 may be connected to each other via an interconnection.

(Second Embodiment)

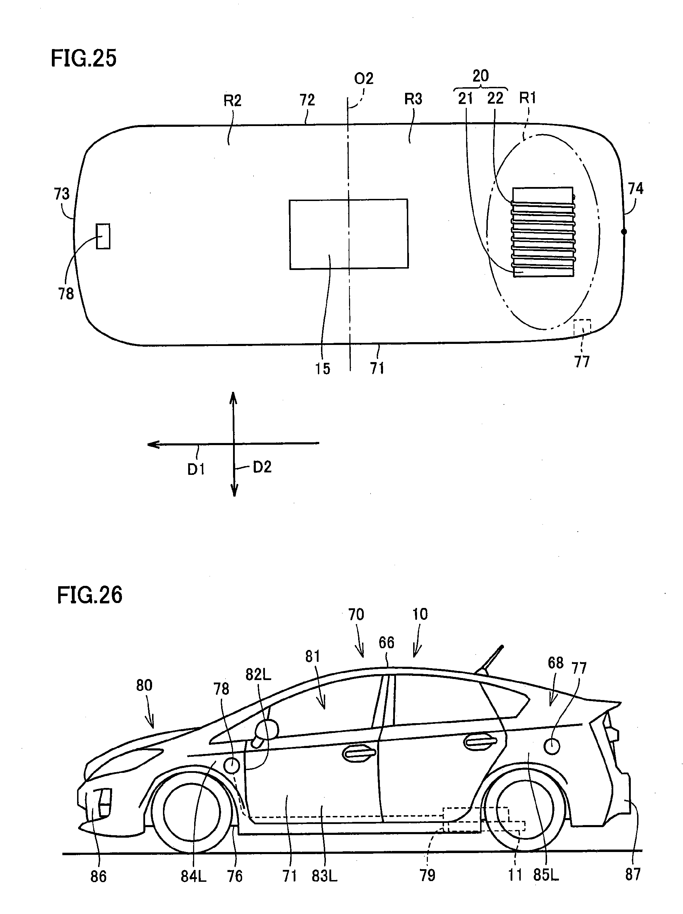

With reference to Fig. 23 and Fig. 25, the following describes an electrically powered vehicle 10 according to the present embodiment. It is to be noted that in the configurations shown in Fig. 23 to Fig. 25, configurations the same as or corresponding to the configurations shown in Fig. 1 to Fig. 24 are given the same reference characters and may not be described repeatedly.

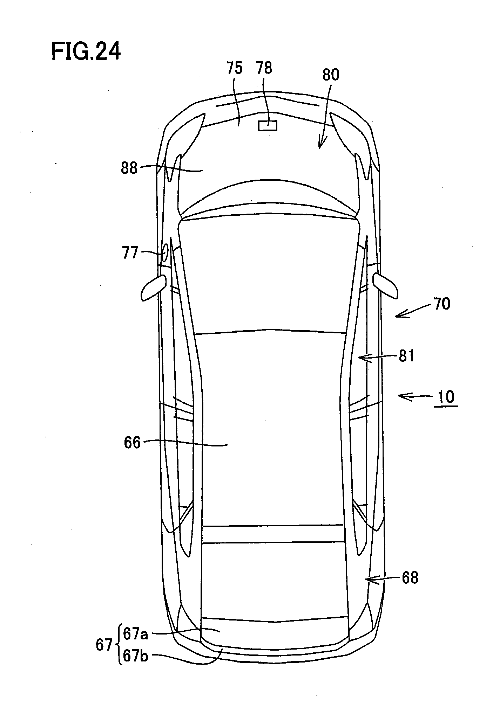

Fig. 23 is a left side view of electrically powered vehicle 10 according to the second embodiment. Fig. 24 is a plan view showing upper surface 75 of electrically powered vehicle 10. Fig. 25 is a plan view schematically showing power reception unit 20, refueling portion 77, and charging portion 78.

Power reception unit 20 is provided at the bottom surface 76 side of electrically powered vehicle 10. Secondary coil 22 is disposed such that winding axis O1 passes through left side surface 71 and right side surface 72.

As shown in Fig. 23, refueling portion 77 is provided in rear fender 85L of left side surface 71. As shown in Fig. 24, charging portion 78 is provided at engine roof 88 in upper surface 75. Because power reception unit 20 is provided at the bottom surface 76 side, the electromagnetic field formed around power reception unit 20 is suppressed from reaching upper surface 75 of electrically powered vehicle 10. Accordingly, an electromagnetic field having high strength is suppressed from reaching charging portion 78.

As shown in Fig. 24 and Fig. 25, front surface 73 is farthest away from power reception unit 20 among the circumferential surfaces of electrically powered vehicle 10. Charging portion 78 is provided in the vicinity of front surface 73 in upper surface 75. Specifically, charging portion 78 is provided at a position closest to front surface 73 among the circumferential surfaces of electrically powered vehicle 10. Accordingly, an electromagnetic field having high strength can be suppressed from reaching charging portion 78.

As shown in Fig. 25, in electrically powered vehicle 10 according to the second embodiment, battery 15 is disposed at the bottom surface 76 side. Battery 15 is disposed to extend over front region R2 and rear region R3. When viewing battery 15, charging portion 78, and power reception unit 20 from above electrically powered vehicle 10, battery 15 is disposed between charging portion 78 and power reception unit 20. Accordingly, the electromagnetic field formed around power reception unit 20 is suppressed from reaching charging portion 78. Further, by disposing battery 15 between charging portion 78 and power reception unit 20, a distance between charging portion 78 and battery 15 can be made short, thereby providing a short length of the interconnection that connects charging portion 78 and battery 15 to each other.

(Third Embodiment)

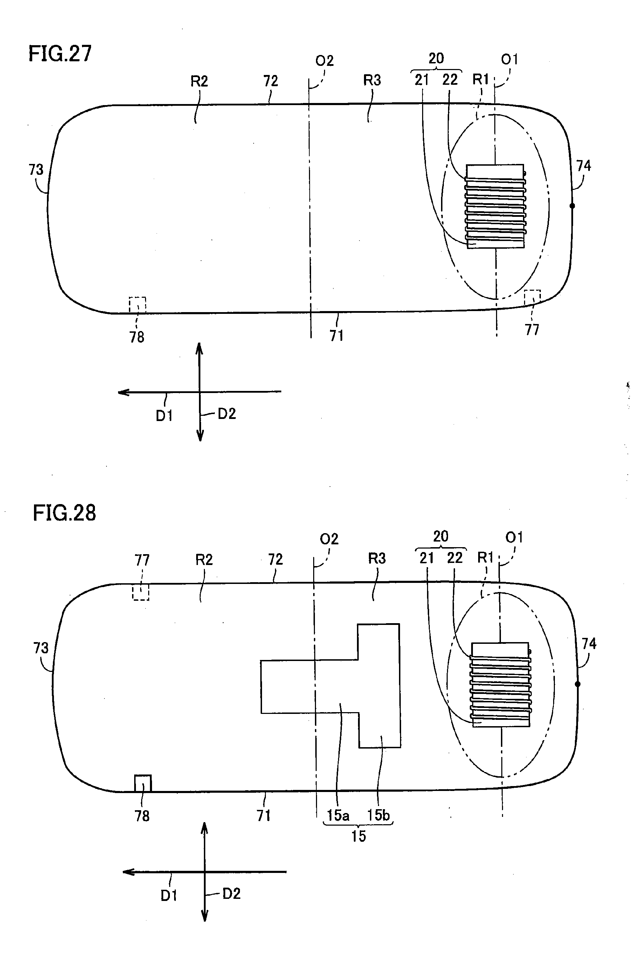

With reference to Fig. 26 and Fig. 27, the following describes an electrically powered vehicle 10 according to a third embodiment. It is to be noted that in the configurations shown in Fig. 26 and Fig. 27, configurations the same as or corresponding to the configurations shown in Fig. 1 to Fig. 25 are given the same reference characters and may not be described repeatedly.

Fig. 26 is a left side view of an electrically powered vehicle 10 according to the third embodiment. Fig. 27 is a plan view schematically showing layout positions of power reception unit 20, refueling portion 77, and charging portion 78.

As shown in Fig. 26, charging portion 78 is provided at front fender 84L and refueling portion 77 is provided at rear fender 85L.

As shown in Fig. 27, power reception unit 20 is provided in rear region R3. Secondary coil 22 is disposed such that winding axis O1 passes through left side surface 71 and right side surface 72.

Here, power reception unit 20 is provided in rear region R3 whereas charging portion 78 is provided in front region R2. Accordingly, an electromagnetic field having high strength can be suppressed from reaching charging portion 78. Further, because secondary coil 22 is disposed such that winding axis O1 passes through left side surface 71 and right side surface 72, the electromagnetic field having high strength can be suppressed from reaching charging portion 78.

Front surface 73 is farthest from power reception unit 20 among the circumferential surfaces of electrically powered vehicle 10, and charging portion 78 is provided at a position close to front surface 73 relative to central line 02. Accordingly, the electromagnetic field having high strength can be suppressed from reaching charging portion 78.

Fig. 28 is a plan view schematically showing a first modification of electrically powered vehicle 10 according to the third embodiment. In the example shown in Fig. 28, both refueling portion 77 and charging portion 78 are provided in front region R2 and power reception unit 20 is provided in rear region R3.

Specifically, refueling portion 77 is provided at front fender 84R. By thus providing refueling portion 77 also in front region R2, an electromagnetic field having high strength can be suppressed from reaching an electronic device possessed by a refueling operator.

In particular, charging portion 78 and refueling portion 77 are provided at positions close to front surface 73 relative to central line 02, so that the electromagnetic field having high strength can be suppressed from reaching refueling portion 77 and charging portion 78. Accordingly, the electromagnetic field having high strength can be suppressed from reaching electronic devices possessed by a charging operator and a refueling operator.

As shown in Fig. 28, in electrically powered vehicle 10 according to the third embodiment, battery 15 is provided in bottom surface 76 of electrically powered vehicle 10. Battery 15 includes: a main body portion 15a extending in travelling direction D1; and a projection portion 15b provided at the rear end portion of main body portion 15a and projecting in width direction D2.

Moreover, battery 15 is disposed between power reception unit 20 and refueling portion 77, and the electromagnetic field having high strength is suppressed from reaching refueling portion 77.

Moreover, battery 15 is disposed between power reception unit 20 and charging portion 78, and the electromagnetic field having high strength is suppressed from reaching charging portion 78.

In particular, battery 15 includes projection portion 15b and the electromagnetic field formed around power reception unit 20 is suppressed from reaching refueling portion 77 and charging portion 78.

(Fourth Embodiment)

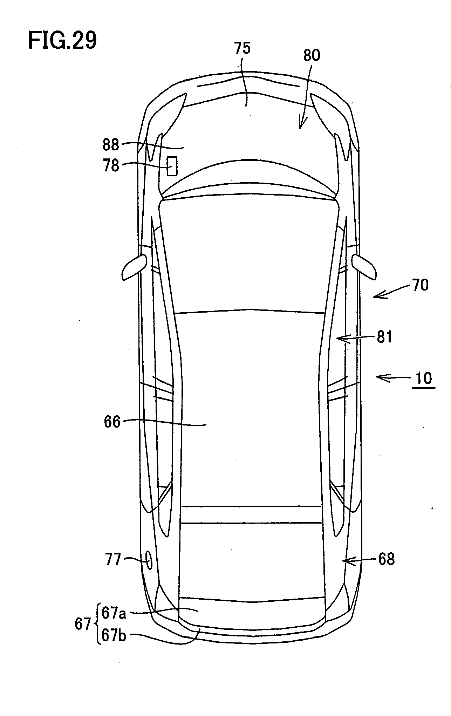

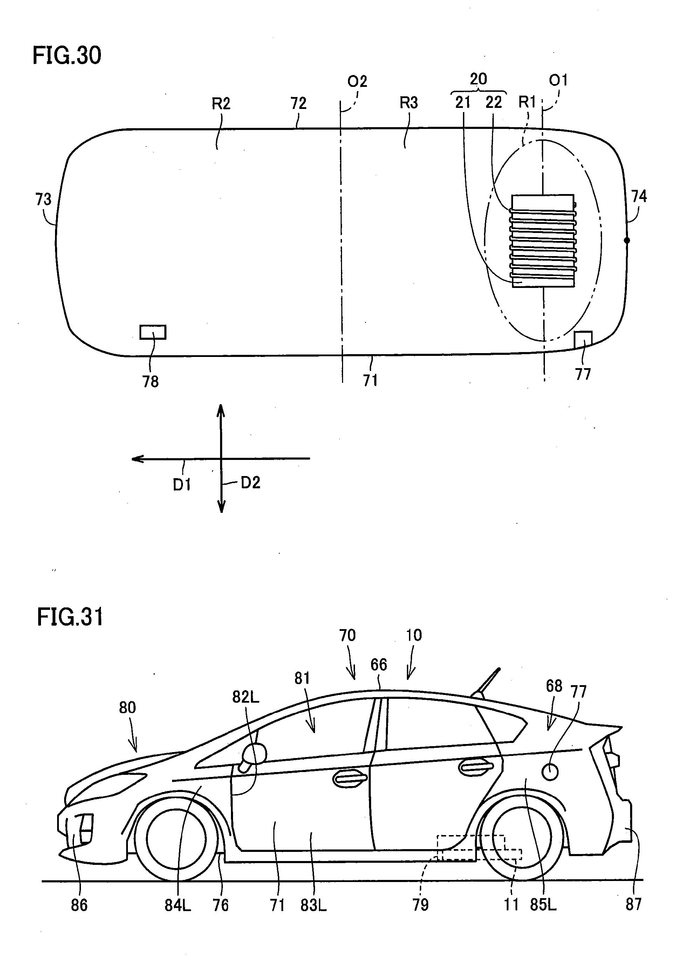

With reference to Fig. 29 and Fig. 30, the following describes an electrically powered vehicle 10 according to a fourth embodiment. It is to be noted that in the configurations shown in Fig. 29 and Fig. 30, configurations the same as or corresponding to the configurations shown in Fig. 1 to Fig. 28 are given the same reference characters and will not be described repeatedly.

Fig. 29 is a plan view showing upper surface 75 of electrically powered vehicle 10 according to the fourth embodiment. Fig. 30 is a plan view schematically showing a layout of power reception unit 20, refueling portion 77, and charging portion 78. As shown in Fig. 30, power reception unit 20 is provided in rear region R3 whereas charging portion 78 is provided in front region R2. Accordingly, an electromagnetic field having high strength is suppressed from reaching receiving portion 20. Charging portion 78 is provided in upper surface 75, and power reception unit 20 is provided at the bottom surface 76 side. Accordingly, the electromagnetic field formed around power reception unit 20 is suppressed from reaching charging portion 78.

As shown in Fig. 29 and Fig. 30, charging portion 78 is provided at engine roof 88. It is to be noted that in the example shown in Fig. 29 and Fig. 30, charging portion 78 is provided closest to left side surface 71 among left side surface 71, right side surface 72, and front surface 73. Charging portion 78 is provided at a position close to front surface 73 relative to central line 02. Front surface 73 is farthest away from power reception unit 20 among the circumferential surfaces of electrically powered vehicle 10. Accordingly, the electromagnetic field formed around power reception unit 20 is suppressed from reaching charging portion 78.

It is to be noted that also in the fourth embodiment, because secondary coil 22 is disposed such that winding axis O1 passes through left side surface 71 and right side surface 72, the electromagnetic field having high strength can be suppressed from reaching charging portion 78.

(Fifth Embodiment)

With reference to Fig. 31 to Fig. 33, the following describes an electrically powered vehicle 10 according to a fifth embodiment. It is to be noted that in the configurations shown in Fig. 31 to Fig. 33, configurations the same or corresponding to the configurations shown in Fig. 1 to Fig. 30 are given the same reference characters and are not described repeatedly.

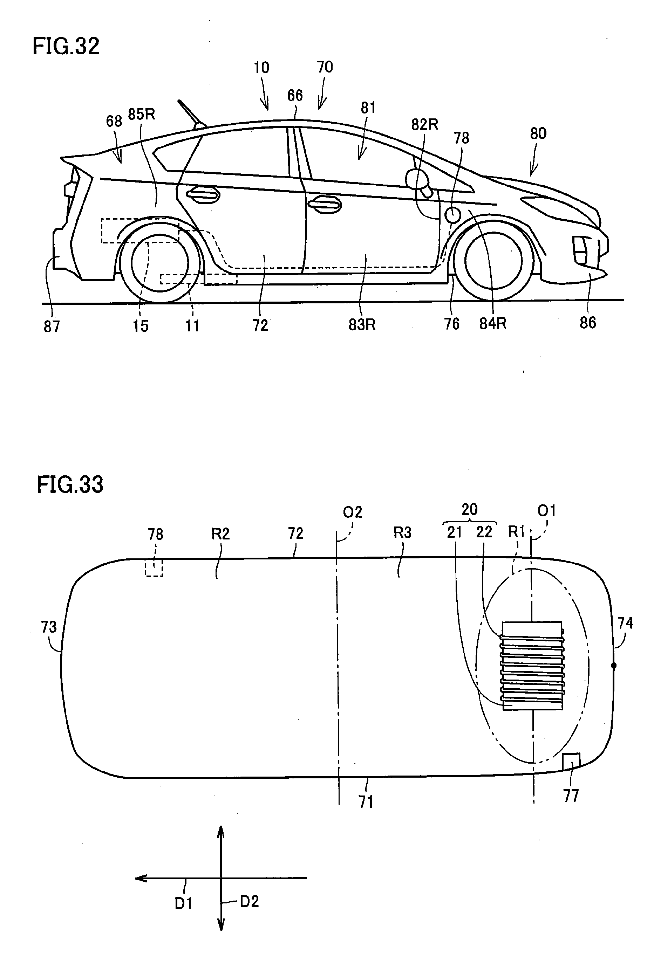

Fig. 31 is a left side view of electrically powered vehicle 10 according to the fifth embodiment. Fig. 32 is a right side view of electrically powered vehicle 10. Fig. 33 is a plan view schematically showing layout positions of power reception unit 20, refueling portion 77, and charging portion 78.

As shown in Fig. 31, refueling portion 77 is provided at rear fender 85L, and as shown in Fig. 32, charging portion 78 is provided at front fender 84R. As shown in Fig. 33, power reception unit 20 is provided in rear region R3. Secondary coil 22 is disposed such that winding axis O1 passes through right side surface 72 and left side surface 71. Charging portion 78 is disposed at the front side relative to secondary coil 22 in travelling direction D1. Accordingly, an electromagnetic field having high strength is suppressed from reaching charging portion 78.

Also in the fifth embodiment, charging portion 78 is provided in front region R2 and power reception unit 20 is provided in rear region R3, so that the electromagnetic field having high strength is suppressed from reaching charging portion 78.

Front surface 73 is farthest away from power reception unit 20 among the circumferential surfaces of electrically powered vehicle 10, and charging portion 78 is provided at a position close to front surface 73 relative to central line 02. Accordingly, the electromagnetic field having high strength can be suppressed from reaching charging portion 78.

(Sixth Embodiment)

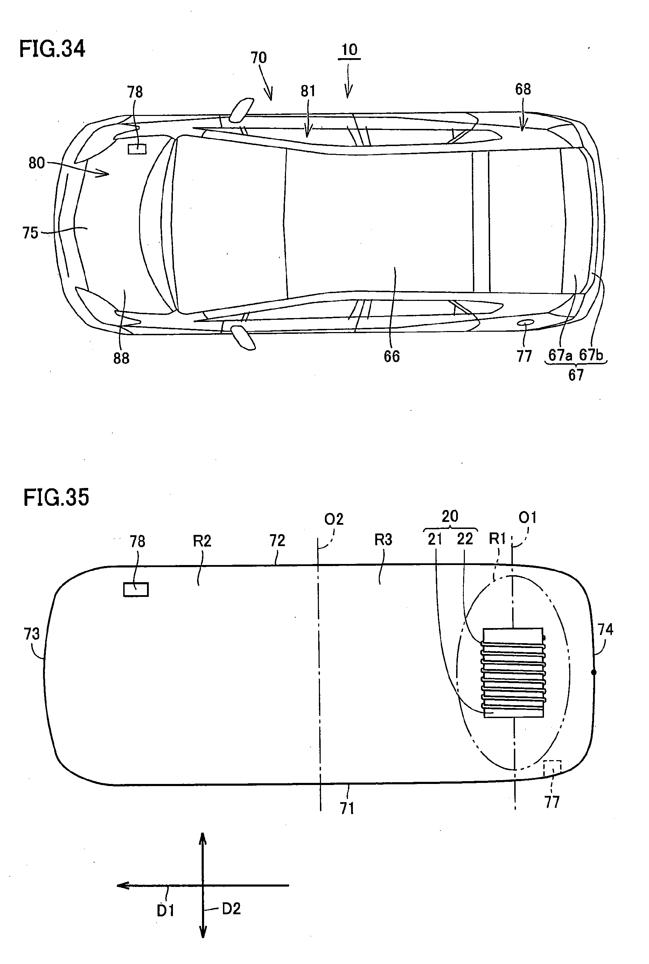

With reference to Fig. 34 to Fig. 36, the following describes an electrically powered vehicle 10 according to a sixth embodiment. It is to be noted that in the configurations shown in Fig. 34 to Fig. 36, configurations the same as or corresponding to the configurations shown in Fig. 1 to Fig. 33 are given the same reference characters and may not be described repeatedly.

Fig. 34 is a plan view showing upper surface 75 of electrically powered vehicle 10 according to the sixth embodiment. As shown in Fig. 34, charging portion 78 is provided at engine roof 88 in upper surface 75. On the other hand, power reception unit 20 is provided at the bottom surface 76 side of electrically powered vehicle 10. Accordingly, the electromagnetic field formed around power reception unit 20 can be suppressed from reaching power reception unit 20.

It should be noted that charging portion 78 is provided at engine roof 88 and is provided at a position closest to right side surface 72 among the circumferential surfaces of electrically powered vehicle 10.

Further, charging portion 78 is provided at a position close to front surface 73 relative to central line 02, and front surface 73 is provided at a position farthest away from power reception unit 20 among the circumferential surfaces of electrically powered vehicle 10. Accordingly, the electromagnetic field formed around power reception unit 20 can be suppressed from reaching charging portion 78. Further, secondary coil 22 is disposed such that winding axis O1 passes through left side surface 71 and right side surface 72. On the other hand, charging portion 78 is disposed at the front side relative to secondary coil 22 in travelling direction D1. Accordingly, the electromagnetic field having high strength is suppressed from reaching charging portion 78.

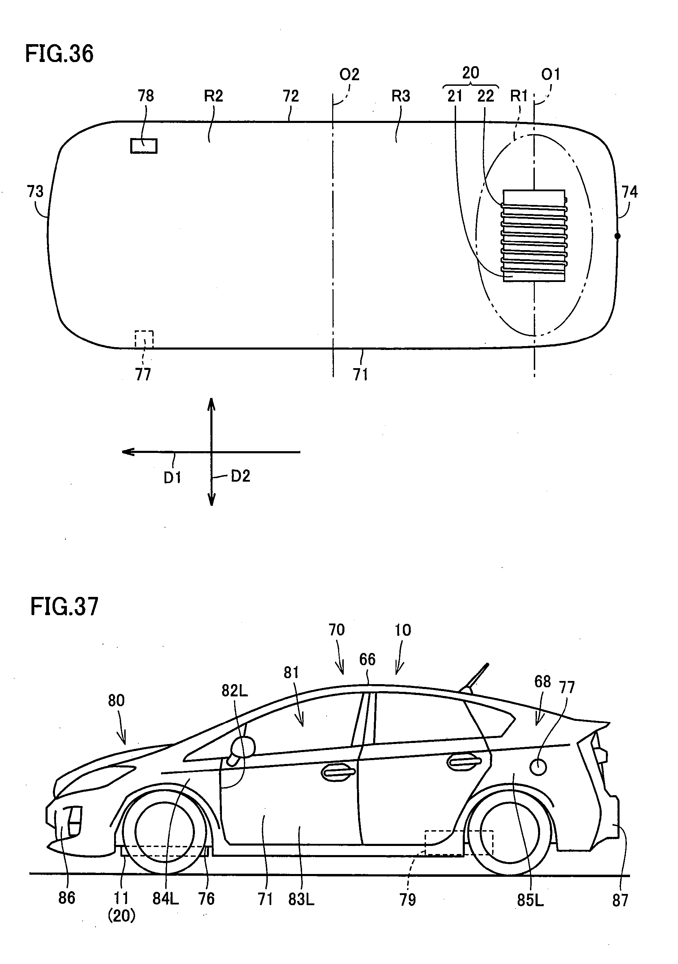

Fig. 36 is a plan view schematically showing a modification of electrically powered vehicle 10 according to the sixth embodiment. As shown in Fig. 36, refueling portion 77 may be provided in front region R2. In the example shown in Fig. 36, refueling portion 77 is provided at a position close to front surface 73 relative to winding axis O1. Accordingly, the electromagnetic field having high strength can be suppressed from reaching refueling portion 77. Accordingly, an electronic device possessed by a refueling operator can be less affected by the electromagnetic field formed around power reception unit 20. It is to be noted that refueling portion 77 may be provided in front surface 73.

It is to be noted that because secondary coil 22 is provided such that winding axis O1 passes through left side surface 71 and right side surface 72, the electromagnetic field having high strength can be suppressed from reaching refueling portion 77.

(Seventh Embodiment)

With reference to Fig. 37 to Fig. 39, the following describes an electrically powered vehicle 10 according to a seventh embodiment. It is to be noted that in the configurations shown in Fig. 37 to Fig. 39, configurations the same as or corresponding to the configurations shown in Fig. 1 to Fig. 36 are given the same reference characters and may not be described repeatedly.

Fig. 37 is a left side view of electrically powered vehicle 10 according to the seventh embodiment. As shown in Fig. 37, refueling portion 77 is provided at rear fender 85L in left side surface 71. Power reception device 11 (power reception unit 20) is provided in bottom surface 76 at a portion below driving compartment 80.

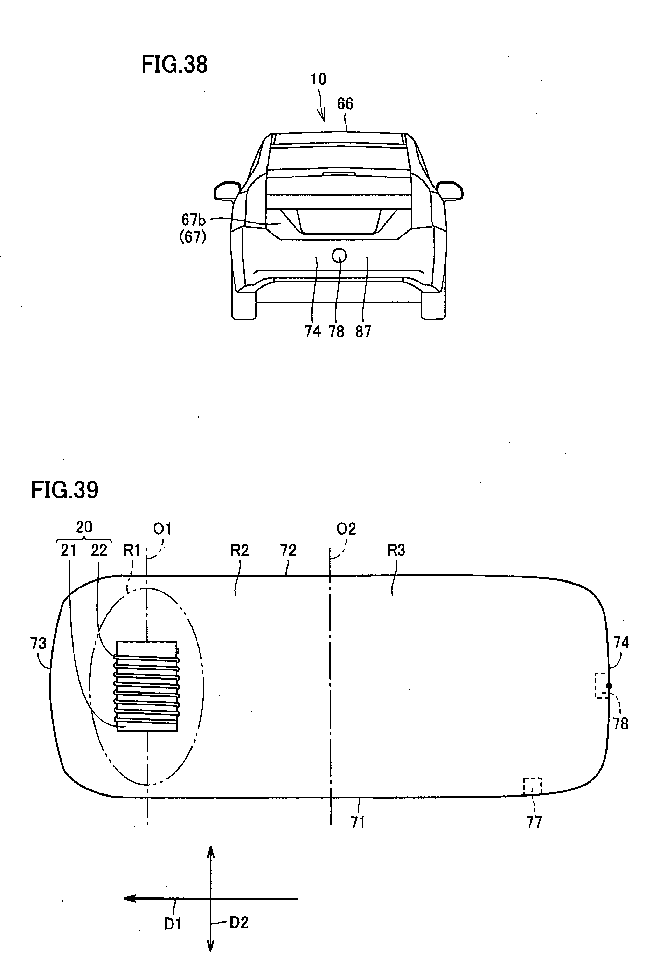

Fig. 38 is a rear view of electrically powered vehicle 10. As shown in Fig. 38, charging portion 78 is provided in rear surface 74 at rear bumper 87.

In Fig. 39, power reception unit 20 is provided at a position displaced to front region R2 relative to central line 02. It is to be noted that in the example shown in Fig. 39, power reception unit 20 is provided away from central line 02, but power reception unit 20 and central line 02 may overlap with each other. In this case, the volume of power reception unit 20 (secondary coil 22) in front region R2 is larger than the volume thereof in rear region R3. In other words, power reception unit 20 is disposed to be displaced to front region R2 relative to central line 02.

Refueling portion 77 and charging portion 78 are provided in rear region R3. Accordingly, the electromagnetic field having high strength is suppressed from reaching refueling portion 77 and charging portion 78.

Rear surface 74 is farthest away from power reception unit 20 among the circumferential surfaces of electrically powered vehicle 10. Since charging portion 78 is provided in rear surface 74, the electromagnetic field formed around power reception unit 20 is suppressed from reaching charging portion 78.

Accordingly, an electronic device provided in charging portion 78 and an electronic device carried by a charging operator can be less affected by the electromagnetic field.

Because refueling portion 77 is provided at a position close to rear surface 74 relative to central line 02, the electronic device carried by the refueling operator can be less affected by the electromagnetic field.

It is to be noted that refueling portion 77 may be provided in right side surface 72 and may be also provided in rear surface 74.

It is to be also noted that each of refueling portion 77 and charging portion 78 does not need to be provided in rear region R3. In other words, power reception unit 20 may be provided in one of front region R2 and rear region R3 and at least one of refueling portion 77 and charging portion 78 may be provided in the other of front region R2 and rear region R3.

By disposing power reception unit 20, refueling portion 77, and charging portion 78 in this way, the electromagnetic field having high strength can be suppressed from reaching at least one of refueling portion 77 and charging portion 78.

It is to be noted that in the seventh embodiment, secondary coil 22 is disposed such that winding axis O1 passes through left side surface 71 and right side surface 72 and refueling portion 77 and charging portion 78 are disposed at the rear side relative to power reception unit 20 in traveling direction D1, so that the electromagnetic field having high strength is suppressed from reaching charging portion 78.

(Eighth Embodiment)

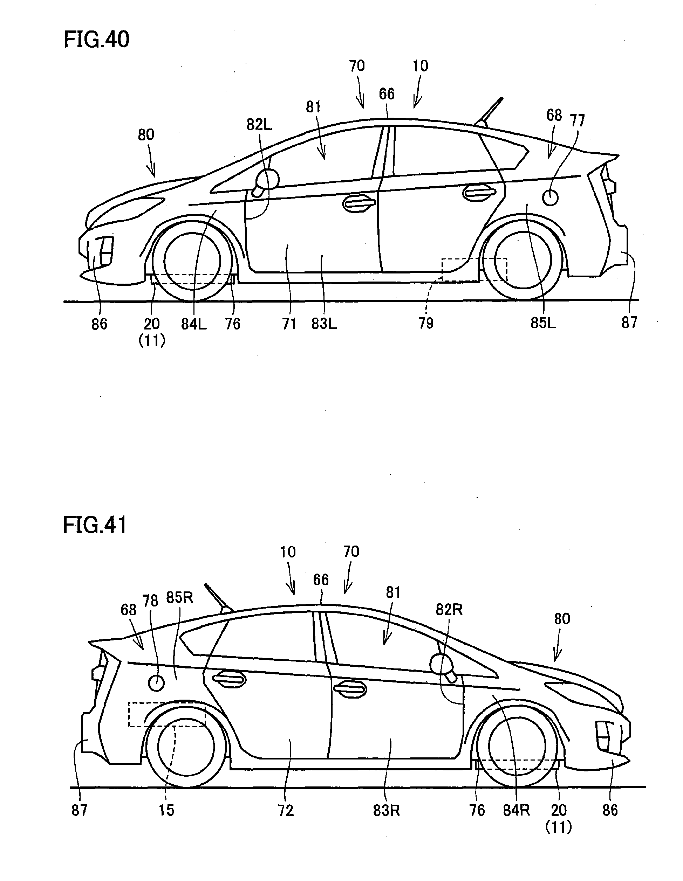

With reference to Fig. 40 to Fig. 43, the following describes an electrically powered vehicle 10 according to an eighth embodiment. It is to be noted that in the configurations shown in Fig. 40 to Fig. 42, configurations the same as or corresponding to the configurations shown in Fig. 1 to Fig. 39 are given the same reference characters and may not be described repeatedly.

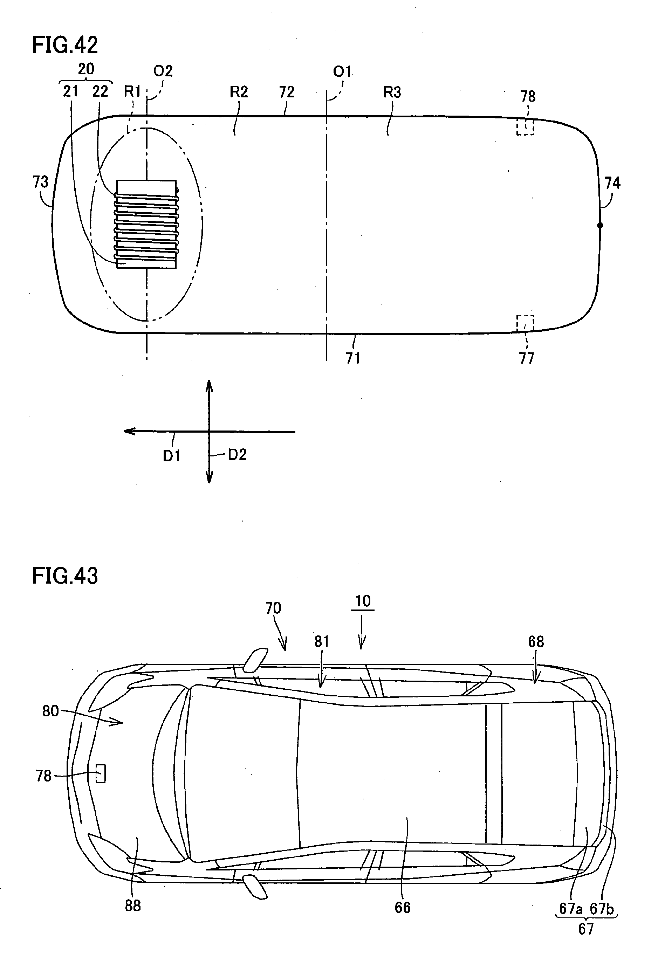

Fig. 40 is a left side view of electrically powered vehicle 10 according to the eighth embodiment. Fig. 41 is a right side view of electrically powered vehicle 10. Fig. 42 is a plan view schematically showing layout positions of power reception unit 20, refueling portion 77, and charging portion 78.

As shown in Fig. 40, power reception unit 20 (power reception device 11) is provided in bottom surface 76 at a portion below driving compartment 80. Refueling portion 77 is provided in left side surface 71 at rear fender 85L. As shown in Fig. 41, charging portion 78 is provided in right side surface 72 at rear fender 85R.

In Fig. 42, power reception unit 20 is provided in front region R2, and charging portion 78 and refueling portion 77 are provided in rear region R3. Accordingly, an electromagnetic field formed around power reception unit 20 can be suppressed from reaching refueling portion 77 and charging portion 78.

Secondary coil 22 is disposed such that winding axis O1 passes through left side surface 71 and right side surface 72. Accordingly, region R1 is distributed to extend widely in width direction D2 of electrically powered vehicle 10. On the other hand, refueling portion 77 and charging portion 78 are disposed at the rear side relative to power reception unit 20 in electrically powered vehicle 10, so that the electromagnetic field having high strength can be suppressed from reaching refueling portion 77 and charging portion 78.

Rear surface 74 is a surface farthest away from power reception unit 20 among the circumferential surfaces of electrically powered vehicle 10. Refueling portion 77 and charging portion 78 are provided at positions close to rear surface 74 relative to winding axis O1. Accordingly, the electromagnetic field having high strength can be suppressed from reaching charging portion 78 and refueling portion 77.

(Ninth Embodiment)

With reference to Fig. 43 to Fig. 45, the following describes an electrically powered vehicle 10 according to a ninth embodiment. It is to be noted that in the configurations shown in Fig. 43 to Fig. 45, configurations the same as or corresponding to the configurations shown in Fig. 1 to Fig. 42 are given the same reference characters and may not be described repeatedly.

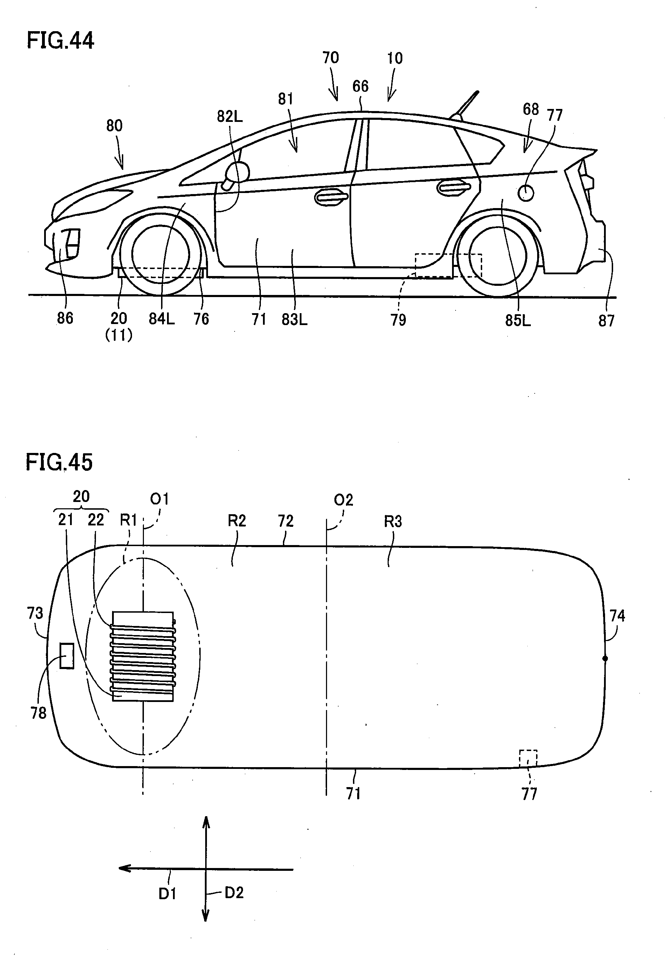

Fig. 43 is a plan view showing electrically powered vehicle 10 according to the ninth embodiment. As shown in Fig. 43, charging portion 78 is provided in upper surface 75 at engine roof 88. Fig. 44 is a left side view of electrically powered vehicle 10. As shown in Fig. 44, refueling portion 77 is provided in left side surface 71 at rear fender 85L. Power reception unit 20 (power reception device 11) is provided in bottom surface 76 at a portion below driving compartment 80.

Fig. 45 is a plan view schematically showing mounting positions of power reception unit 20, refueling portion 77, and charging portion 78. As shown in Fig. 45, power reception unit 20 is provided in front region R2, and refueling portion 77 is provided in rear region R3. Accordingly, the electromagnetic field having high strength can be suppressed from reaching refueling portion 77.

Charging portion 78 is provided in upper surface 75 of electrically powered vehicle 10 and power reception unit 20 is provided in the bottom surface of electrically powered vehicle 10, so that the electromagnetic field having high strength is suppressed from reaching charging portion 78.

Refueling portion 77 is provided at a position away from power reception unit 20 relative to power reception unit 20. Accordingly, the electromagnetic field having high strength is suppressed from reaching refueling portion 77.

Generally, the refueling operation is performed with the operator standing by refueling portion 77. On the other hand, the charging operation is generally performed by leaving electrically powered vehicle 10 for a predetermined time with a charging plug being connected to charging portion 78.

Accordingly, in the refueling operation, the operator is around electrically powered vehicle 10 for a longer time than that in the charging operation. According to electrically powered vehicle 10 in the ninth embodiment, refueling portion 77 is farther away as compared with charging portion 78, so that the electronic device possessed by the refueling operator can be less affected by the electromagnetic field. It is to be noted that charging portion 78 is provided in upper surface 75 of electrically powered vehicle 10. On the other hand, power reception unit 20 is provided in bottom surface 76, so that the electromagnetic field having high strength can be suppressed from reaching power reception unit 20.

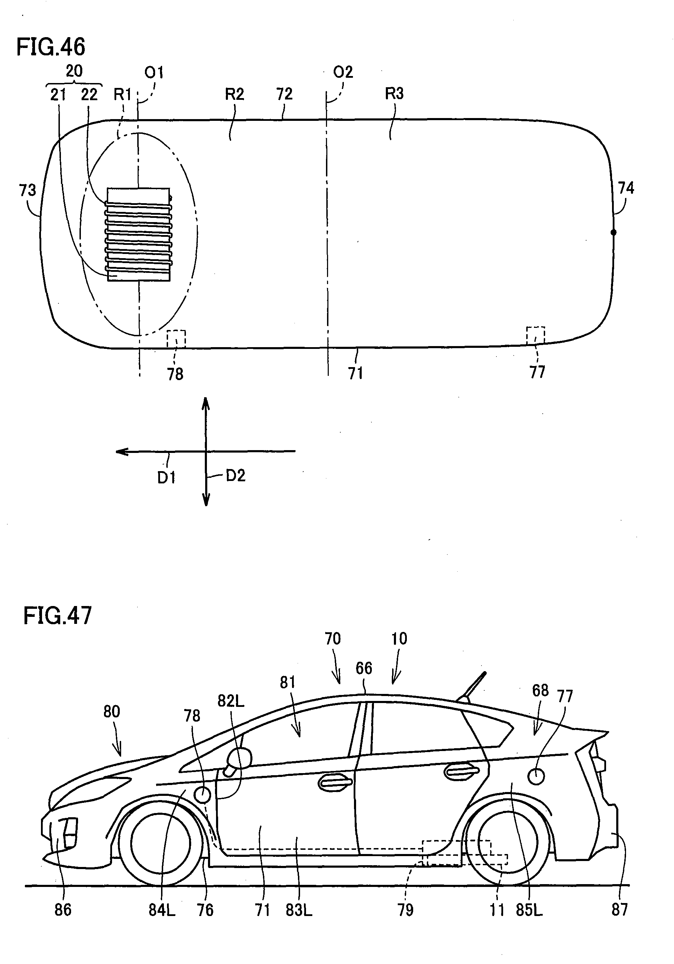

Fig. 46 is a plan view schematically showing a modification of electrically powered vehicle 10 according to the ninth embodiment. As shown in Fig. 46, charging portion 78 may be provided in left side surface 71.

(Tenth Embodiment)

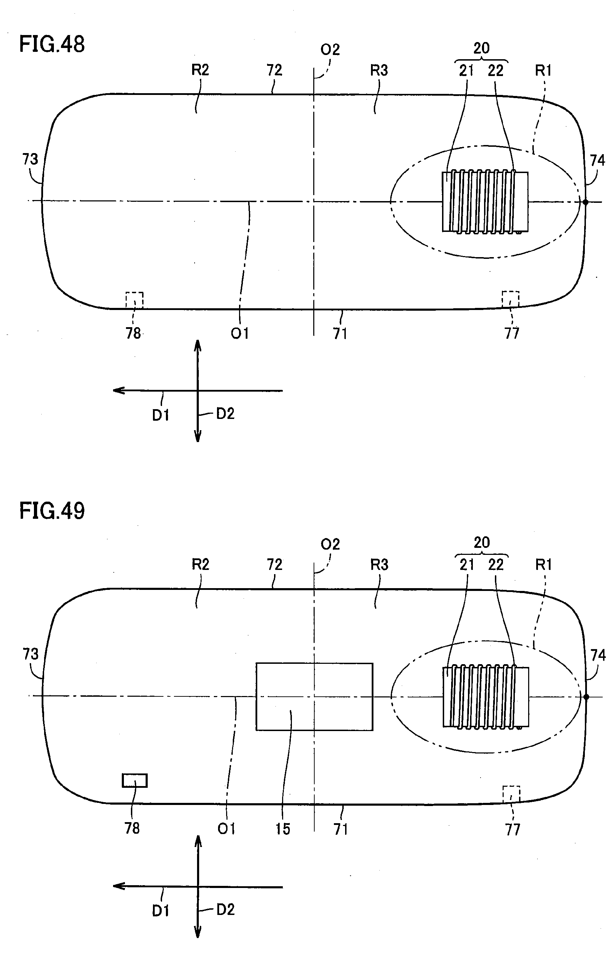

With reference to Fig. 47 and Fig. 48, the following describes an electrically powered vehicle 10 according to a tenth embodiment. It is to be noted that in the configurations shown in Fig. 47 and Fig. 48, configurations the same as or corresponding to the configurations shown in Fig. 1 to Fig. 46 are given the same reference characters and may not be described repeatedly.

Fig. 47 is a left side view of electrically powered vehicle 10 according to the tenth embodiment. As shown in Fig. 47, charging portion 78 is provided in left side surface 71 at front fender 84L and refueling portion 77 is provided in left side surface 71 at rear fender 85L.

Fig. 48 is a plan view schematically showing layout positions of power reception unit 20, refueling portion 77, and charging portion 78. As shown in Fig. 48, power reception unit 20 is provided in rear region R3, and charging portion 78 is provided in front region R2.

The electromagnetic field having high strength can be suppressed from reaching charging portion 78. Secondary coil 22 is disposed such that winding axis O passes through front surface 73 and rear surface 74. On the other hand, charging portion 78 and refueling portion 77 are provided in left side surface 71. Thus, among the circumferential surfaces of electrically powered vehicle 10, refueling portion 77 and charging portion 78 are provided in the surface through which winding axis O1 does not pass.

Accordingly, the electromagnetic field having high strength is suppressed from reaching refueling portion 77 and charging portion 78. Specifically, the electromagnetic field formed around secondary coil 22 is widely distributed toward front surface 73 and rear surface 74 and charging portion 78 and refueling portion 77 are provided in the surface different from front surface 73 and rear surface 74, whereby the electromagnetic field having high strength can be suppressed from reaching charging portion 78 and refueling portion 77.

Accordingly, even in the case where the refueling operation or the charging operation is performed when receiving electric power using power reception unit 20, the electronic device possessed by the operator can be less affected by the electromagnetic field.

Fig. 49 is a plan view schematically showing a first modification of the tenth embodiment. As shown in Fig. 49, charging portion 78 may be provided in upper surface 75 at engine roof 88. Thus, charging portion 78 is provided in upper surface 75 and power reception unit 20 is provided at the bottom surface 76 side, so that the electromagnetic field can be suppressed from reaching charging portion 78.

It is to be noted that in the example shown in Fig. 49, battery 15 is provided at the bottom surface 76 side of electrically powered vehicle 10. When viewing battery 15, charging portion 78, and power reception unit 20 from above electrically powered vehicle 10 in plan, battery 15 is disposed between charging portion 78 and power reception unit 20. Accordingly, the electromagnetic field formed around power reception unit 20 can be suppressed from reaching charging portion 78. Further, by disposing battery 15 between charging portion 78 and power reception unit 20, a distance between charging portion 78 and battery 15 can be made short, thereby providing a short length of the interconnection that connects charging portion 78 and battery 15 to each other.

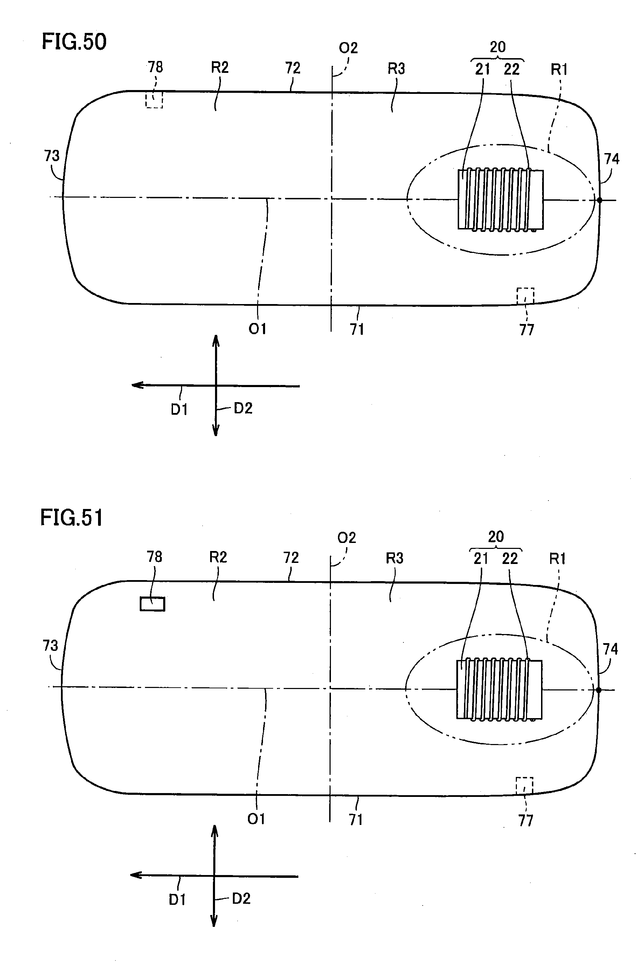

Fig. 50 is a plan view schematically showing a second modification of electrically powered vehicle 10 according to the tenth embodiment. In the example shown in Fig. 50, charging portion 78 is provided in front region R2 at right side surface 72.

Even though charging portion 78 is disposed at such a position, the electromagnetic field having high strength can be suppressed from reaching charging portion 78.

Fig. 51 is a plan view schematically showing a third modification of electrically powered vehicle 10 according to the tenth embodiment. In the example shown in Fig. 51, charging portion 78 is provided in upper surface 75 at engine roof 88. Specifically, charging portion 78 is provided at a position closest to right side surface 72 among right side surface 72, front surface 73, and left side surface 71.

Thus, charging portion 78 is provided in upper surface 75 and power reception unit 20 is provided at the bottom surface 76 side, so that the electromagnetic field having strong strength can be suppressed from reaching charging portion 78. For the mounting position of refueling portion 77, refueling portion 77 may be provided in front region R2. Specifically, refueling portion 77 may be provided in front region R2 at left side surface 71, right side surface 72, front surface 73 or upper surface 75.

(Eleventh Embodiment)

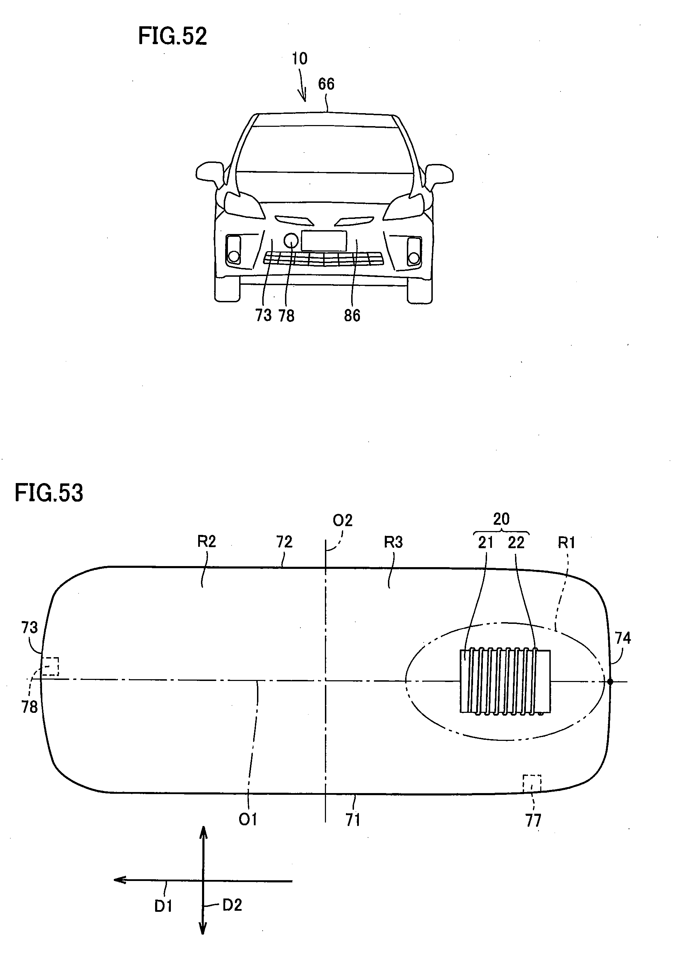

With reference to Fig. 52 to Fig. 55, the following describes an electrically powered vehicle 10 according to an eleventh embodiment. It is to be noted that in the configurations shown in Fig. 52 to Fig. 55, configurations the same as or corresponding to the configurations shown in Fig. 1 to Fig. 51 are given the same reference characters and may not be described repeatedly.

Fig. 52 is a front view of electrically powered vehicle 10 according to the eleventh embodiment. As shown in Fig. 52, charging portion 78 is provided in front surface 73. Fig. 53 is a plan view schematically showing layout positions of refueling portion 77, charging portion 78, and power reception unit 20.

As shown in Fig. 53, power reception unit 20 is provided in rear region R3, and charging portion 78 is provided in front region R2. Accordingly, the electromagnetic field having high strength can be suppressed from reaching charging portion 78. Secondary coil 22 is disposed such that winding axis O1 passes through front surface 73 and rear surface 74, and the electromagnetic field formed around secondary coil 22 is widely distributed toward front surface 73 and rear surface 74. On the other hand, refueling portion 77 is provided in left side surface 71, so that the electromagnetic field having high strength can be suppressed from reaching refueling portion 77.

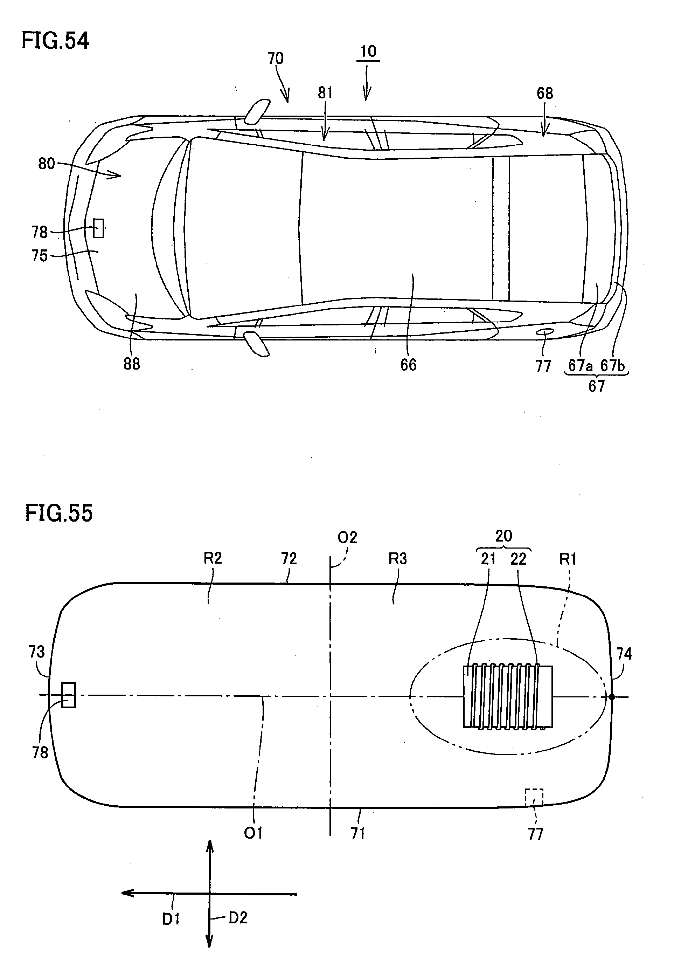

Fig. 54 is a plan view showing a first modification of electrically powered vehicle 10 according to the eleventh embodiment. Fig. 55 is a plan view schematically showing layout positions of refueling portion 77, charging portion 78, and power reception unit 20. As shown in Fig. 54 and Fig. 55, charging portion 78 is provided at engine roof 88 and is provided at a position closest to front surface 73 among right side surface 72, left side surface 71, and front surface 73.

For the mounting position of refueling portion 77, refueling portion 77 may be provided in front region R2 at any one of left side surface 71, right side surface 72, and front surface 73.

It is to be noted that because refueling portion 77 is provided in front region R2, the electromagnetic field having high strength can be suppressed from reaching refueling portion 77. With this, an electronic device possessed by the refueling operator can be less affected by the electromagnetic field.

(Twelfth Embodiment)

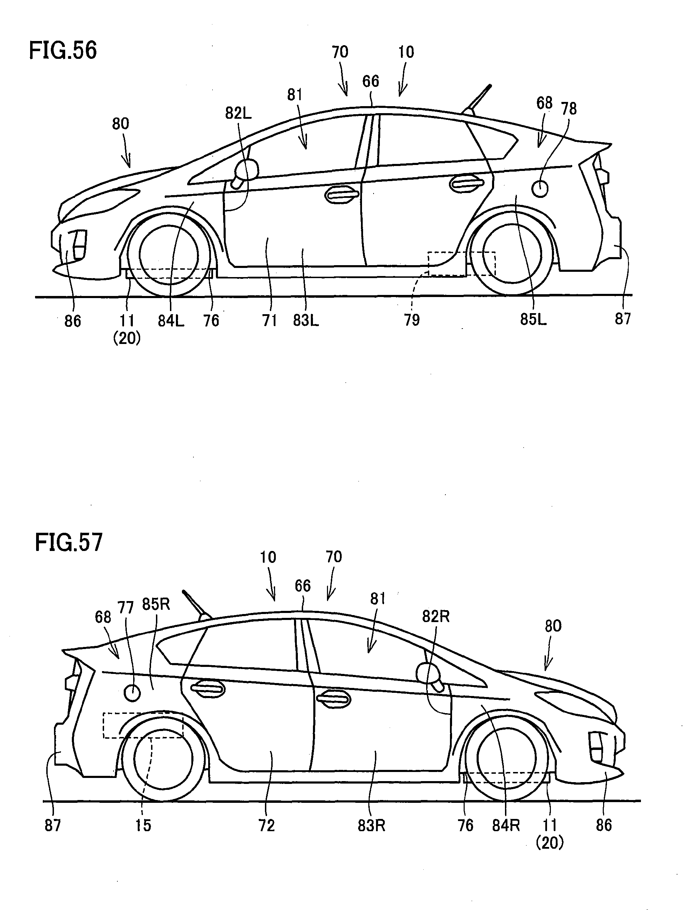

With reference to Fig. 56 to Fig. 59, the following describes an electrically powered vehicle 10 according to a twelfth embodiment. It is to be noted that in the configurations shown in Fig. 56 to Fig. 59, configurations the same as or corresponding to the configurations shown in Fig. 1 to Fig. 55 are given the same reference characters and may not be described repeatedly.

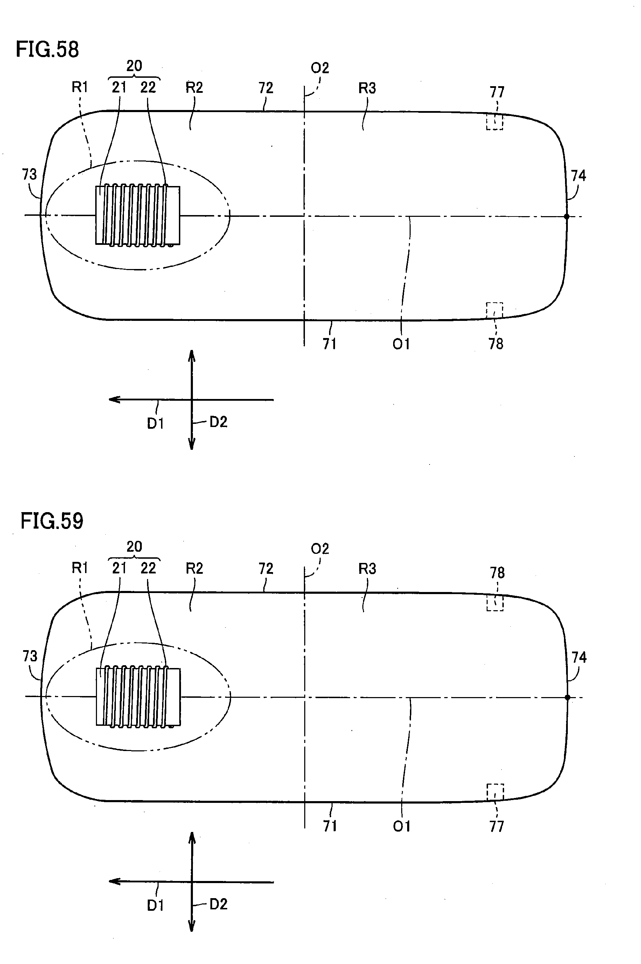

Fig. 56 is a left side view of electrically powered vehicle 10 according to the twelfth embodiment. As shown in Fig. 56, charging portion 78 is provided in left side surface 71 at rear fender 85L. Fig. 57 is a right side view of electrically powered vehicle 10. Refueling portion 77 is provided in right side surface 72 at rear fender 85R. Fig. 58 is a plan view schematically showing mounting positions of refueling portion 77, charging portion 78, and power reception unit 20.

As shown in Fig. 58, power reception unit 20 is provided in front region R2. On the other hand, charging portion 78 and refueling portion 77 are provided in rear region R3. Accordingly, the electromagnetic field having high strength can be suppressed from reaching refueling portion 77 and charging portion 78.

Secondary coil 22 is disposed such that winding axis O1 passes through rear surface 74 and front surface 73. On the other hand, refueling portion 77 is provided in right side surface 72 and charging portion 78 is provided in left side surface 71, so that the electromagnetic field having high strength is suppressed from reaching refueling portion 77 and charging portion 78.

Fig. 59 is a plan view schematically showing a first modification of the twelfth embodiment. Also in the example shown in Fig. 59, refueling portion 77 and charging portion 78 are provided in rear region R3 and power reception unit 20 is provided in front region R2. It is to be noted that in the example shown in Fig. 59, refueling portion 77 is provided in left side surface 71 and charging portion 78 is provided in right side surface 72.

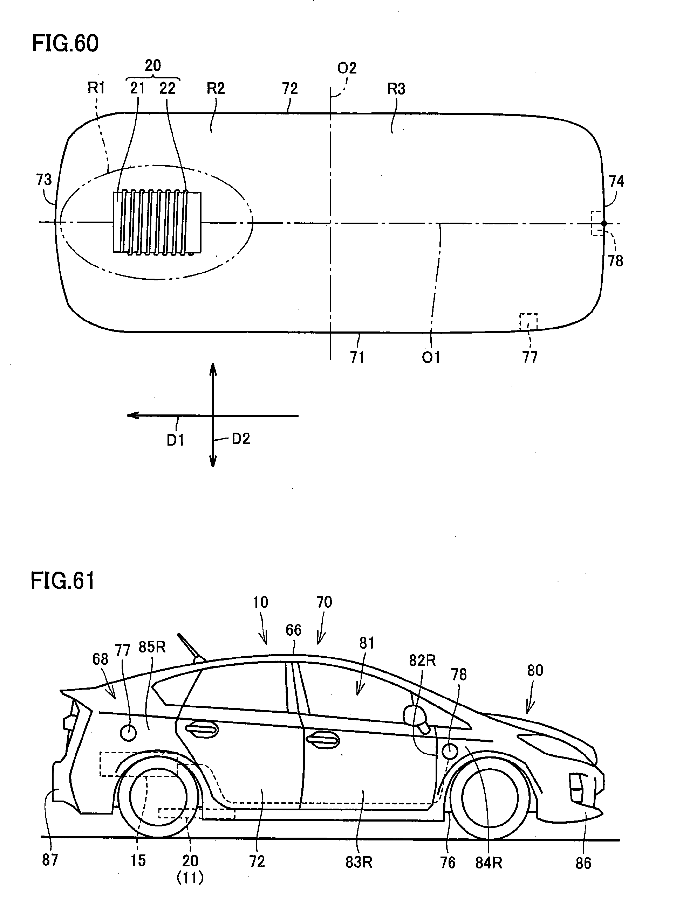

Fig. 60 is a plan view schematically showing a second modification of electrically powered vehicle 10 according to the twelfth embodiment. Also in the example shown in Fig. 60, refueling portion 77 and charging portion 78 are provided in rear region R3 and power reception unit 20 is provided in front region R2.

Among the circumferential surfaces of electrically powered vehicle 10, rear surface 74 is a surface farthest away from power reception unit 20, and charging portion 78 is provided in rear surface 74. Accordingly, the electromagnetic field having high strength can be suppressed from reaching charging portion 78.

(Thirteenth Embodiment)

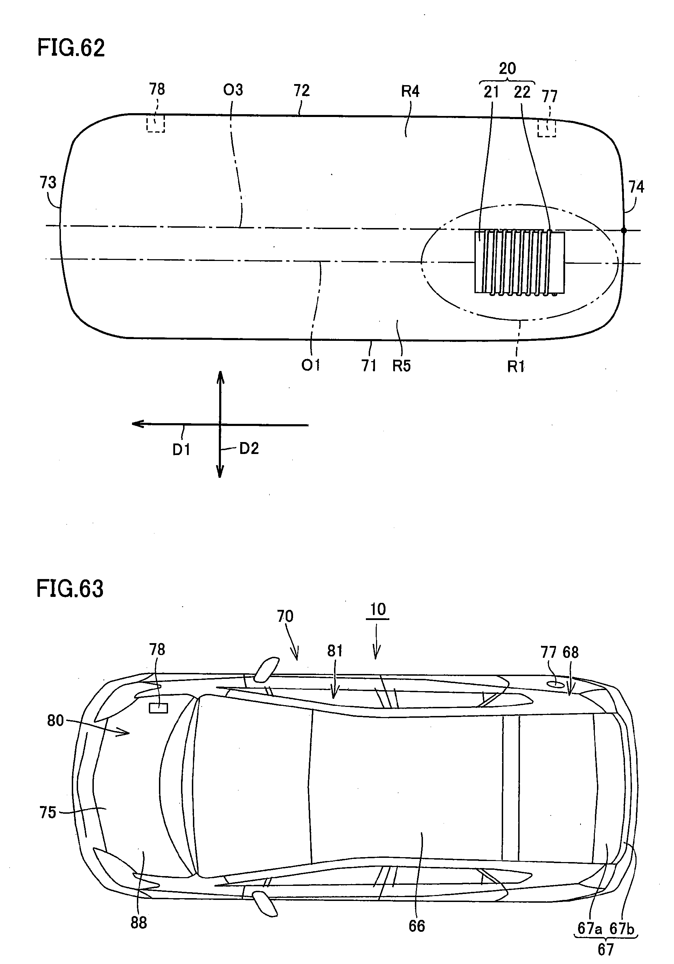

With reference to Fig. 61 and Fig. 62, the following describes an electrically powered vehicle 10 according to a thirteenth embodiment. It is to be noted that in the configurations shown in Fig. 61 and Fig. 62, configurations the same as or corresponding to the configurations shown in Fig. 1 to Fig. 60 are given the same reference characters and may not be described repeatedly.

Fig. 61 is a right side view showing electrically powered vehicle 10 according to the thirteenth embodiment. As shown in Fig. 61, charging portion 78 and refueling portion 77 are provided in right side surface 72. Specifically, refueling portion 77 is provided in right side surface 72 at rear fender 85R, and charging portion 78 is provided in right side surface 72 at front fender 84R.

Fig. 62 is a plan view schematically showing mounting positions of refueling portion 77, charging portion 78, and power reception unit 20. In Fig. 62, a central line 03 is an imaginary line passing through the central portion of electrically powered vehicle 10 in width direction D2 and extending in travelling direction D1.

Now, assume that a region located at the right side relative to central line 03 is a right region R4 and a region located at the left side relative to central line 03 is a left region R5 in electrically powered vehicle 10.

Power reception unit 20 is disposed to be displaced to left region R5 relative to central line 03. It is to be noted that in the example shown in Fig. 62, substantially the whole of power reception unit 20 is disposed in left region R5, but a portion of power reception unit 20 may be disposed in right region R4.

That is, the expression "power reception unit 20 is displaced to left region R5 relative to central line O3" is not limited to a case where the whole of power reception unit 20 is disposed in left region R5, and also includes a case where a portion of power reception unit 20 is disposed in right region R4. More specifically, the expression "power reception unit 20 is disposed in left region R5" includes a case where the volume of secondary coil 22 in left region R5 is larger than the volume of secondary coil 22 in right region R4. It is to be noted that in the thirteenth embodiment, secondary coil 22 is disposed such that winding axis O1 passes from front surface 73 to rear surface 74.

Both refueling portion 77 and charging portion 78 are provided in right region R4. Specifically, refueling portion 77 and charging portion 78 are provided in right side surface 72. Thus, power reception unit 20 is provided in left region R5 and refueling portion 77 and charging portion 78 are provided in right region R4, so that the electromagnetic field formed around 20 can be suppressed from reaching refueling portion 77 and charging portion 78.

Secondary coil 22 is disposed such that winding axis O1 passes through front surface 73 and rear surface 74, so that region R1 is widely distributed in the direction in which front surface 73 and rear surface 74 are arranged. On the other hand, refueling portion 77 and charging portion 78 are provided in the side surface of electrically powered vehicle 10, so that the electromagnetic field formed around power reception unit 20 can be suppressed from reaching refueling portion 77 and charging portion 78.

Power reception unit 20 is provided at a position close to rear surface 74 relative to front surface 73, and charging portion 78 is provided at a position close to front surface 73 relative to rear surface 74. Accordingly, the electromagnetic field having high strength can be suppressed from reaching charging portion 78.

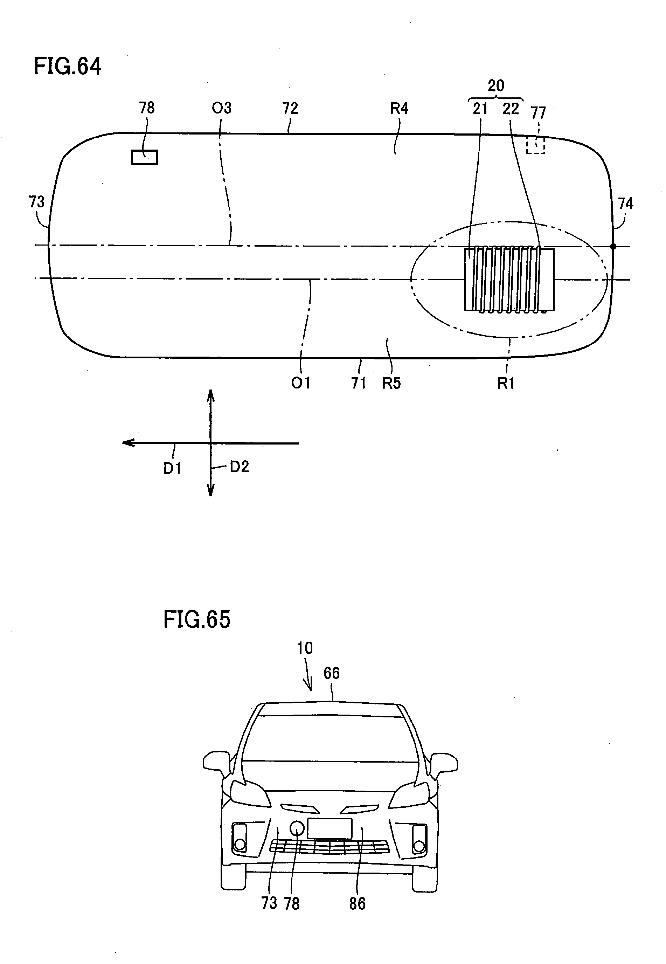

Fig. 63 is a plan view showing a modification of electrically powered vehicle 10 according to the thirteenth embodiment. Fig. 64 is a plan view schematically showing layout positions of refueling portion 77, charging portion 78, and power reception unit 20 in this electrically powered vehicle 10.

As shown in Fig. 63, charging portion 78 may be provided at engine roof 88 of electrically powered vehicle 10. It is to be noted that refueling portion 77 is provided in right side surface 72.

In the example shown in Fig. 63 and Fig. 64, charging portion 78 is provided in upper surface 75, so that the electromagnetic field having strong strength is suppressed from reaching charging portion 78. Accordingly, an electronic device provided in charging portion 78 and an electronic device possessed by a charging operator can be less affected by the electromagnetic field.

It is to be noted that in the thirteenth embodiment, refueling portion 77 is provided at a position close to rear surface 74 relative to front surface 73 but may be provided at a different position.

For example, in right side surface 72, refueling portion 77 may be provided at a position close to front surface 73 relative to rear surface 74.

In this case, the electromagnetic field having high strength can be suppressed from reaching refueling portion 77. Accordingly, the electronic device possessed by the refueling operator can be less affected by the electromagnetic field.

(Fourteenth Embodiment)

With reference to Fig. 65 to Fig. 67, the following describes an electrically powered vehicle 10 according to a fourteenth embodiment. It is to be noted that in the configurations shown in Fig. 65 to Fig. 67, the examples shown in Fig. 1 to Fig. 64 are given the same reference characters and may not be described repeatedly.

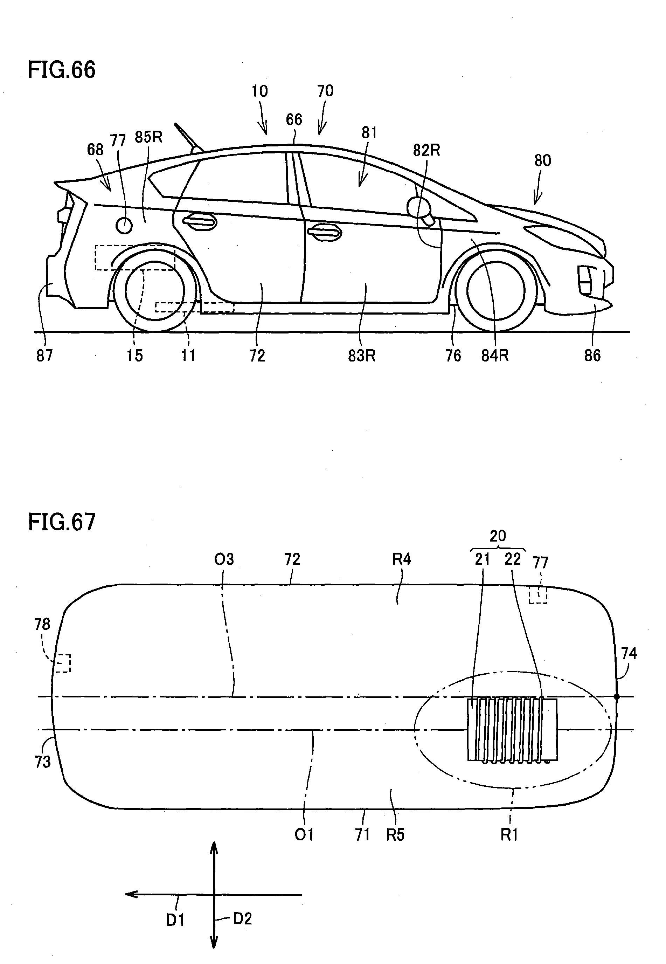

Fig. 65 is a front view of electrically powered vehicle 10 according to the fourteenth embodiment. As shown in Fig. 65, charging portion 78 is provided in front surface 73 of electrically powered vehicle 10. Fig. 66 is a right side view of electrically powered vehicle 10. As shown in Fig. 66, refueling portion 77 is provided in right side surface 72 at rear fender 85R.

Fig. 67 is a plan view schematically showing layout positions of power reception unit 20, refueling portion 77, and charging portion 78. As shown in Fig. 67, power reception unit 20 is disposed to be displaced to left region R5 relative to central line O3. Secondary coil 22 is disposed such that winding axis O1 passes through front surface 73 and rear surface 74.

Both refueling portion 77 and charging portion 78 are provided in right region R4, so that the electromagnetic field having high strength can be suppressed from reaching refueling portion 77 and charging portion 78.

Power reception unit 20 is provided in bottom surface 76 at a position close to rear surface 74 relative to front surface 73 and charging portion 78 is provided in front surface 73, so that the electromagnetic field having high strength is suppressed from reaching charging portion 78.

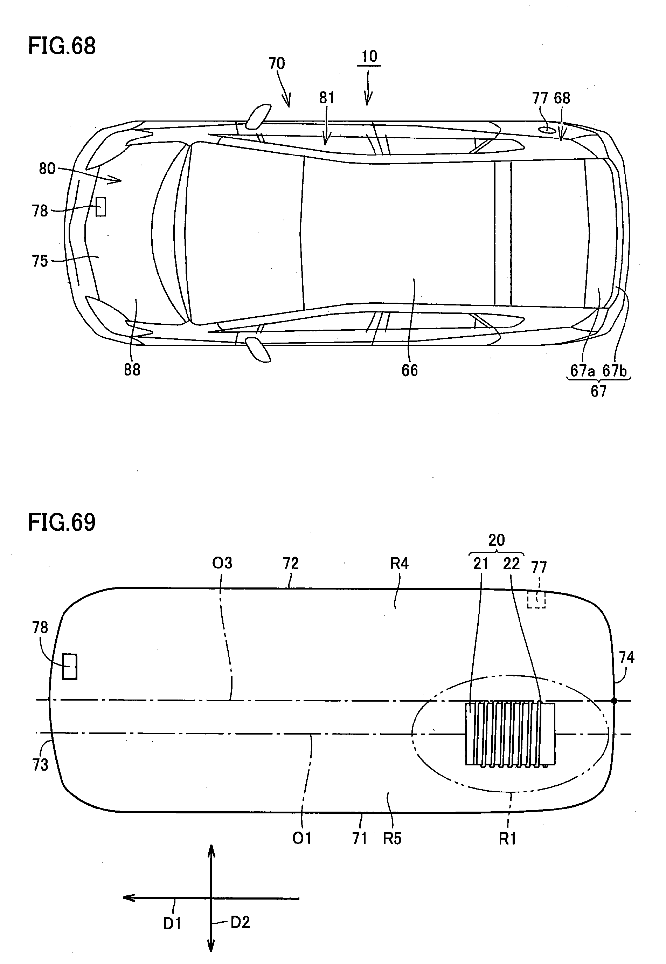

With reference to Fig. 68 and Fig. 69, the following describes a modification of electrically powered vehicle 10 according to the fourteenth embodiment. Fig. 68 is a plan view showing a modification of electrically powered vehicle 10 according to the fourteenth embodiment. Fig. 69 is a plan view schematically showing layout positions of power reception unit 20, refueling portion 77, and charging portion 78. As shown in Fig. 68, charging portion 78 is provided at engine roof 88.

As shown in Fig. 69, refueling portion 77 and charging portion 78 are provided in right region R4 and power reception unit 20 is provided at a position displaced to left region R5 relative to central line 03. Moreover, charging portion 78 is disposed in upper surface 75 and power reception unit 20 is disposed at the bottom surface 76 side, so that the electromagnetic field having high strength is suppressed from reaching charging portion 78.

It is to be noted that charging portion 78 is provided at a position displaced to the right side surface 72 side relative to central line 03. On the other hand, power reception unit 20 is provided at a position displaced to the left side surface 71 side relative to central line 03. Accordingly, the electromagnetic field having high strength is suppressed from reaching charging portion 78.

(Fifteenth Embodiment)

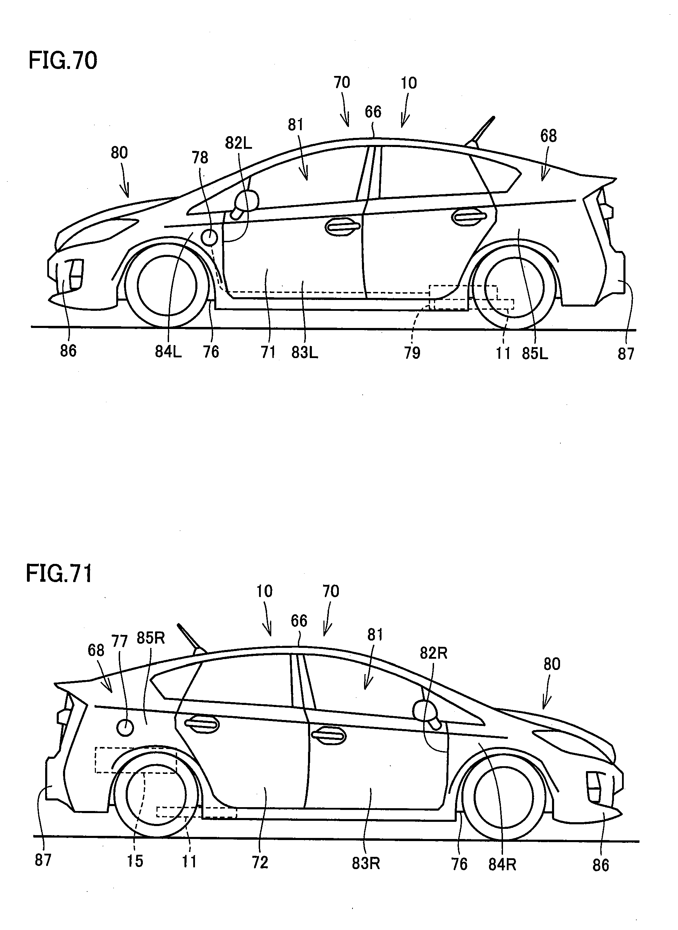

With reference to Fig. 70 to Fig. 72, the following describes an electrically powered vehicle 10 according to a fifteenth embodiment. It is to be noted that in the configurations shown in Fig. 70 to Fig. 72, configurations the same or corresponding to the configurations shown in Fig. 1 to Fig. 69 are given the same reference characters and will not be described repeatedly.

Fig. 70 is a left side view showing electrically powered vehicle 10 according to the fifteenth embodiment. As shown in Fig. 70, charging portion 78 is provided in left side surface 71 at front fender 84L. Fig. 71 is a right side view of electrically powered vehicle 10. As shown in Fig. 71, refueling portion 77 is provided in right side surface 72 at rear fender 85R.

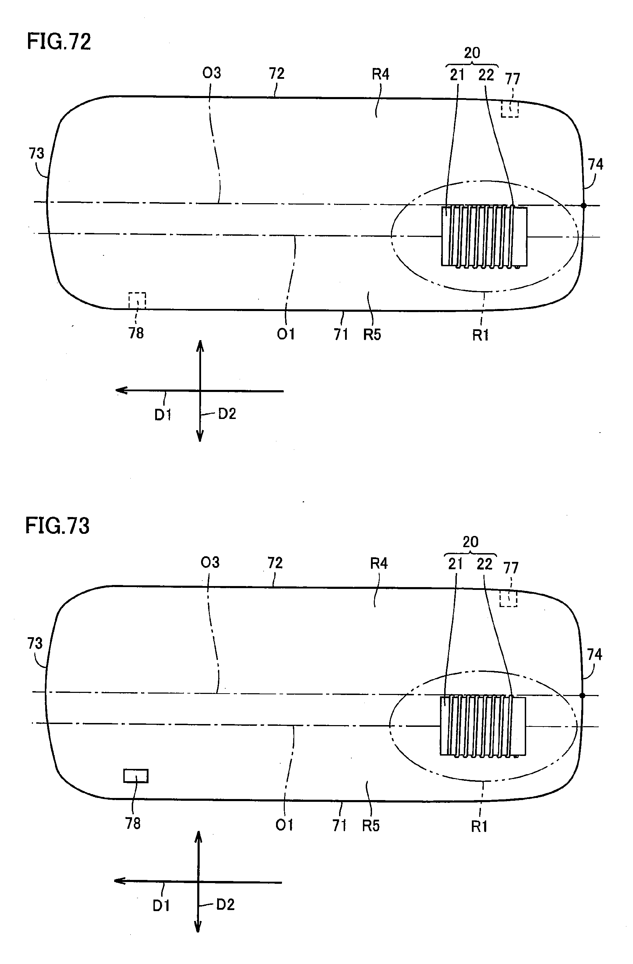

Fig. 72 is a plan view schematically showing layout positions of power reception unit 20, refueling portion 77, and charging portion 78. As shown in Fig. 72, power reception unit 20 is disposed to be displaced to left region R5 relative to central line 03. On the other hand, refueling portion 77 is provided in right region R4 and the electromagnetic field having high strength is suppressed from reaching refueling portion 77.

Further, secondary coil 22 is disposed such that winding axis O1 passes through front surface 73 and rear surface 74, and the electromagnetic field having high strength is distributed toward front surface 73 and rear surface 74.

On the other hand, refueling portion 77 and charging portion 78 are provided in right side surface 72 and left side surface 71, and the electromagnetic field having high strength is suppressed from reaching refueling portion 77 and charging portion 78.

Power reception unit 20 is provided at a position close to rear surface 74 relative to front surface 73, and charging portion 78 is provided at a position close to front surface 73 relative to rear surface 74. The electromagnetic field having high strength can be suppressed from reaching charging portion 78.

Fig. 73 is a plan view schematically showing a modification of electrically powered vehicle 10 according to the fifteenth embodiment. In the example shown in Fig. 73, charging portion 78 is provided in upper surface 75 at engine roof 88. In engine roof 88, charging portion 78 is provided at a position close to left side surface 71.

Thus, charging portion 78 is provided in upper surface 75 and power reception unit 20 is provided in bottom surface 76, so that the electromagnetic field having high strength can be suppressed from reaching charging portion 78.

(Sixteenth Embodiment)

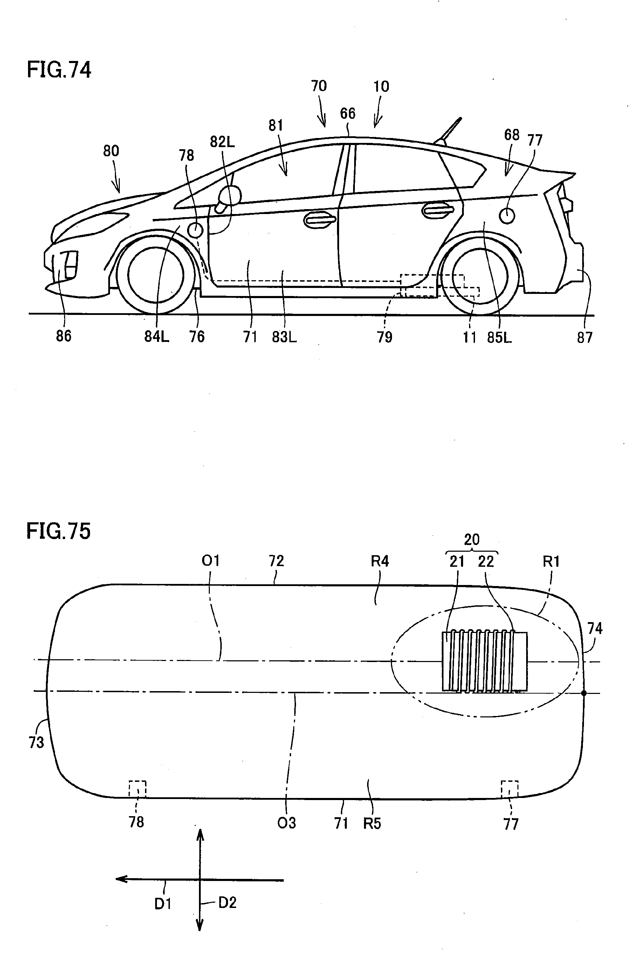

With reference to Fig. 74 and Fig. 75, the following describes an electrically powered vehicle 10 according to a sixteenth embodiment. It is to be noted that in the configurations shown in Fig. 74 and Fig. 75, configurations the same as or corresponding to the configurations shown in Fig. 1 to Fig. 73 are given the same reference characters and may not be described repeatedly.

Fig. 74 is a left side view of electrically powered vehicle 10 according to the sixteenth embodiment. As shown in Fig. 74, charging portion 78 is provided in left side surface 71 at front fender 84L and refueling portion 77 is provided in left side surface 71 at rear fender 85L.

Fig. 75 is a plan view schematically showing layout positions of refueling portion 77, charging portion 78, and power reception unit 20. As shown in Fig. 75, power reception unit 20 is disposed to be displaced to right region R4 relative to central line 03. On the other hand, charging portion 78 and refueling portion 77 are provided in left region R5. Accordingly, the electromagnetic field having high strength is suppressed from reaching refueling portion 77 and charging portion 78.

Secondary coil 22 is disposed such that winding axis O1 passes through front surface 73 and rear surface 74, and the electromagnetic field having high strength is distributed from front surface 73 toward rear surface 74. On the other hand, charging portion 78 and refueling portion 77 are provided in left side surface 71, and the electromagnetic field having high strength is suppressed from reaching refueling portion 77 and charging portion 78.

Power reception unit 20 is provided at a position close to rear surface 74 relative to front surface 73, and charging portion 78 is provided at a position close to front surface 73. Accordingly, the electromagnetic field having high strength can be suppressed from reaching charging portion 78.

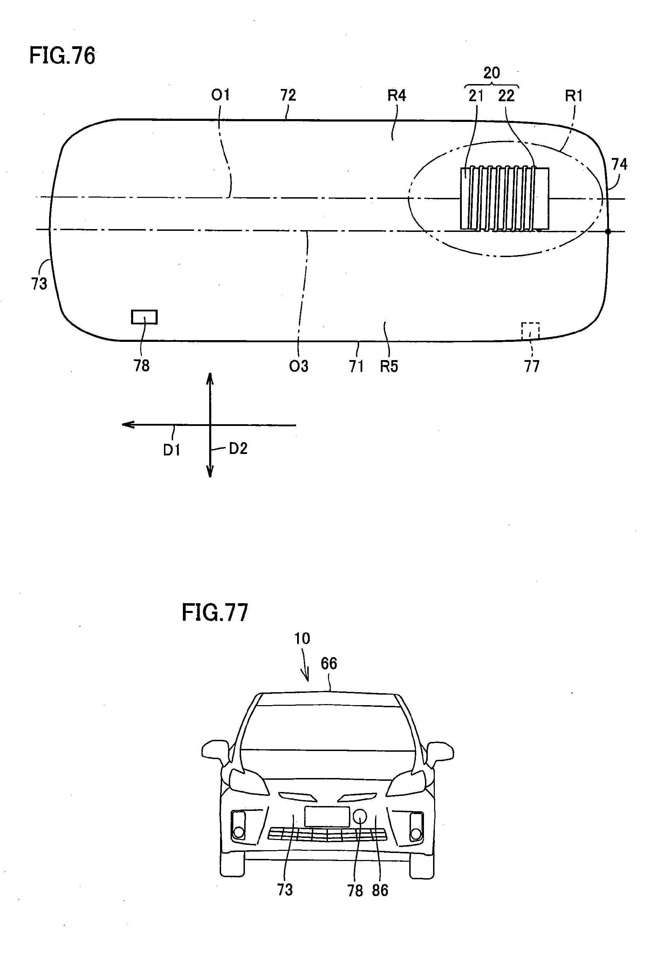

Fig. 76 is a plan view schematically showing a first modification of electrically powered vehicle 10 according to the sixteenth embodiment. In the example shown in Fig. 76, charging portion 78 is provided in upper surface 75. Specifically, charging portion 78 is provided at engine roof 88 and is provided at a position closest to left side surface 71 among left side surface 71, right side surface 72, and front surface 73. Thus, charging portion 78 is provided in upper surface 75 while power reception unit 20 is disposed at the bottom surface 76 side, whereby the electromagnetic field having high strength can be suppressed from reaching charging portion 78.

(Seventeenth Embodiment)

With reference to Fig. 77 to Fig. 79, the following describes an electrically powered vehicle 10 according to a seventeenth embodiment. It is to be noted that in the configurations shown in Fig. 77 to Fig. 79, configurations the same as or corresponding to the configurations shown in Fig. 1 to Fig. 76 are given the same reference characters and may not be described repeatedly. Fig. 77 is a front view of electrically powered vehicle 10 according to the seventeenth embodiment. As shown in Fig. 77, charging portion 78 is provided in electrically powered vehicle 10 at front surface 73.

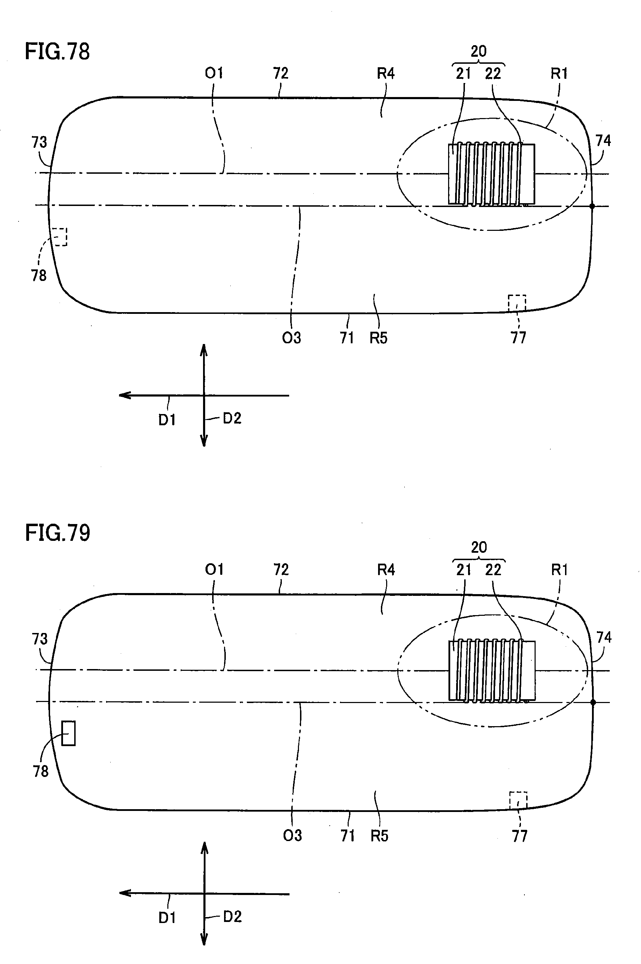

Fig. 78 is a plan view schematically showing mounting positions of power reception unit 20, refueling portion 77, and charging portion 78. As shown in Fig. 78, charging portion 78 and refueling portion 77 are provided in left region R5, whereas power reception unit 20 is provided in right region R4. Accordingly, the electromagnetic field having high strength is suppressed from reaching refueling portion 77 and charging portion 78.

Further, charging portion 78 is provided in front surface 73, and power reception unit 20 is disposed in the vicinity of rear surface 74. Accordingly, the electromagnetic field having high strength can be suppressed from reaching charging portion 78.

Fig. 79 is a plan view schematically showing a first modification of the seventeenth embodiment. As shown in Fig. 79, charging portion 78 is provided in upper surface 75. On the other hand, power reception unit 20 is disposed at the bottom surface 76 side, so that the electromagnetic field having high strength is suppressed from reaching charging portion 78.

It is to be noted that in the example shown in Fig. 79, charging portion 78 is provided at engine roof 88. Charging portion 78 is provided at a position closest to front surface 73 among left side surface 71, right side surface 72, and front surface 73. Charging portion 78 is provided at a position displaced to the left side surface 71 side relative to central line 03.

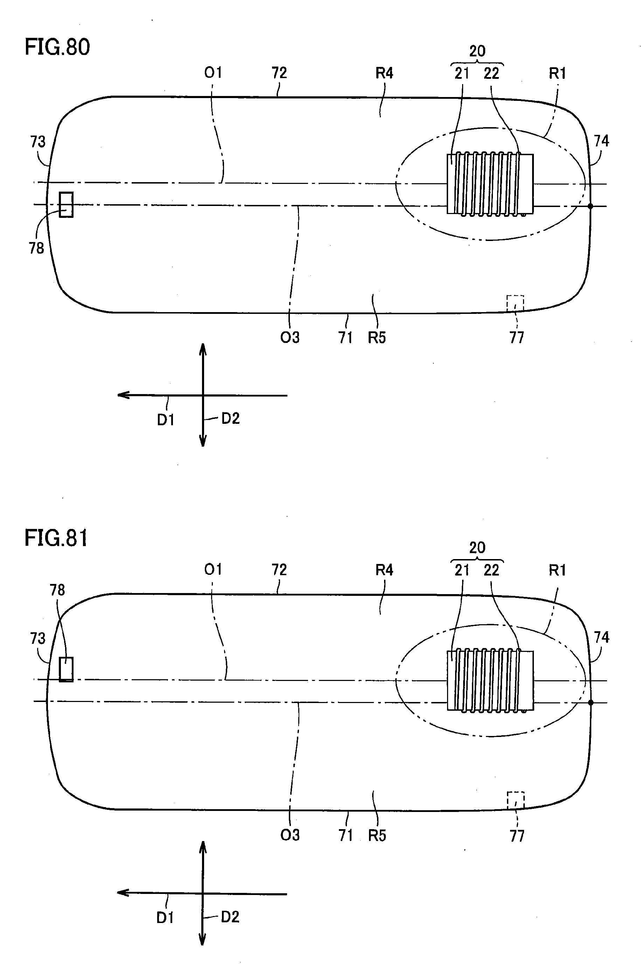

Fig. 80 is a plan view schematically showing a second modification of the seventeenth embodiment. As shown in Fig. 80, charging portion 78 may be disposed to extend over both right region R4 and left region R5.

Fig. 81 is a plan view schematically showing a third modification of the seventeenth embodiment. In the example shown in Fig. 81, power reception unit 20 is disposed to be displaced to right region R4 relative to central line 03. Most of power reception unit 20 is disposed in right region R4 and a portion of power reception unit 20 is disposed in left region R5. Refueling portion 77 is disposed in left region R5, and charging portion 78 is disposed in right region R4. Accordingly, the electromagnetic field having high strength can be suppressed from reaching refueling portion 77.

It is to be noted that charging portion 78 is provided in right region R4 and charging portion 78 is provided in the vicinity of front surface 73. On the other hand, power reception unit 20 is disposed in the vicinity of rear surface 74 and the electromagnetic field having high strength can be suppressed from reaching charging portion 78.

(Eighteenth Embodiment)

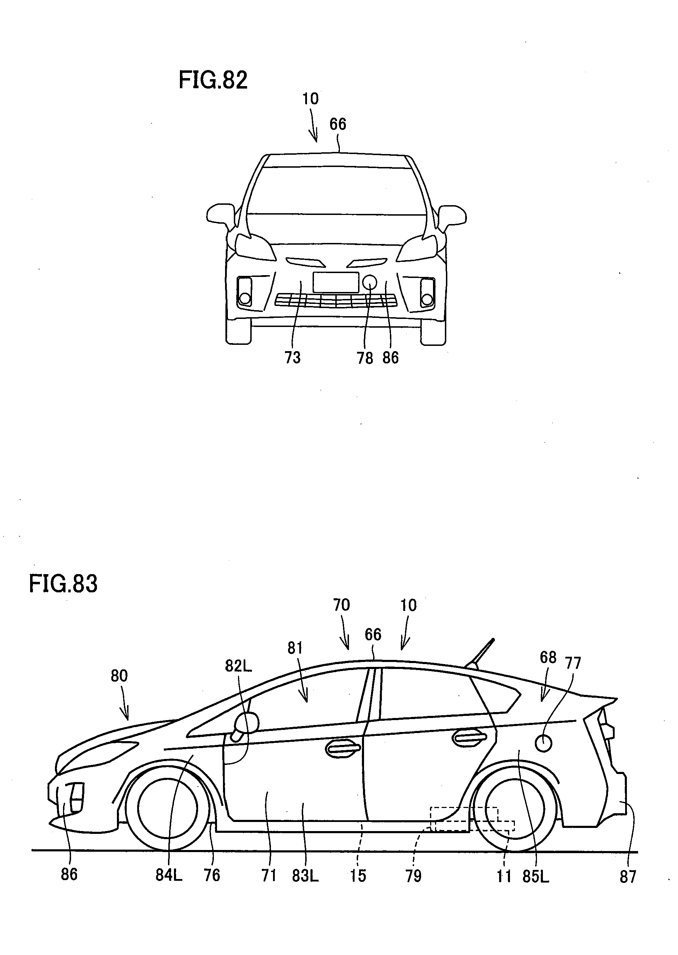

With reference to Fig. 82 to Fig. 85, the following describes an electrically powered vehicle 10 according to an eighteenth embodiment. It is to be noted that in the configurations shown in Fig. 82 to Fig. 85, configurations the same as or corresponding to the configurations shown in Fig. 1 to Fig. 81 are given the same reference characters and may not be described repeatedly.

Fig. 82 is a front view of electrically powered vehicle 10 according to the eighteenth embodiment. As shown in Fig. 82, charging portion 78 is provided in front surface 73. Fig. 83 is a left side view of electrically powered vehicle 10. As shown in Fig. 83, refueling portion 77 is provided in left side surface 71 at rear fender 85L.

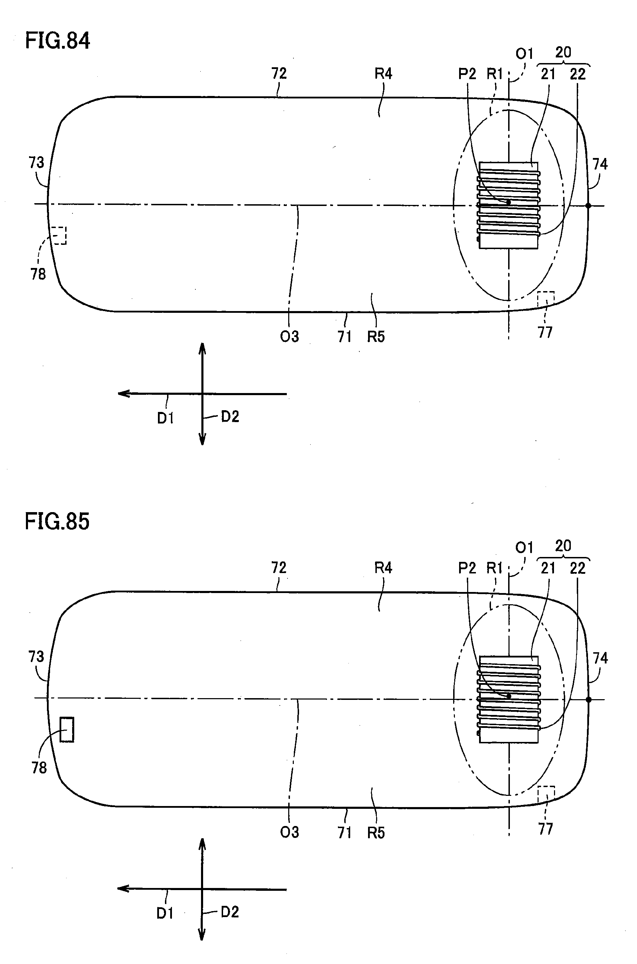

Fig. 84 is a plan view schematically showing mounting positions of power reception unit 20, refueling portion 77, and charging portion 78. In Fig. 84, power reception unit 20 is disposed to be displaced to right region R4 relative to central line 03. It is to be noted that secondary coil 22 is disposed such that winding axis O1 passes through left side surface 71 and right side surface 72.

Here, assuming that the central portion of secondary coil 22 in the direction in which winding axis O1 extends is a coil center P2, coil center P2 is disposed in right region R4. Accordingly, the volume of secondary coil 22 in right region R4 is larger than the volume of secondary coil 22 in left region R5.

On the other hand, refueling portion 77 and charging portion 78 are provided in left region R5. Accordingly, the electromagnetic field having high strength is suppressed from reaching refueling portion 77 and charging portion 78.

Charging portion 20 is provided at a position close to rear surface 74 relative to front surface 73. Charging portion 78 is provided in front surface 73, so that the electromagnetic field having high strength is suppressed from reaching charging portion 78.

Fig. 85 is a plan view schematically showing a modification of electrically powered vehicle 10 according to the eighteenth embodiment. As shown in Fig. 85, charging portion 78 is provided in upper surface 87 of electrically powered vehicle 10. Specifically, charging portion 78 is provided at engine roof 88. Charging portion 78 is provided at a position closest to front surface 73 among left side surface 71, right side surface 72, and front surface 73. It is to be noted that charging portion 78 is provided at a position close to left side surface 71 relative to right side surface 72. Thus, by providing charging portion 78 in upper surface 75, the electromagnetic field having high strength can be suppressed from reaching charging portion 78.

(Nineteenth Embodiment)

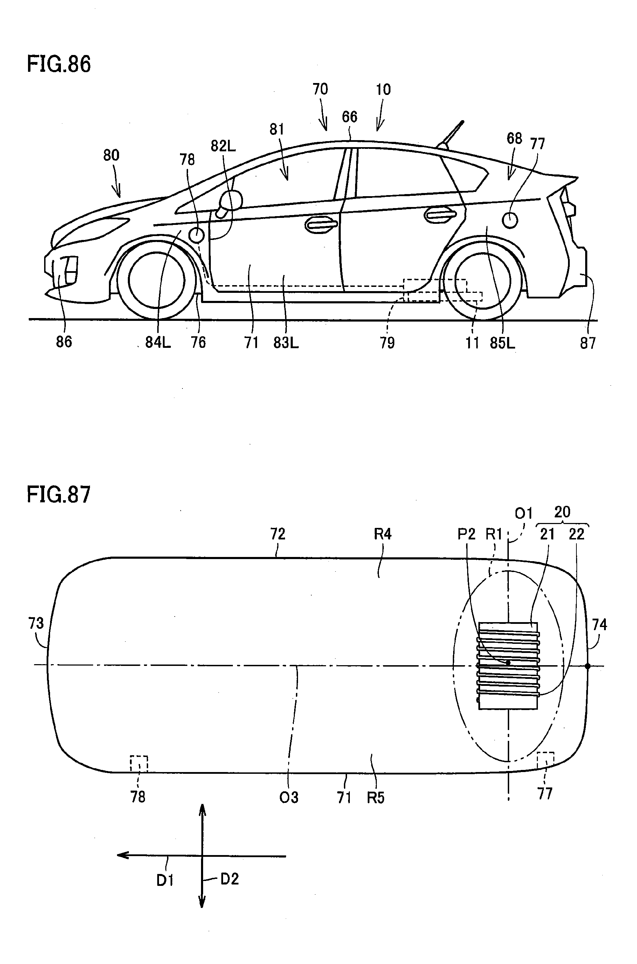

With reference to Fig. 86 and Fig. 87, the following describes an electrically powered vehicle 10 according to a nineteenth embodiment. It is to be noted that in the configurations shown in Fig. 86 and Fig. 87, configurations the same as or corresponding to the configurations shown in Fig. 1 to Fig. 85 are given the same reference characters and may not be described repeatedly.

Fig. 86 is a left side view of electrically powered vehicle 10 according to the nineteenth embodiment. As shown in Fig. 86, refueling portion 77 and charging portion 78 are provided in left side surface 71 of electrically powered vehicle 10. Refueling portion 77 is provided at rear fender 85L and charging portion 78 is provided at front fender 84L. Accordingly, boarding opening 82L is disposed between refueling portion 77 and charging portion 78.

Power reception unit 20 is disposed to be displaced to right region R4 relative to central line 03. Coil center P2 of secondary coil 22 is disposed in right region R4.

On the other hand, both refueling portion 77 and charging portion 78 are disposed in left region R5, and the electromagnetic field having high strength is suppressed from reaching refueling portion 77 and charging portion 78.

Power reception unit 20 is provided at a position close to rear surface 74 relative to front surface 73, and charging portion 78 is provided at a position close to front surface 73 relative to rear surface 74. Accordingly, the electromagnetic field having high strength is suppressed from reaching charging portion 78.

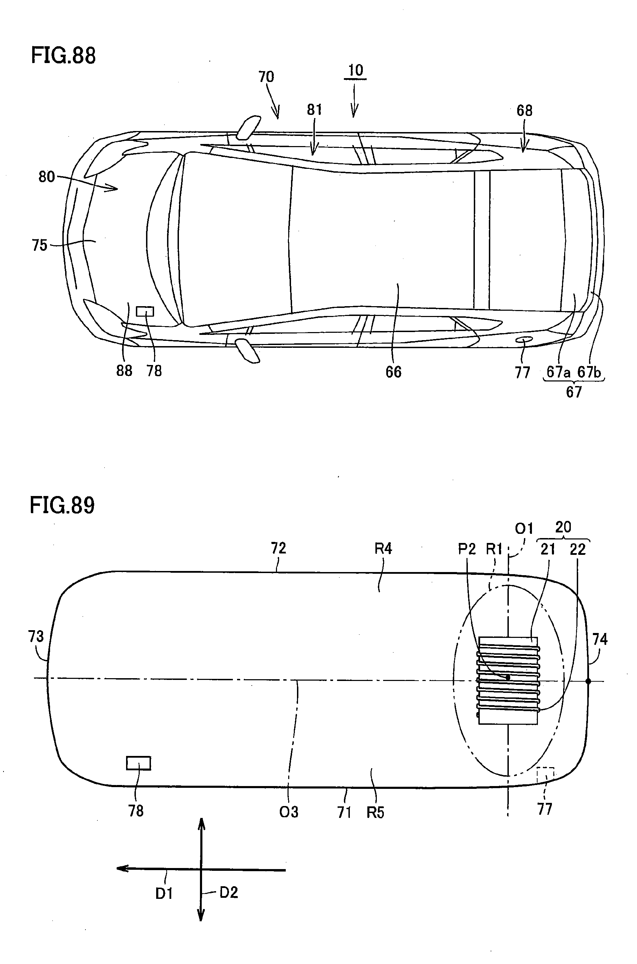

With reference to Fig. 88 and Fig. 89, the following describes a first modification of electrically powered vehicle 10 according to the nineteenth embodiment. Fig. 88 is a plan view of electrically powered vehicle 10. As shown in Fig. 88, charging portion 78 is provided in upper surface 75 of electrically powered vehicle 10. Accordingly, the electromagnetic field formed around power reception unit 20 disposed at the bottom surface 76 side can be suppressed from reaching charging portion 78.

Specifically, charging portion 78 is provided at engine roof 88. Charging portion 78 is disposed closest to left side surface 71 among left side surface 71, right side surface 72, and front surface 73. It is to be noted that refueling portion 77 is provided in left side surface 71 at rear fender 85L. Accordingly, boarding opening 82L is disposed between refueling portion 77 and charging portion 78.

(Twentieth Embodiment)

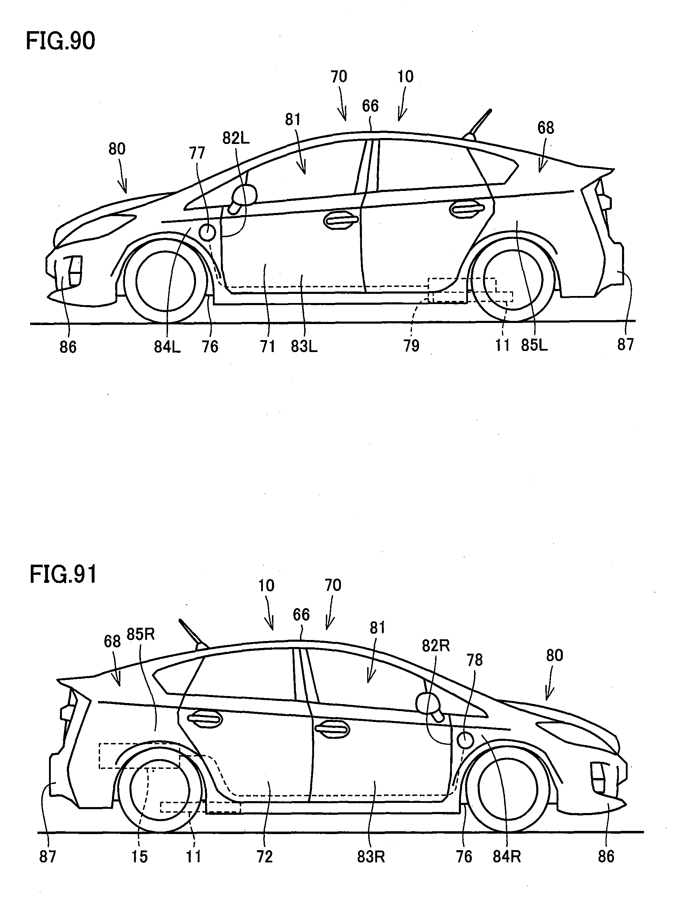

With reference to Fig. 90 to Fig. 93, the following describes an electrically powered vehicle 10 according to a twentieth embodiment. It is to be noted that in the configurations shown in Fig. 90 to Fig. 93, configurations the same as or corresponding to the configurations shown in Fig. 1 to Fig. 89 are given the same reference characters and may not be described repeatedly.
Fig. 90 is a left side view of electrically powered vehicle 10 according to the twentieth embodiment. As shown in Fig. 90, refueling portion 77 is provided in left side surface 71. Refueling portion 77 is provided at the front side relative to boarding opening 82L, and refueling portion 77 is provided at front fender 84L. Fig. 91 is a right side view of electrically powered vehicle 10. As shown in Fig. 91, charging portion 78 is provided in right side surface 72. Charging portion 78 is disposed at the front side relative to boarding opening 82R in travelling direction D1, and charging portion 78 is provided at front fender 84R.

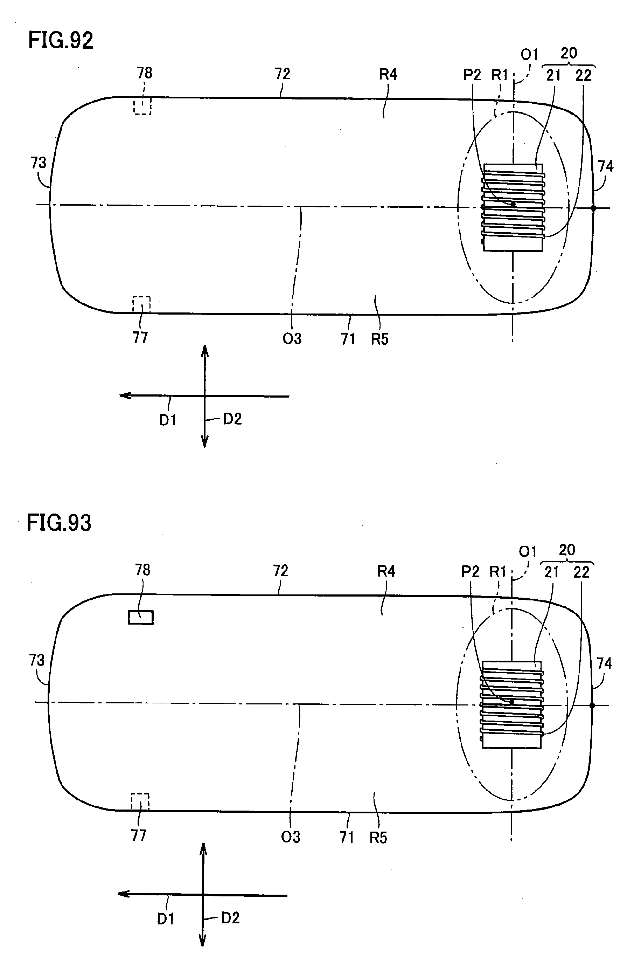

Fig. 92 is a plan view schematically showing mounting positions of power reception unit 20, refueling portion 77, and charging portion 78. As shown in Fig. 92, power reception unit 20 is disposed to be displaced to right region R4 relative to central line 03.
Accordingly, coil center P2 of secondary coil 22 is disposed in right region R4. The volume of secondary coil 22 in right region R4 is larger than the volume of secondary coil 22 in left region R5.
On the other hand, since refueling portion 77 is disposed in left region R5, the electromagnetic field having high strength can be suppressed from reaching refueling portion 77.
Charging portion 78 is provided at a position close to front surface 73 relative to rear surface 74. Power reception unit 20 is provided at a position close to rear surface 74 relative to front surface 73. Accordingly, the electromagnetic field having high strength is suppressed from reaching charging portion 78.
Fig. 93 is a plan view schematically showing a first modification of electrically powered vehicle 10 according to the twentieth embodiment. In the example shown in Fig. 93, charging portion 78 is provided in upper surface 75 of electrically powered vehicle 10. On the other hand, power reception unit 20 is disposed at the bottom surface 76 side, so that the electromagnetic field having high strength is suppressed from reaching charging portion 78.
As described above, in the present embodiment, power reception unit 20 is disposed to be displaced to the right region R4 side relative to central line 03, and refueling portion 77 is disposed in left region R5.

(Twenty-First Embodiment)

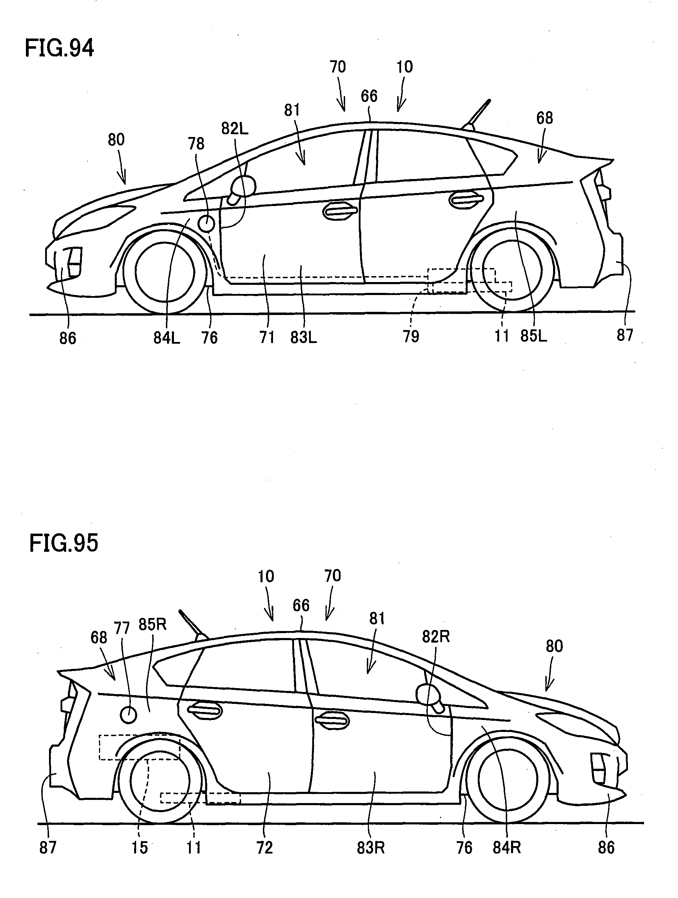

With reference to Fig. 94 to Fig. 97, the following describes an electrically powered vehicle 10 according to a twenty-first embodiment. It is to be noted that in the configurations shown in Fig. 94 to Fig. 97, configurations the same as or corresponding to the configurations shown in Fig. 1 to Fig. 93 are given the same reference characters and will not be described repeatedly.
Fig. 94 is a left side view of electrically powered vehicle 10 according to the twenty-first embodiment. As shown in Fig. 94, charging portion 78 is provided in left side surface 71. Charging portion 78 is disposed at the front side relative to boarding opening 82L in travelling direction D1, and charging portion 78 is provided at front fender 84L.
Fig. 95 is a right side view of electrically powered vehicle 10. As shown in Fig. 95, refueling portion 77 is provided in right side surface 72 of electrically powered vehicle 10. Refueling portion 77 is disposed at the rear side relative to boarding opening 82R in traveling direction D1, and refueling portion 77 is provided in rear fender 85R.

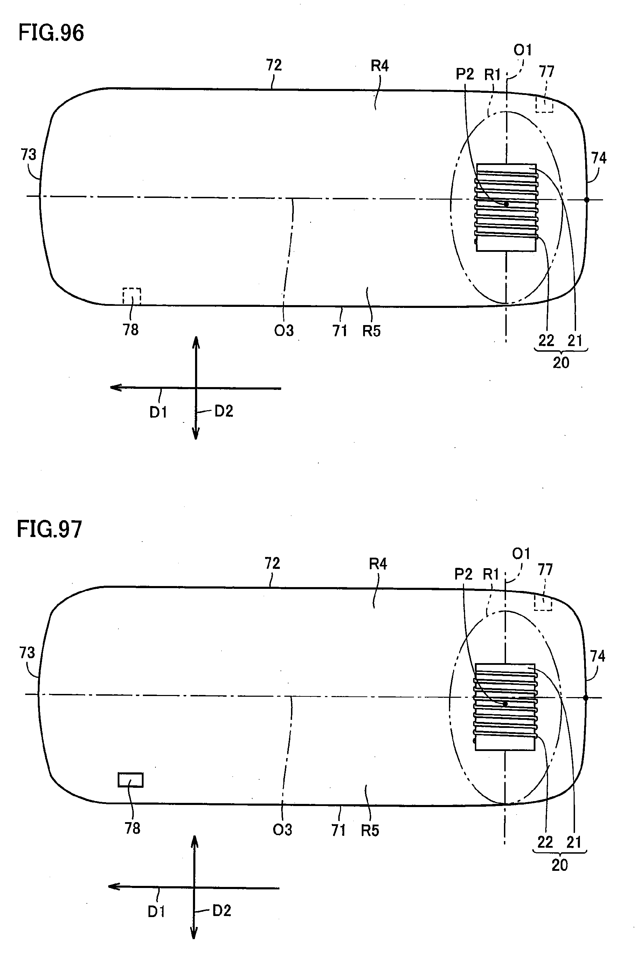

Fig. 96 is a plan view schematically showing mounting positions of power reception unit 20, refueling portion 77, and charging portion 78. As shown in Fig. 96, power reception unit 20 is provided at a position displaced to the left region R5 side relative to central line 03.
It is to be noted that secondary coil 22 is disposed such that winding axis O1 passes through left side surface 71 and right side surface 72. Then, coil center P2 of secondary coil 22 is disposed in left region R5.
Thus, power reception unit 20 is disposed at the left region R5 side, whereas refueling portion 77 is provided in right region R4. Accordingly, the electromagnetic field having high strength is suppressed from reaching refueling portion 77.
Charging portion 78 is provided at a position close to front surface 73 relative to rear surface 74. On the other hand, power reception unit 20 is provided at a position close to rear surface 74 relative to front surface 73. Accordingly, the electromagnetic field having high strength is suppressed from reaching charging portion 78.
Fig. 97 is a plan view schematically showing a first modification of the twenty-first embodiment. As shown in Fig. 97, charging portion 78 is provided in upper surface 75 of electrically powered vehicle 10. Charging portion 78 is provided at engine roof 88. Charging portion 78 is disposed closest to left side surface 71 among left side surface 71, right side surface 72, and front surface 73. Accordingly, the electromagnetic field having high strength can be suppressed from reaching charging portion 78.

(Twenty-Second Embodiment)

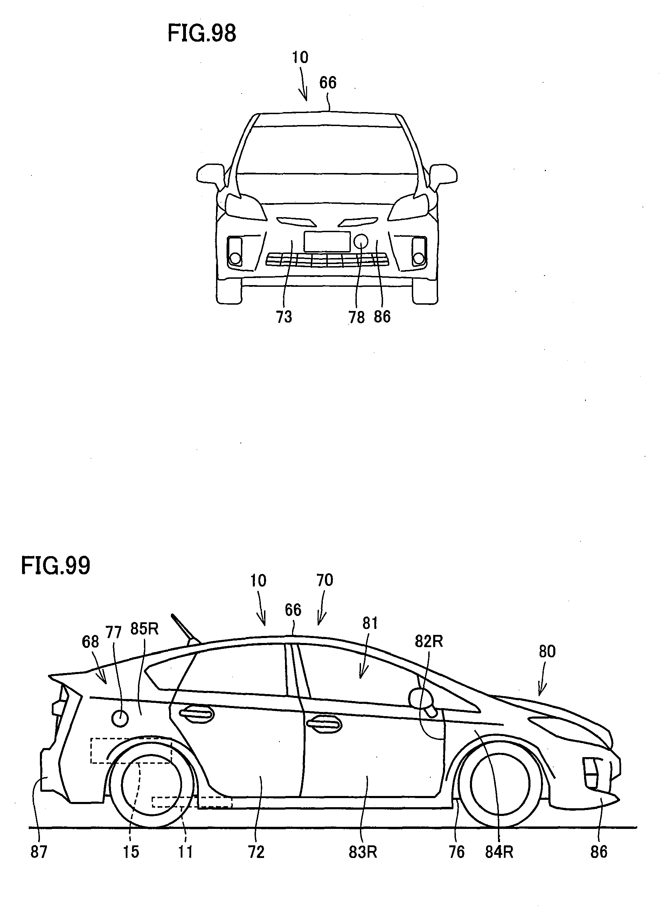

With reference to Fig. 98 to Fig. 101, the following describes an electrically powered vehicle 10 according to a twenty-second embodiment. It is to be noted that in the configurations shown in Fig. 98 to Fig. 101, configurations the same as or corresponding to the configurations shown in Fig. 1 to Fig. 97 are given the same reference characters and may not be described repeatedly.

Fig. 98 is a front view of electrically powered vehicle 10 according to the twenty-second embodiment. As shown in Fig. 98, charging portion 78 is provided in front surface 73 of electrically powered vehicle 10. Fig. 99 is a right side view of electrically powered vehicle 10. As shown in Fig. 99, refueling portion 77 is provided in right side surface 72 at rear fender 85L.

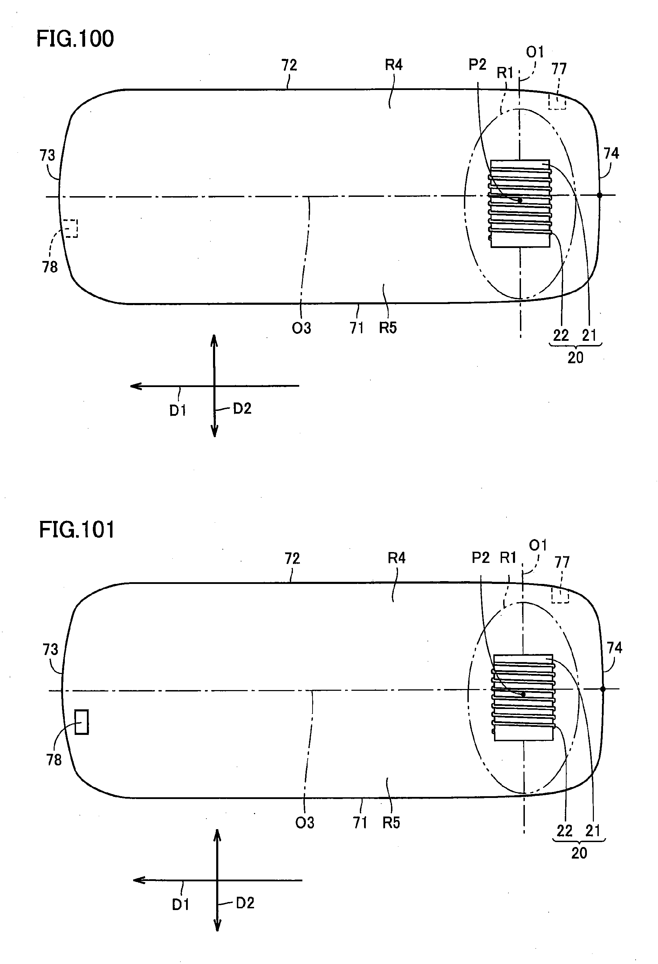

Fig. 100 is a plan view schematically showing mounting positions of power reception unit 20, refueling portion 77, and charging portion 78. As shown in Fig. 100, power reception unit 20 is disposed to be displaced to left region R5 relative to central line 03. Accordingly, coil center P2 of secondary coil 22 is disposed in left region R5. Here, since refueling portion 77 is disposed in right region R4, the electromagnetic field having high strength is suppressed from reaching refueling portion 77.

Fig. 101 is a plan view schematically showing a modification of the twenty-second embodiment. In the example shown in Fig. 101, charging portion 78 is provided in upper surface 75 of electrically powered vehicle 10. Specifically, charging portion 78 is provided at engine roof 88.

Charging portion 78 is disposed closest to front surface 73 among left side surface 71, right side surface 72, and front surface 73. On the other hand, charging portion 78 is disposed to be displaced to left region R5 relative to central line 03.

It has been illustrated that electrically powered vehicle 10 according to each of the first to twenty-second embodiments is a vehicle having both refueling portion 77 and charging portion 78, but electrically powered vehicle 10 may include one of refueling portion 77 and charging portion 78. In other words, the present invention is also applicable to an electrically powered vehicle 10 having no refueling portion 77 or an electrically powered vehicle 10 having no charging portion 78.

(Twenty-Third Embodiment)

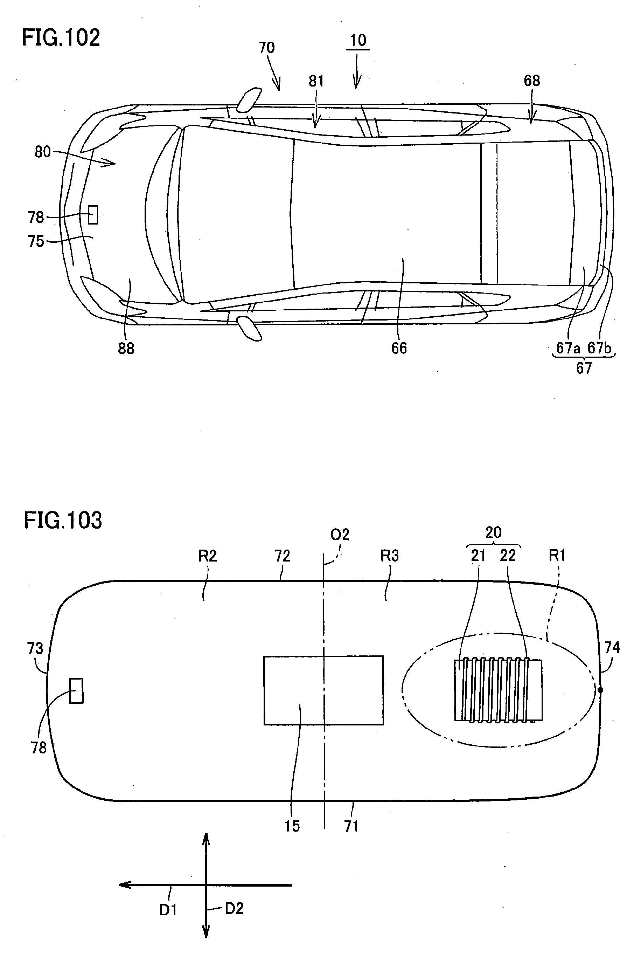

With reference to Fig. 102 and Fig. 103, the following describes an electrically powered vehicle 10 according to a twenty-third embodiment. It is to be noted that in the configurations shown in Fig. 102 and Fig. 103, configurations the same as or corresponding to the configurations shown in Fig. 1 to Fig. 101 are given the same reference characters and may not be described repeatedly. It is to be noted that electrically powered vehicle 10 according to the twenty-third embodiment is an electric vehicle and includes no refueling portion.

Fig. 102 is a plan view showing electrically powered vehicle 10 according to the twenty-third embodiment. As shown in Fig. 102, electrically powered vehicle 10 has charging portion 78, and charging portion 78 is provided at engine roof 88. Fig. 103 is a plan view schematically showing mounting positions of power reception unit 20 and charging portion 78 of electrically powered vehicle 10 shown in Fig. 102.

As shown in Fig. 103, power reception unit 20 is provided in rear region R3, and charging portion 78 is provided in front region R2. Accordingly, an electromagnetic field formed around power reception unit 20 can be suppressed from reaching charging portion 78. Further, charging portion 78 is provided in upper surface 75 of electrically powered vehicle 10 and power reception unit 20 is provided at the bottom surface 76 side of electrically powered vehicle 10, so that the electromagnetic field having high strength is suppressed from reaching charging portion 78.

Further, battery 15 is provided in bottom surface 76 of electrically powered vehicle 10. When viewing battery 15, charging portion 78, and power reception unit 20 from above electrically powered vehicle 10 in plan, battery 15 is disposed between charging portion 78 and power reception unit 20. Accordingly, an electromagnetic field having high strength is suppressed from reaching charging portion 78. Further, by disposing battery 15 between charging portion 78 and power reception unit 20, a distance between charging portion 78 and battery 15 can be made short, thereby providing a short length of the interconnection that connects charging portion 78 and battery 15 to each other.

It has been illustrated that charging portion 78 is provided in upper surface 75, but charging portion 78 may be provided in front region R2 at any one of left side surface 71, right side surface 72, and front surface 73.

Further, it has been illustrated that power reception unit 20 is disposed at a position displaced to the rear region R3 side relative to central line 02, but power reception unit 20 may be disposed at a position displaced to the front region R2 side relative to central line 02. In this case, charging portion 78 is provided in rear region R3.

Further, when power reception unit 20 is disposed at a position displaced to right region R4 relative to central line 03, charging portion 78 is provided in left region R5. Further, when power reception unit 20 is provided at a position displaced to left region R5 relative to central line 03, charging portion 78 is provided in right region R4.

(Twenty-Fourth Embodiment)

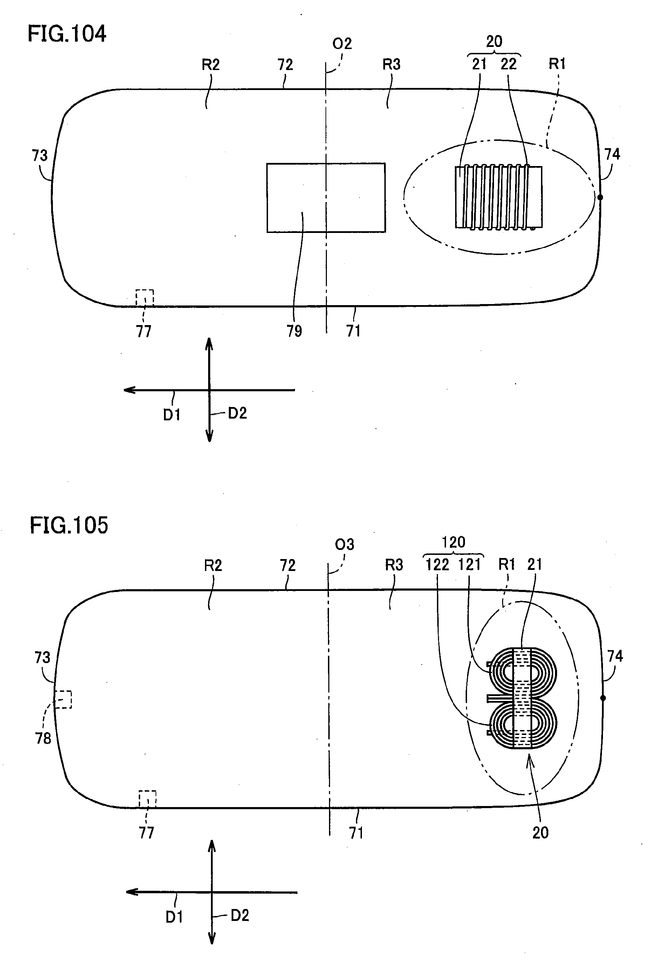

With reference to Fig. 104, the following describes an electrically powered vehicle 10 according to a twenty-fourth embodiment. In the configurations shown in Fig. 104, configurations the same as or corresponding to the configurations shown in Fig. 1 to Fig. 103 are given the same reference characters and may not be described repeatedly. It is to be noted that charging portion 78 is not provided in the example shown in Fig. 104.

Fig. 104 is a plan view schematically showing an electrically powered vehicle 10 according to the twenty-fourth embodiment. As shown in Fig. 104, power reception unit 20 is provided at a position displaced to rear region R3 relative to central line 02. Refueling portion 77 is provided in front region R2.

Thus, the electromagnetic field formed around power reception unit 20 is suppressed from reaching refueling portion 77.

Fuel tank 79 is provided at the bottom surface 76 side of electrically powered vehicle 10. When viewing fuel tank 79, refueling portion 77, and power reception unit 20 from above electrically powered vehicle 10 in plan, fuel tank 79 is provided between power reception unit 20 and refueling portion 77. Accordingly, an electromagnetic field having high strength is suppressed from reaching refueling portion 77.

In the twenty-fourth embodiment, it has been illustrated that power reception unit 20 is provided in rear region R3, but power reception unit 20 may be provided in front region R2. In this case, refueling portion 77 is provided in rear region R3.

It is to be noted that power reception unit 20 may be disposed at a position displaced to right region R4 relative to central line 03. In this case, refueling portion 77 is provided at a position displaced to left region R5 relative to central line 03.

Further, when power reception unit 20 is disposed at a position displaced to left region R5 relative to central line 03, refueling portion 77 is provided at a position displaced to right region R4 relative to central line 03.

In the first to twenty-fourth embodiments described above, it has been illustrated that power reception unit 20 is configured such that secondary coil 22 is wound around ferrite core 21 having a rectangular shape, but various types of examples can be employed as power reception unit 20.

Therefore, the following describes modifications of the power reception unit and the power transmission unit. At the time of filing, it has been expected that power reception units and power transmission units described below are mounted at the mounting positions described in the first to twenty-fourth embodiments.

(Twenty-Fifth Embodiment)

With reference to Fig. 105 to Fig. 108, an electrically powered vehicle 10 will be described. It is to be noted that in the configurations shown in Fig. 105 to Fig. 108, configurations the same as or corresponding to the configurations shown in Fig. 1 to Fig. 107 are given the same reference characters and may not be described repeatedly.

Fig. 105 is a plan view schematically showing electrically powered vehicle 10 according to the twenty-fifth embodiment. In the example shown in Fig. 105, power reception unit 20 is provided in rear region R3 of electrically powered vehicle 10.

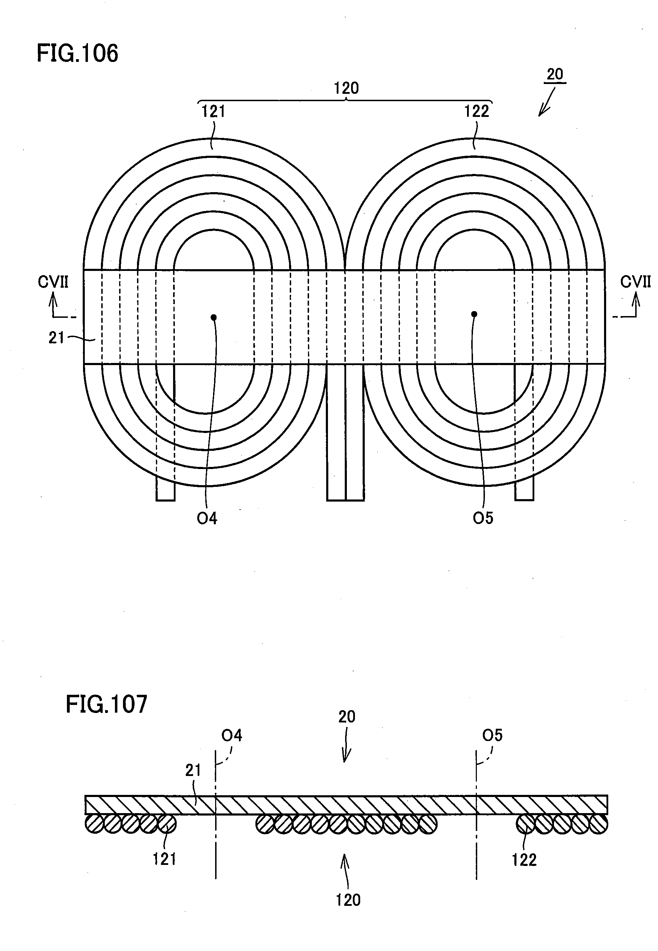

Fig. 106 is a plan view showing power reception unit 20. Fig. 107 is a cross sectional view taken along a CVII-CVII line shown in Fig. 106. As shown in Fig. 106 and Fig. 107, power reception unit 20 includes: a ferrite core 21; and a coil unit 120 provided on the lower surface of this ferrite core 21.

Ferrite core 21 is formed to have a rectangular shape, and is disposed to be long in width direction D2 as shown in Fig. 105.

In Fig. 106 and Fig. 107, coil unit 120 includes coils 121 and 122 arranged in the longitudinal direction of ferrite core 21.

Coil 121 is formed by winding a litz wire (coil wire) around winding axis 04, and the litz wire is wound in a plane passing through the lower surface of ferrite core 21.

Coil 122 is formed by winding a litz wire (coil wire) around winding axis O5, and the litz wire is wound in an imaginary plane passing through the lower surface of ferrite core 21.

It is to be noted that each of coil 121 and coil 122 is wound to provide a hollow and ferrite core 21 is exposed through the hollow portion of each of coil 121 and coil 122.

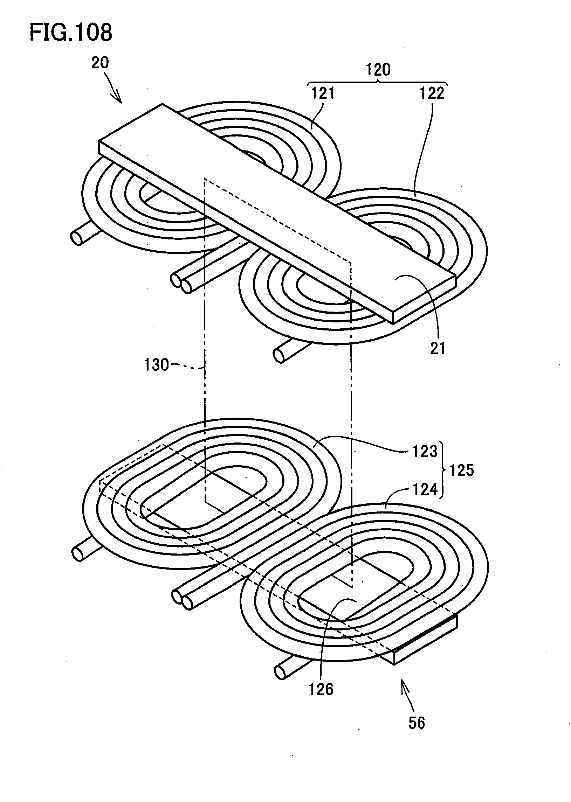

Fig. 108 is a perspective view showing power reception unit 20 and power transmission unit 56. As shown in Fig. 108, power transmission unit 56 is formed in the same manner as power reception unit 20.

Power transmission unit 56 includes: a core ferrite core 126 formed to have a plate-like shape; and a coil unit 125 disposed on the upper surface of this core ferrite core 126.

Core ferrite core 126 is also formed to have a rectangular shape. Coil unit 125 includes coils 123 and 124 arranged in the longitudinal direction of core ferrite core 126.

Coil 123 is formed by winding a litz wire (coil wire) to surround the winding axis, and the litz wire is wound in a plane passing through the upper surface of core ferrite core 126. Coil 124 is formed by winding a litz wire to surround the winding axis, and this litz wire is also wound in a plane passing through the upper surface of core ferrite core 126.

Each of coil 123 and coil 124 is wound to provide a hollow and core ferrite core 126 is exposed through the hollow portion of each of coil 123 and coil 124.

When electric power is transferred between power reception unit 20 and power transmission unit 56 thus formed, a magnetic path is formed between power reception unit 20 and power transmission unit 56.

Magnetic path 130 passes through the hollow portion of coil 123, the air gap, the hollow portion of coil 121, the portion of ferrite core 21 exposed through the hollow portion of coil 121, and the portion of ferrite core 21 between coil 121 and coil 122. Further, magnetic path 130 passes through the portion of ferrite core 21 exposed through the hollow portion of coil 122, the hollow portion of coil 122, the air gap, and the hollow portion of coil 124. Further, magnetic path 130 passes through the portion of ferrite core 126 exposed through the hollow portion of coil 124, the portion of ferrite core 126 between coil 123 and coil 124, and the portion of ferrite core 126 exposed through the hollow portion of coil 123.

With magnetic path 130 being thus formed between power reception unit 20 and power transmission unit 56, power transfer efficiency is improved between power reception unit 20 and power transmission unit 56.

Here, as shown in Fig. 105, when power reception unit 20 is used to transfer electric power, the electromagnetic field having high strength (region R1) is widely distributed in the longitudinal direction of ferrite core 21 as compared with that in the width direction of ferrite core 21.

Power reception unit 20 is disposed such that the longitudinal direction of ferrite core 21 corresponds to width direction D2 of electrically powered vehicle 10, and refueling portion 77 and charging portion 78 are provided in front region R2. Accordingly, the electromagnetic field having high strength can be suppressed from reaching.

In the example according to the present embodiment, it has been illustrated that power reception unit 20 is disposed such that the longitudinal direction of ferrite core 21 corresponds to width direction D2, but may be disposed such that the longitudinal direction of ferrite core 21 corresponds to traveling direction D 1. By disposing power reception unit 20 in this way, region R1 is widely distributed in traveling direction D1 as compared with that in width direction D2.

(Twenty-Sixth Embodiment)

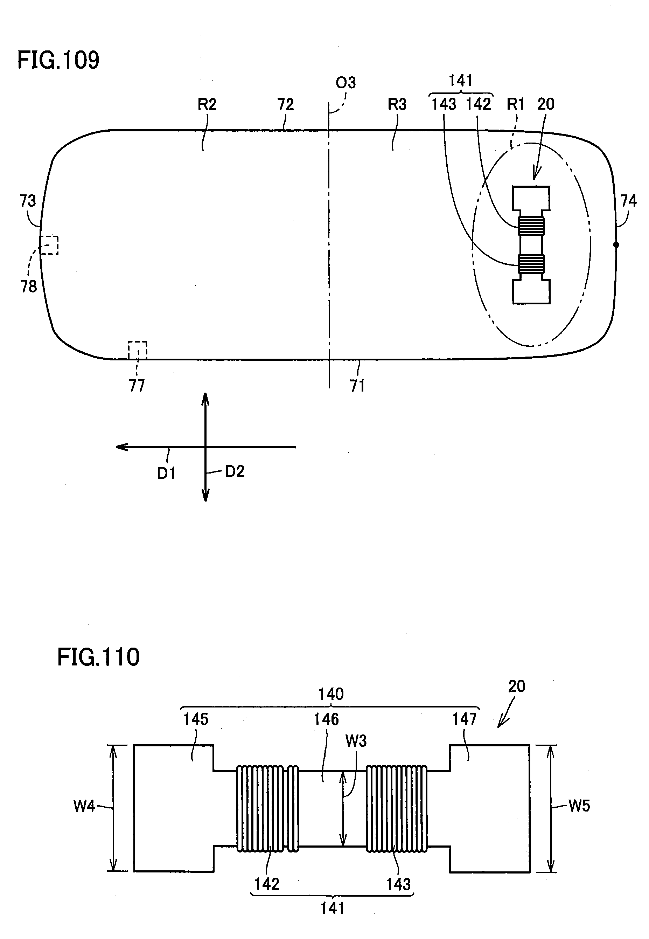

With reference to Fig. 109 to Fig. 115, the following describes an electrically powered vehicle 10 according to the present embodiment. In the configurations shown in Fig. 109 to Fig. 115, configurations the same as or corresponding to the configurations shown in Fig. 1 to Fig. 108 are given the same reference characters and may not be described repeatedly.

Fig. 109 is a plan view schematically showing electrically powered vehicle 10 according to the twenty-sixth embodiment. As shown in the example illustrated in Fig. 109, power reception unit 20 is provided in rear region R3. On the other hand, refueling portion 77 and charging portion 78 are provided in front region R2.

Fig. 110 is a plan view schematically showing power reception unit 20. As shown in Fig. 110, power reception unit 20 includes: a ferrite core 140; and a coil unit 141 wound around ferrite core 140.

Ferrite core 140 includes: a stem portion 146; a wide portion 145 formed at one end portion of stem portion 146; and a wide portion 147 provided at the other end portion of stem portion 146. Coil unit 141 is formed to have a plate-like shape. Width W4 of wide portion 145 and width W5 of wide portion 147 are larger than width W3 of stem portion 146.

It is to be noted that as power reception unit 20, an aluminum plate may be employed instead of ferrite core 140.

Coil unit 141 includes coils 142 and 143 wound around stem portion 146. Coils 142 and 143 are provided with a space interposed therebetween in the longitudinal direction of stem portion 146.

Here, currents are supplied to coil 142 and coil 143, respectively. Accordingly, the direction in which the current flows in coil 142 and the direction in which the current flows in coil 143 can be separately controlled.

It is to be noted that power reception unit 20 according to the present embodiment can receive electric power not only from the same type of power transmission unit 56 but also a different type of power transmission unit 56.

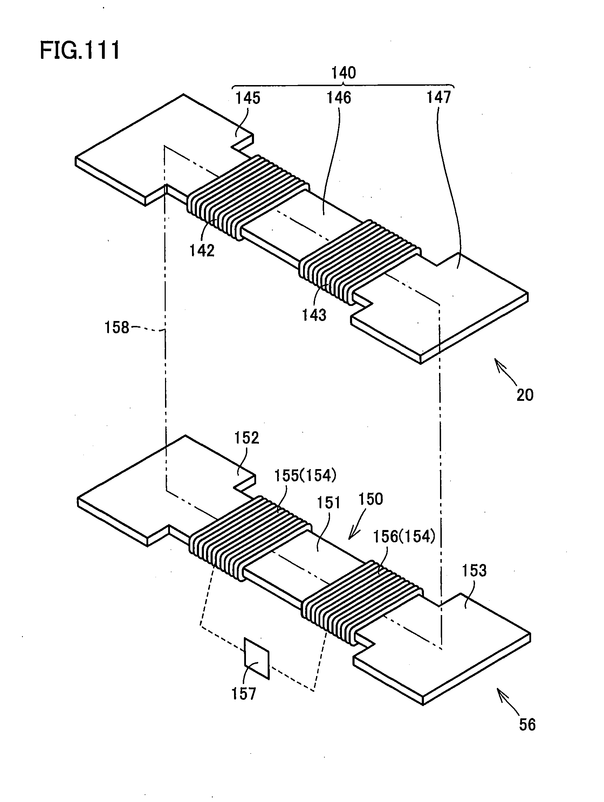

Now, with reference to Fig. 111, the following first describes a case where electric power is received from the same type of power transmission unit 56 as power reception unit 20.

Fig. 111 is a perspective view schematically showing power reception unit 20 and power transmission unit 56. As shown in Fig. 111, power transmission unit 56 includes: a ferrite core 150; a coil unit 154 provided on ferrite core 150; and a control unit 157.

Ferrite core 150 includes: a stem portion 151; a wide portion 152 provided at one end portion of stem portion 151; and a wide portion 153 provided at the other end portion of stem portion 151. It is to be noted that the widths of wide portion 152 and wide portion 153 are larger than the width of stem portion 151.

It is to be noted that in power transmission unit 56, an aluminum plate may be employed instead of ferrite core 150.

Coil unit 154 includes: a coil 155 provided on stem portion 151; and a coil 156 provided on stem portion 151 with a space interposed between coil 156 and coil 155.

Here, the direction in which the current flows in coil 155 and the direction in which the current flows in coil 156 can be separately controlled.

Control unit 157 can switch (control) the direction of current flow in coil 155 and also can switch (control) the direction of current flow in coil 156.

The following describes transfer of electric power between power reception unit 20 and power transmission unit 56 thus formed. Here, in Fig. 111, currents are caused to flow in coil 155 and coil 156 in the same direction. Accordingly, a magnetic path 158 is formed. Magnetic path 158 passes through wide portion 152, the inside of coil 155, stem portion 151, the inside of coil 156, wide portion 153, the air gap, wide portion 147, the inside of coil 143, stem portion 146, the inside of coil 142, wide portion 145, and the air gap. Accordingly, currents flow in coil 142 and coil 143. In this way, power reception unit 20 can receive electric power from the same type of power transmission unit 56 as power reception unit 20.

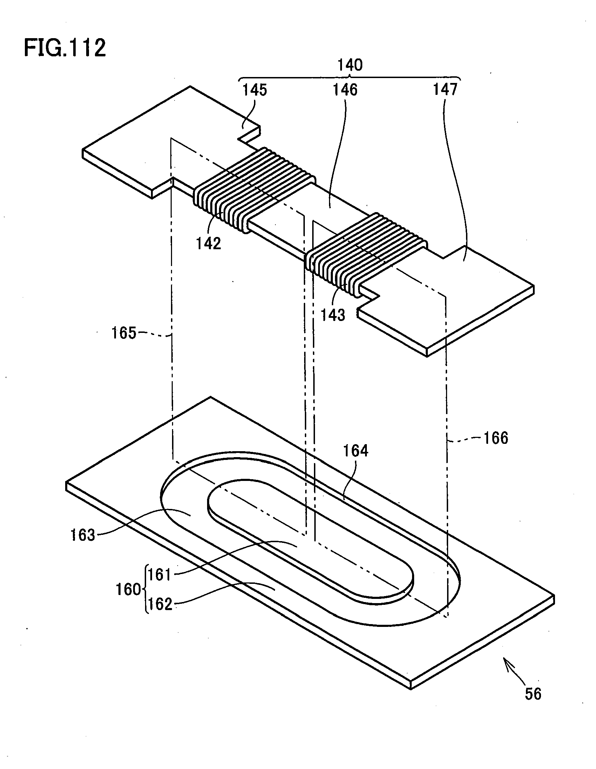

With reference to Fig. 112, the following describes a mechanism in which power reception unit 20 receives electric power from power transmission unit 56 of a type different from power reception unit 20.

In Fig. 112, power transmission unit 56 includes a ferrite core 160 and a coil 163 provided in ferrite core 160.

Ferrite core 160 includes: a base portion 162 having a plate-like shape and having a groove portion 164 formed at its central portion; and a stem portion 161 formed in groove portion 164. Coil 163 is disposed in groove portion 164 to surround stem portion 161.

The following describes a mechanism of transferring electric power between power reception unit 20 and power transmission unit 56 thus formed.

Here, when current flows in coil 163, magnetic path 165 and magnetic path 166 are formed. Magnetic path 165 passes through, for example, stem portion 161, the air gap, stem portion 146, the inside of coil 142, wide portion 145, the air gap, and base portion 162.

Magnetic path 166 passes through stem portion 161, the air gap, stem portion 146, the inside of coil 143, wide portion 147, the air gap, and base portion 162.

Then, currents flow in coil 142 and coil 143. On this occasion, the direction in which the current flow in coil 143 is opposite to the direction in which the current flows in coil 142. In this way, power reception unit 20 receives electric power from power transmission unit 56.

Here, when power reception unit 20 described above receives electric power, an electromagnetic field having high strength is widely distributed in the direction in which the winding axis of each of coil 142 and coil 143 extends.

In Fig. 109, power reception unit 20 is disposed such that the winding axis of each of coil 142 and coil 143 extends in width direction D2.

On the other hand, refueling portion 77 and charging portion 78 are provided in front region R2, whereby the electromagnetic field formed around power reception unit 20 can be suppressed from reaching refueling portion 77 and charging portion 78.

It is to be noted that in the example shown in Fig. 109, power reception unit 20 is disposed such that the winding axis of each of coil 142 and coil 143 corresponds to width direction D2, but power reception unit 20 may be disposed such that the winding axis of each of coil 142 and coil 143 corresponds to traveling direction D 1.

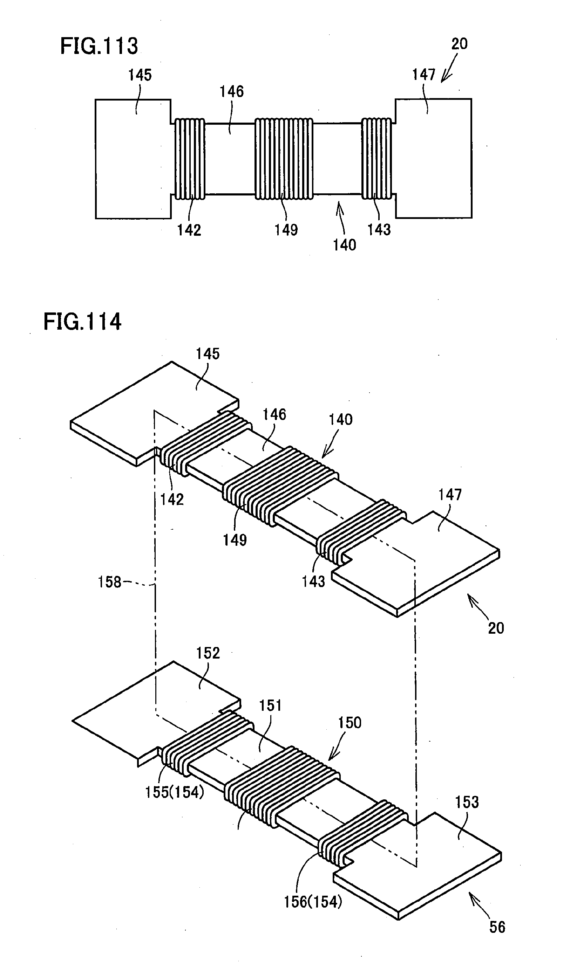

It is to be noted that Fig. 113 is a plan view showing a modification of power reception unit 20. As shown in Fig. 113, power reception unit 20 further includes a middle coil 149 provided between coil 142 and coil 143. Also in the example shown in Fig. 113, electric power can be received from various types of power transmission units 56. It is to be noted that Fig. 114 is a perspective view showing that electric power is being transferred between power reception unit 20 shown in Fig. 113 and power transmission unit 56 of the same type as power reception unit 20.

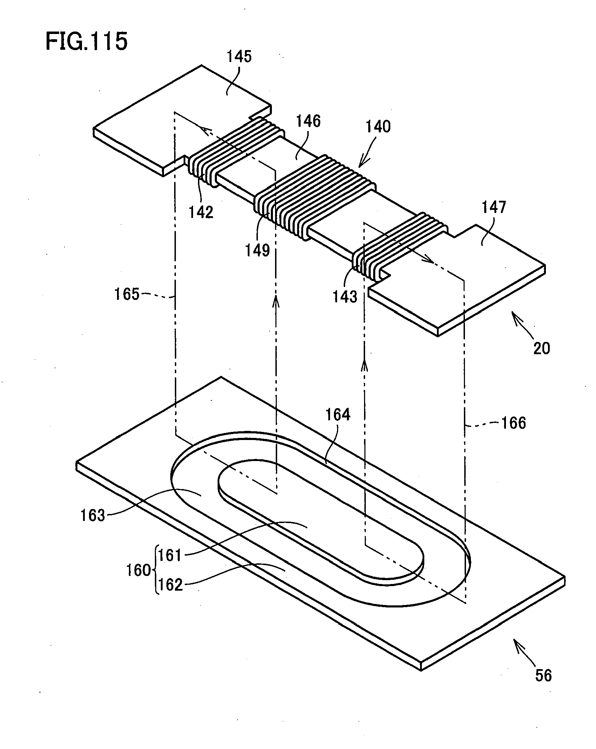

Fig. 115 is a perspective view showing that electric power is being transferred between power reception unit 20 shown in Fig. 113 and power transmission unit 56 of a type different from power reception unit 20.

Thus, power reception unit 20 shown in Fig. 113 also can receive electric power from various types of power transmission units 56.

(Twenty-Seventh Embodiment)

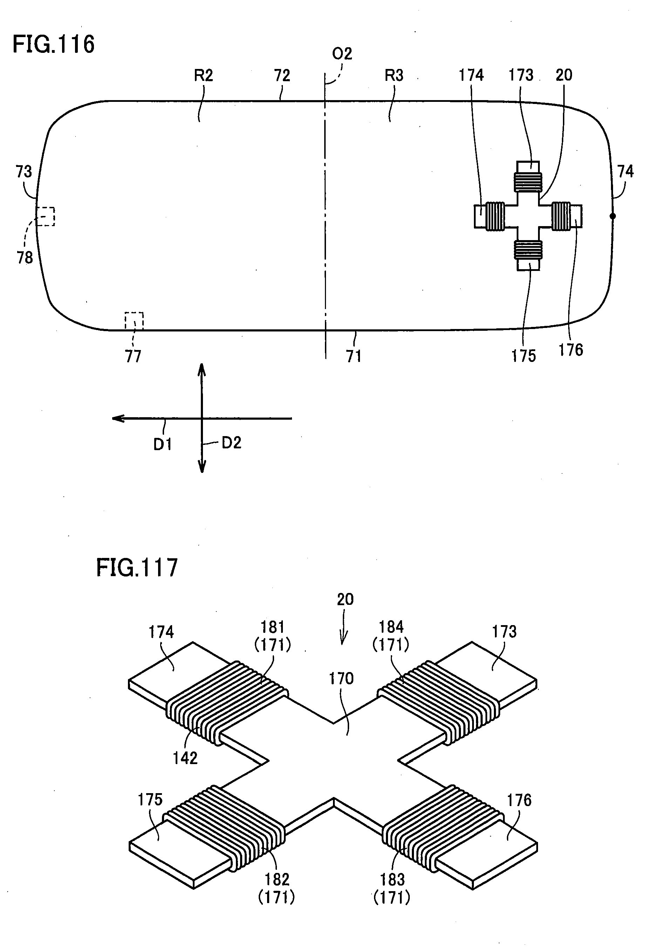

With reference to Fig. 116 to Fig. 119, the following describes an electrically powered vehicle 10 according to a twenty-seventh embodiment. It is to be noted that in the configurations shown in Fig. 116 to Fig. 119, configurations the same as or corresponding to the configurations shown in Fig. 1 to Fig. 115 are given the same reference characters and may not be described repeatedly.

Fig. 116 is a plan view schematically showing electrically powered vehicle 10 according to the twenty-seventh embodiment. In the example shown in Fig. 116, power reception unit 20 is disposed to be displaced to rear region R3 relative to central line 02. Refueling portion 77 and charging portion 78 are provided in front region R2.

As shown in Fig. 117, power reception unit 20 includes: a ferrite core 170; and a coil unit 171 provided on ferrite core 170.

Ferrite core 170 includes a plurality of core pieces 173, 174, 175, 176. Core pieces 173, 174, 175, 176 has ends connected to one another.

Coil unit 171 includes: a coil 184 wound around core piece 173; a coil 181 wound around core piece 174; a coil 182 wound around core piece 175; and a coil 183 wound around core piece 176. Accordingly, ferrite core 170 has a shape of cross. It is to be noted that ferrite core 170 is formed to have a plate-like shape.

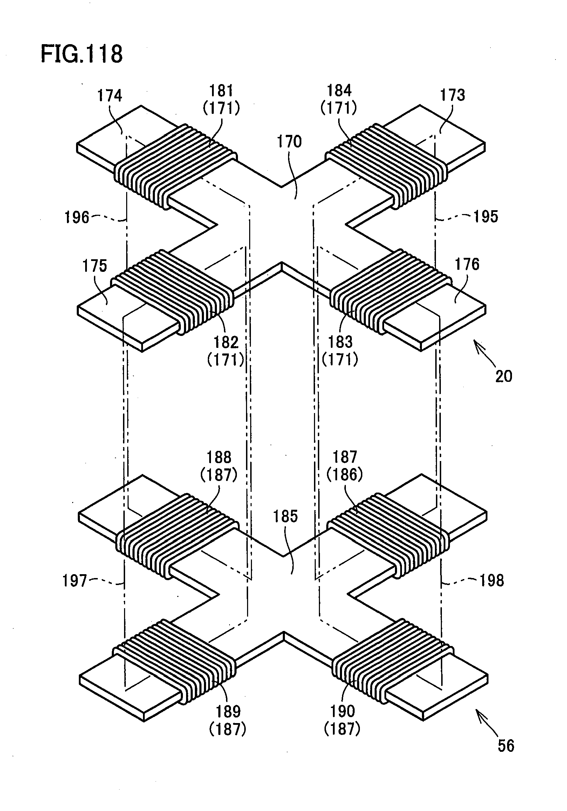

Power reception unit 20 thus formed can also cope with various types of power transmission units. Fig. 118 is a perspective view showing that electric power is being transferred between power reception unit 20 shown in Fig. 117 and power reception unit 20 of the same type as power reception unit 20. As shown in Fig. 118, power transmission unit 56 includes: a ferrite core 185 having a shape of cross; and a coil unit 186 provided on ferrite core 185.

Ferrite core 185 includes a plurality of core piece portions. Coil unit 186 includes coils 187, 188, 189, 190 respectively wound around the core pieces.

When transferring electric power between power transmission unit 56 and power reception unit 20 thus formed, currents flows in coils 187, 188, 189, 190 of power transmission unit 56. Accordingly, for example, in the example shown in Fig. 118, a magnetic path 195 is formed between coil 184 and coil 187. A magnetic path 196 is formed between coil 181 and coil 188. A magnetic path 197 is formed between coil 182 and coil 189. A magnetic path 198 is formed between coil 183 and coil 190.

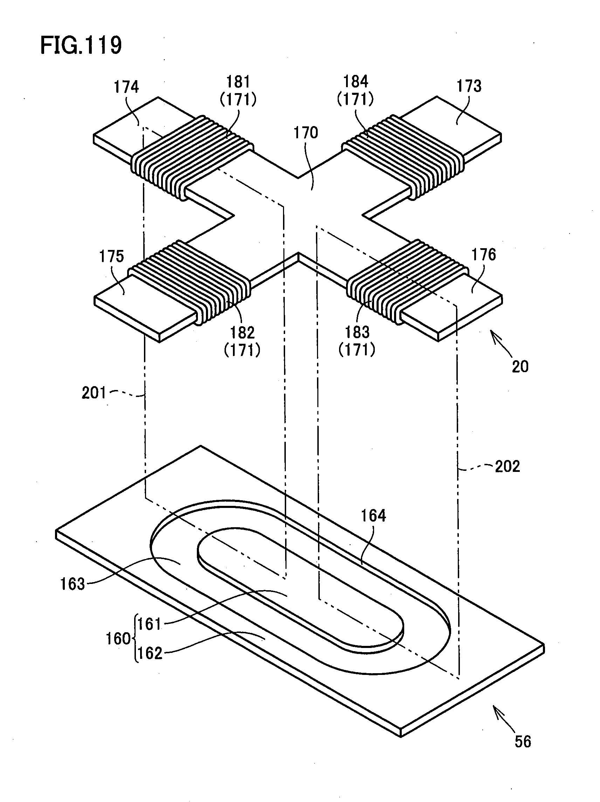

Thus, the plurality of magnetic paths are formed between power reception unit 20 and power transmission unit 56, whereby power reception unit 20 receives electric power from power transmission unit 56. With reference to Fig. 119, the following describes transfer of electric power between power reception unit 20 and power transmission unit 56 of a type different from power reception unit 20.

Fig. 119 is a perspective view showing the transfer of electric power between power reception unit 20 and power transmission unit 56. In Fig. 119, power transmission unit 56 includes a ferrite core 160 and a coil 163.

Base portion 162 is formed to have a plate-like shape and includes: a groove portion 164; and a stem portion 161 formed to project upwardly from the central portion of groove portion 164. Coil 163 is wound around stem portion 161.

When transferring electric power between power transmission unit 56 and power reception unit 20 thus formed, current flows in coil 163 of power transmission unit 56.

Accordingly, magnetic paths 201, 202 are formed between power reception unit 20 and power transmission unit 56. For example, magnetic path 201 passes through stem portion 161, the air gap, the central portion of ferrite core 170, the inside of coil 181, the end portion of core piece 174, the air gap, and ferrite core 160. Magnetic path 202 passes through stem portion 161, the air gap, the central portion of ferrite core 170, the inside of coil 183, core piece 176, the air gap, and ferrite core 160.

With the magnetic paths thus formed between power reception unit 20 and power transmission unit 56, large currents flow in coil 181 and coil 183. Accordingly, power reception unit 20 receives electric power from power transmission unit 56.

Thus, according to power reception unit 20 provided in electrically powered vehicle 10 according to the present embodiment, electric power can be received from various types of power transmission units 56.

Here, as shown in Fig. 116, power reception unit 20 is provided in rear region R3, and refueling portion 77 and charging portion 78 are provided in front region R2. Thus, as shown in Fig. 118 or Fig. 119, even when power reception unit 20 receives electric power, the electromagnetic field formed around power reception unit 20 can be suppressed from reaching refueling portion 77 and charging portion 78.

For example, when electric power is transferred between power reception unit 20 and power transmission unit 56 as shown in Fig. 118, the electromagnetic field having high strength is formed in each of traveling direction D1 and width direction D2 in Fig. 116. Even though the electromagnetic field is thus distributed, the electromagnetic field having high strength can be suppressed from reaching refueling portion 77 and charging portion 78.

Further, when electric power is transferred between power reception unit 20 and power transmission unit 56 as shown in Fig. 119, an electromagnetic field having high strength is formed in traveling direction D1 as compared with that in width direction D2 in Fig. 116. Even in such a case, the electromagnetic field having high strength can be suppressed from reaching refueling portion 77 and charging portion 78.

In the example shown in Fig. 116, it has been illustrated that power reception unit 20 is mounted at the position displaced to rear region R3 relative to central line 02, but power reception unit 20 may be provided in front region R2. In this case, at least one of refueling portion 77 and charging portion 78 is provided in rear region R3.

Further, power reception unit 20 may be disposed at a position displaced to right region R4 relative to central line 03. In this case, at least one of refueling portion 77 and charging portion 78 is provided in left region R5. Moreover, power reception unit 20 may be disposed to be displaced to left region R5 relative to central line 03. In this case, at least one of refueling portion 77 and charging portion 78 may be disposed in right region R4.

(Twenty-Eighth Embodiment)

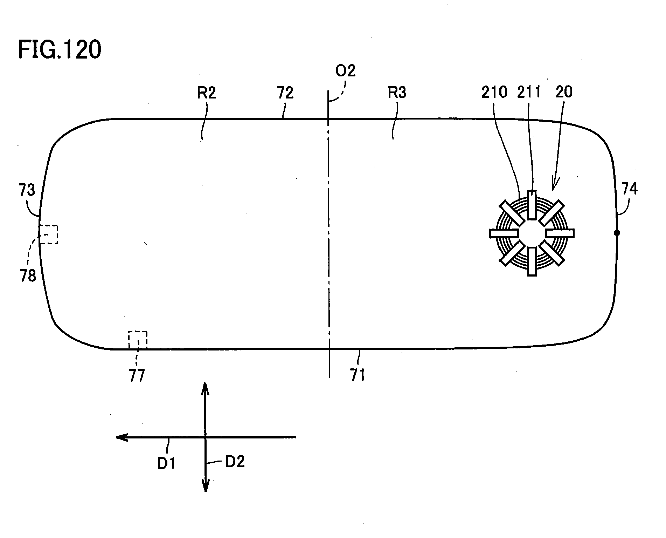

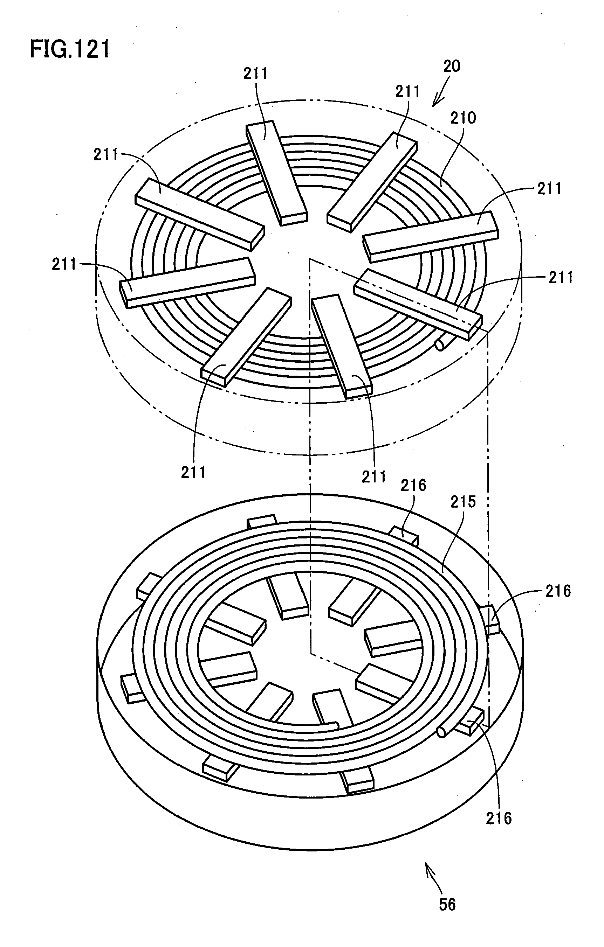

With reference to Fig. 120 and Fig. 121, the following describes an electrically powered vehicle 10 according to a twenty-eighth embodiment. It is to be noted that in the configurations shown in Fig. 120 and Fig. 121, configurations the same as or corresponding to the configurations shown in Fig. 1 to Fig. 119 are given the same reference characters and may not be described repeatedly.

As shown in Fig. 120, power reception unit 20 is provided at a position displaced to rear region R3 relative to central line 02. On the other hand, refueling portion 77 and charging portion 78 are provided in front region R2.

Fig. 121 is a perspective view showing power reception unit 20 included in electrically powered vehicle 10 according to the present embodiment and power transmission unit 56 that transmits electric power to this power reception unit 20. As shown in Fig. 121, power reception unit 20 includes a coil 210 and a plurality of core pieces 211 disposed on this coil 210.

Coil 210 is formed to surround the winding axis extending in the upward/downward direction, and get farther away from the winding axis as it extends from one end toward the other end of coil 210. Specifically, coil 210 is formed to have a spiral shape. A plurality of core pieces 211 are provided in the circumferential direction of coil 210 with a space interposed therebetween. Each of core pieces 211 is formed to have a bar-like shape, and is formed to extend from the inward side to the outward side in the radial direction of coil 210.

Core piece 211 has one end portion disposed in the hollow portion of coil 210, whereas core piece 211 has the other end portion disposed outwardly of coil 210 in the radial direction.

Power transmission unit 56 includes a coil 215 and a plurality of core pieces 216 provided on the lower surface of this coil 215. Coil 215 is formed to surround the center of the winding axis extending in the upward/downward direction, and get farther away from the winding axis as it extends from one end toward the other end of coil 215. Thus, coil 215 is also formed to have a spiral shape.

Core pieces 216 are disposed in the circumferential direction of coil 215 with a space interposed therebetween. Core piece 216 is formed to have a bar-like shape. Core piece 216 has one end portion disposed in the hollow portion of coil 215, whereas core 215 has the other end portion disposed outwardly of coil 215.

When transferring electric power between power reception unit 20 and power transmission unit 56 thus formed, a magnetic path is formed to pass through core piece 211 and core piece 216. Accordingly, current flows in coil 210, whereby power reception unit 20 receives electric power from power transmission unit 56.

In such power reception unit 20 and power transmission unit 56, when power reception unit 20 receives electric power, an electromagnetic field is substantially concentrically distributed with respect to power reception unit 20.

In Fig. 120, power reception unit 20 is provided at a position displaced to rear region R3 relative to central line 02. On the other hand, refueling portion 77 and charging portion 78 are provided in front region R2, so that the electromagnetic field having high strength can be suppressed from reaching refueling portion 77 and charging portion 78.

It is to be noted that in the example shown in Fig. 120, refueling portion 77 and charging portion 78 are disposed in front region R2, but one of refueling portion 77 and charging portion 78 may be disposed in front region R2. Further, power reception unit 20 may be provided at a position displaced to front region R2 relative to central line 02. In this case, at least one of refueling portion 77 and charging portion 78 is provided in rear region R3.

Further, power reception unit 20 may be provided at a position displaced to left region R5 relative to central line 03. In this case, at least one of refueling portion 77 and charging portion 78 is disposed in right region R4. Likewise, power reception unit 20 may be disposed at a position displaced to right region R4 relative to central line 03. In this case, at least one of refueling portion 77 and charging portion 78 is provided in left region R5. It is to be noted that in power reception unit 20 and power transmission unit 56 shown in Fig. 121, core pieces 211 and core pieces 216 are not essential configurations. Moreover, in the present embodiment, in power reception unit 20 and power transmission unit 56, the plurality of core pieces are employed, but the present invention is not limited to this form as the core shape. For example, one ferrite core plate may be employed.

(Twenty-Ninth Embodiment)

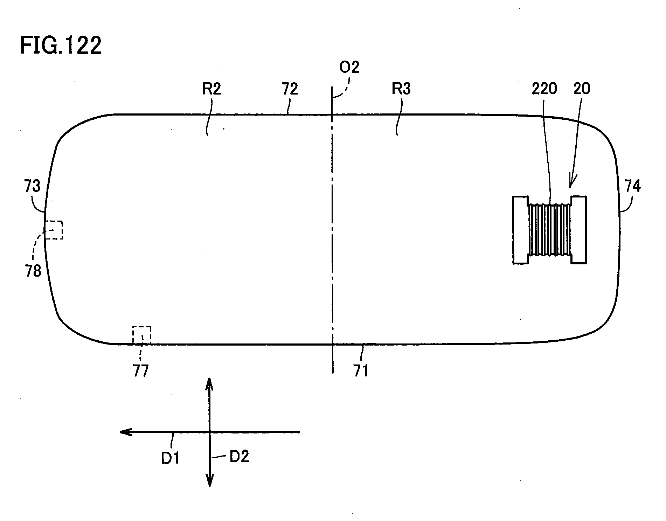

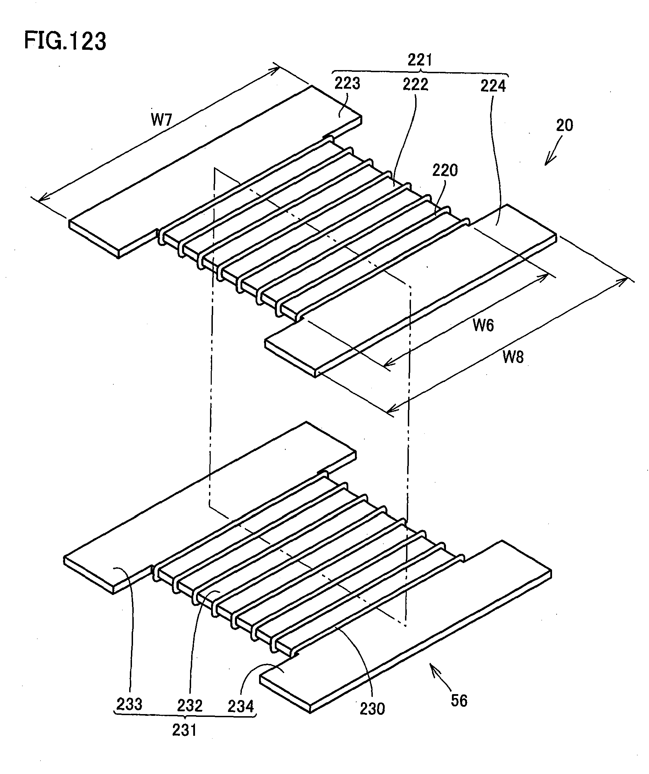

With reference to Fig. 122 and Fig. 123, the following describes an electrically powered vehicle 10 according to a twenty-ninth embodiment. It is to be noted that in the configurations shown in Fig. 122 and Fig. 123, configurations the same or corresponding to the configurations shown in Fig. 1 to Fig. 121 are given the same reference characters and may not be described repeatedly. Fig. 122 is a plan view schematically showing electrically powered vehicle 10 according to the twenty-ninth embodiment. As shown in Fig. 122, power reception unit 20 is provided at a position displaced to rear region R3 relative to central line 02. On the other hand, refueling portion 77 and charging portion 78 are provided in front region R2.

Fig. 123 is a perspective view schematically showing power reception unit 20 and power transmission unit 56.

Power reception unit 20 includes a ferrite core 221 and a secondary coil 220 wound around this ferrite core 221. Ferrite core 221 is formed to have a plate-like shape. This ferrite core 221 includes: a stem portion 222; a projection portion 223 formed at one end portion of stem portion 222; and a projection portion 224 formed at the other end portion of stem portion 222. Here, width W7 of projection portion 223 and width W8 of projection portion 224 are larger than width W6 of stem portion 222. Thus, ferrite core 221 is formed to have an H-like shape. It is to be noted that secondary coil 220 is formed such that its coil wire surrounds the winding axis, and is wound around stem portion 222. Power transmission unit 56 includes ferrite core 231 and coil 230 provided in this ferrite core 231. Furthermore, ferrite core 231 is formed to have a plate-like shape. Specifically, ferrite core 231 is formed to have an H-like shape.

Ferrite core 231 includes: a stem portion 232; a projection portion 233 formed at one end portion of stem portion 232; and a projection portion 234 formed at the other end portion of stem portion 232. It is to be noted that primary coil 230 is formed such that its coil wire surrounds the winding axis, and is wound around stem portion 232. When transferring electric power between power reception unit 20 and power transmission unit 56 thus formed, current flows in coil 230.

When the current flows in coil 230, a magnetic path is formed between power reception unit 20 and power transmission unit 56. This magnetic path passes through, for example, projection portion 234, the air gap, projection portion 224, stem portion 222, projection portion 223, the air gap, projection portion 233, and stem portion 232. Here, in power reception unit 20 and power transmission unit 56 according to the present embodiment, projection portions 223, 224, 233, 234 are formed. Hence, even if power reception unit 20 and power transmission unit 56 are misaligned with each other, the magnetic path is maintained, whereby high power transfer efficiency can be maintained between power reception unit 20 and power transmission unit 56.

In Fig. 122, power reception unit 20 is provided in rear region R3, and refueling portion 77 and charging portion 78 are provided in front region R2. Accordingly, the electromagnetic field having high strength can be suppressed from reaching refueling portion 77 and charging portion 78 during transfer of electric power. Secondary coil 220 is disposed such that the winding axis corresponds to traveling direction D1. Accordingly, also in the present embodiment, the electromagnetic field having high strength is in the front-rear direction of electrically powered vehicle 10. On the other hand, power reception unit 20 is provided at the rear surface 74 side and charging portion 78 is provided in front surface 73, so that the electromagnetic field having high strength can be suppressed from reaching charging portion 78.

(Thirtieth Embodiment)

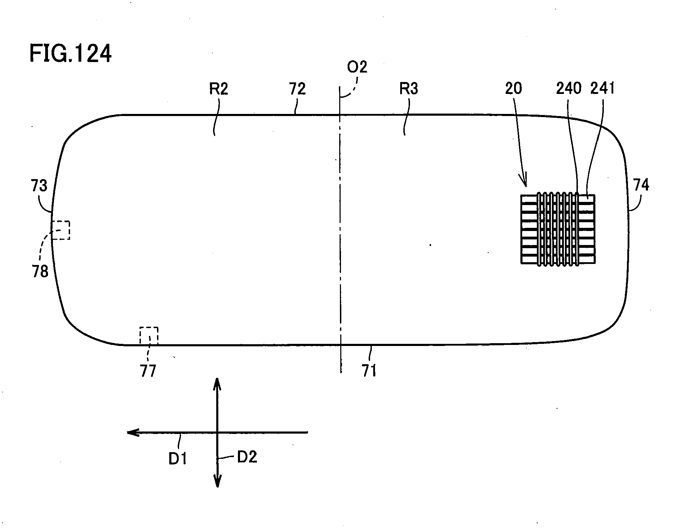

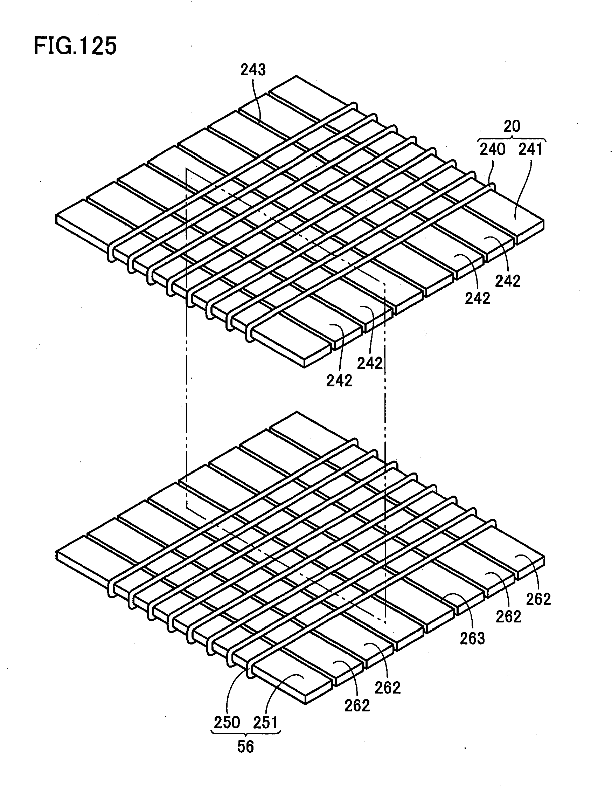

With reference to Fig. 124 and Fig. 125, the following describes an electrically powered vehicle 10 according to a thirtieth embodiment. Fig. 124 is a plan view schematically showing electrically powered vehicle 10 according to the thirtieth embodiment. As shown in Fig. 123, power reception unit 20 is provided in rear region R3. On the other hand, refueling portion 77 and charging portion 78 are provided in front region R2.

Fig. 125 is a perspective view schematically showing power reception unit 20 and power transmission unit 56. As shown in Fig. 125, power reception unit 20 includes coil 240 and ferrite core 241. Here, ferrite core 241 includes a plurality of core pieces 242. The plurality of core pieces 242 are disposed with a space therebetween in a direction perpendicular to (direction crossing) the winding axis of coil 240. Between core pieces 242, a void portion 243 is formed.

Accordingly, in the example shown in Fig. 125, the material of the ferrite core can be reduced as compared with a case where one ferrite core is formed. Accordingly, manufacturing cost can be reduced. It is to be noted that power transmission unit 56 is also formed in a similar manner. Power transmission unit 56 also includes coil 250 and ferrite core 251. Ferrite core 251 includes a plurality of core pieces 262 arranged in the direction perpendicular to (direction crossing) the winding axis of coil 250. Between core pieces 262, a void portion 263 is formed. Accordingly, also in power transmission unit 56, the manufacturing cost of ferrite core 251 can be reduced.

When transferring electric power between power reception unit 20 and power transmission unit 56 thus formed, current flows in coil 250. Accordingly, a magnetic path is formed between power reception unit 20 and power transmission unit 56. For example, the magnetic path passes through one end portion of each core piece 262, the inside of coil 250, the other end portion of each core piece 262, the air gap, one end portion of core piece 242, the inside of coil 240, the other end portion of ferrite core 241, and the air gap. With the magnetic path being thus formed, current flows in coil 240, whereby power reception unit 20 receives electric power from power transmission unit 56.

In Fig. 124, power reception unit 20 is provided in rear region R3, and charging portion 78 and refueling portion 77 are provided in front region R2. Accordingly, the electromagnetic field having high strength can be suppressed from reaching refueling portion 77 and charging portion 78.

(Thirty-First Embodiment)

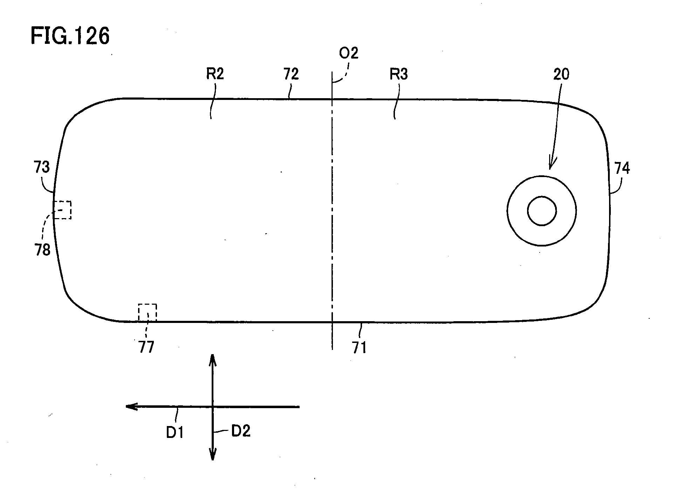

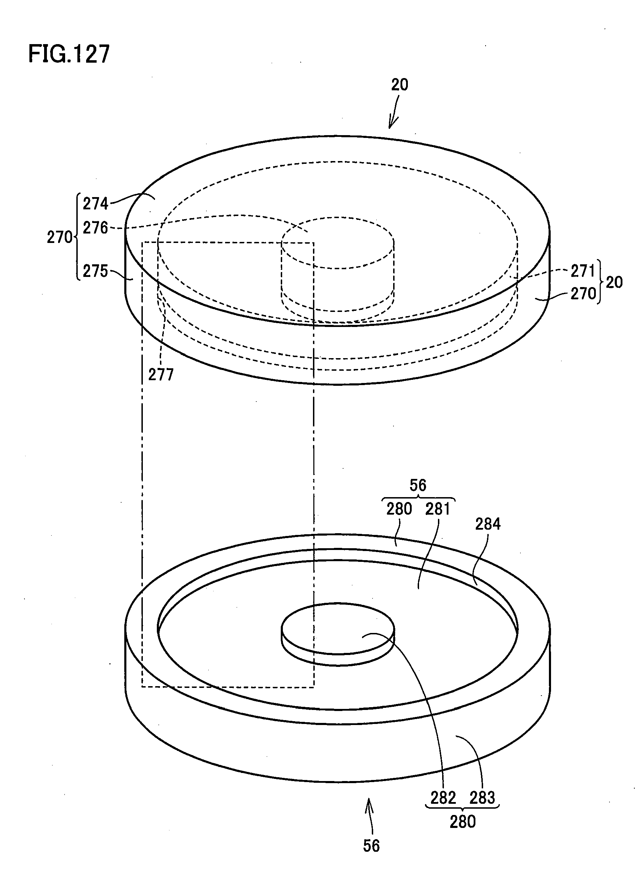

With reference to Fig. 126 and Fig. 127, the following describes an electrically powered vehicle 10 according to a twenty-sixth embodiment. It is to be noted that in the configurations shown in Fig. 126 and Fig. 127, configurations the same as or corresponding to the configurations shown in Fig. 1 to Fig. 125 are given the same reference characters and will not be described repeatedly.

Fig. 126 is a plan view schematically showing electrically powered vehicle 10 according to the thirty-first embodiment. As shown in Fig. 126, power reception unit 20 is provided at a position displaced to rear region R3 relative to central line 02. Further, refueling portion 77 and charging portion 78 are provided in front region R2.

Fig. 127 is a perspective view showing power reception unit 20 and power transmission unit 56. As shown in Fig. 127, power reception unit 20 includes: a ferrite core 270; and a coil 271 provided on ferrite core 270. Here, ferrite core 270 is formed to have a box-like shape having an opening formed at its lower portion. Ferrite core 270 includes: a bottom surface portion 274; a circumferential wall portion 275 extending downwardly from the circumferential edge portion of bottom surface portion 274; and a stem portion 276 projecting downwardly from the lower surface of bottom surface portion 274. Between stem portion 276 and circumferential wall portion 275, an annular groove portion 277 is formed. Coil 271 is wound around stem portion 276, and is contained in groove portion 277.

Power transmission unit 56 includes a ferrite core 280 and a coil 281 attached to this ferrite core 280. Ferrite core 280 includes: a bottom surface portion; a circumferential wall portion 283 formed to rise upwardly from the circumferential edge portion of the bottom surface portion; and a stem portion 282 formed to project upwardly from the central portion of the bottom surface portion. Ferrite core 280 is formed to have an opening at its upper portion, and an annular groove portion 284 is formed in ferrite core 280. Coil 281 is contained in this groove portion 284. During transfer of electric power between power reception unit 20 and power transmission unit 56, current flows in coil 281, thereby forming a magnetic path between power reception unit 20 and power transmission unit 56.

For example, the magnetic path passes through stem portion 282, the air gap, stem portion 276, bottom surface portion 274, circumferential wall portion 275, the air gap, circumferential wall portion 283, the bottom surface portion, and stem portion 282. With such a magnetic path being formed, current flows in coil 271 in an excellent manner, whereby power reception unit 20 receives electric power. When power reception unit 20 receives electric power, an electromagnetic field is formed around power reception unit 20. Here, power reception unit 20 is provided in rear region R3 whereas refueling portion 77 and charging portion 78 are provided in front region R2. Accordingly, the electromagnetic field having high strength can be suppressed from reaching refueling portion 77 and charging portion 78 during transfer of electric power. In the above-described embodiments, it has been illustrated that the so-called electromagnetic field resonance coupling or the like is employed, but the present invention can be also applied to a so-called electromagnetic induction type contactless charging method.

The embodiments disclosed herein are illustrative and non-restrictive in any respect. The scope of the present invention is defined by the terms of the claims, and is intended to include any modifications within the scope and meaning equivalent to the terms of the claims. Further, the above-described numerical values and the like are exemplary and the present invention is not limited to the numerical values and ranges.

INDUSTRIAL APPLICABILITY

The present invention is applicable to a vehicle.

REFERENCE SIGNS LIST

10: electrically powered vehicle; 11, 91: power reception device; 13: rectifier; 14: converter; 15: battery; 15a: main body portion; 15b: projection portion; 16: power control unit; 17: motor unit; 20, 96: power reception unit; 21, 57, 126, 140, 150, 160, 170, 185: ferrite core; 22, 58, 92, 94, 97, 99, 121, 122, 123, 124, 142, 143, 155, 156, 163, 181, 182, 183, 184, 187, 188, 189, 190, 210, 215: coil; 23, 59, 95, 98: capacitor; 24, 60: case; 25, 62: shield; 25a: top plate portion; 25b: circumferential wall portion; 26: cover portion; 27, 61: fixation member; 28: bolt; 29a, 29b, 64a, 64b: protrusion portion; 30: insulation piece; 164: groove portion; 35: first end portion; 36: second end portion; 37, 75: upper surface; 38, 76: bottom surface; 39, 40: side surface; 41, 42: end surface; 43, 45: long side portion; 44, 46: short side portion; 47: side member; 49: floor panel; 50,90: power transmission device; 51: external power feeding device; 52: parking space; 53: AC power supply; 54: high-frequency power driver; 55, 157: control unit; 56: power transmission unit; 56: type power transmission unit; 63: cover member; 66: roof; 67: hatch; 67a: upper surface portion; 67b: rear surface portion; 68: luggage compartment; 70: vehicle main body; 71: left side surface; 72: right side surface; 73: front surface; 74, 74b: rear surface; 77: refueling portion; 78: charging portion; 79: fuel tank; 80: driving compartment; 81: passenger compartment; 82L, 82R: boarding opening; 83L, 83R: door; 84, 84L, 84R: front fender; 85L, 85R: rear fender; 86: front bumper; 87: rear bumper; 88: engine roof; 120, 125, 141, 154, 171, 186: coil unit; 126: core ferrite core.

**Claims**

1. A vehicle comprising:

a connection portion to which a supply unit that supplies energy is connected; and

a power reception unit (20) that receives electric power contactlessly from a power transmission unit provided externally,

said vehicle including a front region (R2) located at a front side relative to a center of said vehicle in a front-rear direction, and a rear region (R3) located at a rear portion relative to the center of said vehicle,

said power reception unit (20) being disposed to be displaced to one of said front region (R2) and said rear region (R3) relative to the center in said front-rear direction, said connection portion being provided in the other of said front region (R2) and said rear region (R3).

2. The vehicle according to claim 1, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis (O1) passes through said front surface (73) and said rear surface (74), and
said connection portion is provided in at least one of said right side surface (72) and said left side surface (71).

3. The vehicle according to claim 1, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis (O1) passes through said right side surface (72) and said left side surface (71),
said power reception unit (20) is disposed to be displaced to said front region (R2) relative to the center in said front-rear direction, and
said connection portion is provided in said rear surface (74).

4. The vehicle according to claim 1, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis (O1) passes through said front surface (73) and said rear surface (74),
said power reception unit (20) is disposed to be displaced to said rear region (R3) relative to the center in said front-rear direction, and
said connection portion is provided in said front surface (73).

5. The vehicle according to claim 1, wherein
said vehicle includes an upper surface (75), and
said connection portion is provided in said upper surface (75).

6. The vehicle according to claim 1, wherein
said vehicle includes a front surface (73), a rear surface (74), a right side surface (72), and a left side surface (71), and
said connection portion is provided in a surface farthest from said power reception unit (20) among said front surface (73), said rear surface (74), said right side surface (72), and said left side surface (71).

7. The vehicle according to claim 1, further comprising a battery, wherein
said connection portion includes a charging portion to which a power supply unit that supplies electric power is connected, and
said battery is provided between said power reception unit (20) and said charging portion.

8. The vehicle according to claim 1, wherein
said vehicle includes a bottom surface, and
said power reception unit (20) is disposed at said bottom surface side.

9. The vehicle according to claim 1, wherein a difference between a natural frequency of said power transmission unit and a natural frequency of said power reception unit (20) is 10% or less of the natural frequency of said power reception unit (20).

10. The vehicle according to claim 1, wherein a coupling coefficient between said power reception unit (20) and said power transmission unit is 0.1 or less.

11. The vehicle according to claim 1, wherein said power reception unit (20) receives electric power from said power transmission unit through at least one of a magnetic field and an electric field, said magnetic field being formed between said power reception unit (20) and said power transmission unit and oscillating at a specific frequency, said electric field being formed between said power reception unit (20) and said power transmission unit and oscillating at the specific frequency.

12. A vehicle comprising:

a connection portion to which a supply unit that supplies energy is connected; and
a power reception unit (20) that receives electric power contactlessly from a power transmission unit provided externally,
said vehicle including a right region located on the right relative to a center of said vehicle in a width direction, and a left region located on the left relative to the center of said vehicle in the width direction,
said power reception unit (20) being disposed to be displaced to one of said right region and said left region relative to the center in said width direction, said connection portion being provided in the other of said right region and said left region.

13. The vehicle according to claim 12, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis (O1) passes through said front surface (73) and said rear surface (74), and
said power reception unit (20) is disposed to be displaced to said right region relative to the center in said width direction, and said connection portion is provided in said left side surface (71).

14. The vehicle according to claim 12, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis (O1) passes through said front surface (73) and said rear surface (74), and
said power reception unit (20) is disposed to be displaced to said left region relative to the center in said width direction, and said connection portion is provided in said right side surface (72).

15. The vehicle according to claim 12, wherein
said vehicle includes a front surface (73), a rear surface (74), a right side surface (72), and a left side surface (71),
said power reception unit (20) includes a coil (22) formed to surround a winding axis (O1), said coil (22) being disposed such that said winding axis passes through said right side surface (72) and said left side surface (71), and
said connection portion is provided in at least one of said front surface (73) and said rear surface (74).

16. The vehicle according to claim 12, wherein
said vehicle includes an upper surface (75), and
said connection portion is provided in said upper surface (75).

17. The vehicle according to claim 12, wherein
said vehicle includes a front surface (73), a rear surface (74), a right side surface (72), and a left side surface (71), and
said connection portion is provided in a surface farthest away from said power reception unit (20) among said front surface (73), said rear surface (74), said right side surface (72), and said left side surface (71).

18. The vehicle according to claim 12, further comprising a battery, wherein
said connection portion includes a charging portion to which a power supply unit that supplies electric power is connected, and
said battery is provided between said power reception unit (20) and said charging portion.

19. The vehicle according to claim 12, wherein
said vehicle includes a bottom surface, and
said power reception unit (20) is disposed at said bottom surface side.

20. The vehicle according to claim 12, wherein a difference between a natural frequency of said power transmission unit and a natural frequency of said power reception unit (20) is 10% or less of the natural frequency of said power reception unit (20).

21. The vehicle according to claim 12, wherein a coupling coefficient between said power reception unit (20) and said power transmission unit is 0.1 or less.

22. The vehicle according to claim 12, wherein said power reception unit (20) receives electric power from said power transmission unit through at least one of a magnetic field and an electric field, said magnetic field being formed between said power reception unit (20) and said power transmission unit and oscillating at a specific frequency, said electric field being formed between said power reception unit (20) and said power transmission unit and oscillating at the specific frequency.

FIG.1

FIG.2

FIG.3

FIG.4

FIG.5

FIG.6

FIG.7

FIG.8

# FIG.9

FIG.10

30(27)

21

31(27)

**FIG.11**

**FIG.12**

FIG.13

FIG.14

FIG.15

FIG.16

FIG.17

## FIG.18

MAGNETIC FIELD
STRENGTH[A/m]

DISTANCE FROM SHIELD END[cm]

## FIG.19

MAGNETIC FIELD
STRENGTH[A/m]

DISTANCE FROM SHIELD END[cm]

FIG.20

ELECTRIC FIELD
STRENGTH[V/m]

DISTANCE FROM SHIELD END[cm]

FIG.21

ELECTRIC FIELD
STRENGTH[V/m]

DISTANCE FROM SHIELD END[cm]

**FIG.22**

**FIG.23**

## FIG.24

FIG.25

FIG.26

FIG.27

FIG.28

FIG.29

FIG.30

FIG.31

FIG.32

FIG.33

FIG.34

FIG.35

FIG.36

FIG.37

FIG.38

FIG.39

**FIG.40**

**FIG.41**

FIG.42

FIG.43

FIG.44

FIG.45

FIG.46

FIG.47

FIG.48

FIG.49

**FIG.50**

**FIG.51**

FIG.52

FIG.53

FIG.54

FIG.55

FIG.56

FIG.57

FIG.58

FIG.59

## FIG.60

## FIG.61

## FIG.62

## FIG.63

FIG.64

FIG.65

FIG.66

FIG.67

FIG.68

FIG.69

**FIG.70**

**FIG.71**

74

## FIG.72

## FIG.73

FIG.74

FIG.75

FIG.76

FIG.77

FIG.78

FIG.79

**FIG.80**

**FIG.81**

FIG.82

FIG.83

FIG.84

FIG.85

FIG.86

FIG.87

FIG.88

FIG.89

FIG.90

FIG.91

84

## FIG.92

## FIG.93

FIG.94

FIG.95

FIG.96

FIG.97

FIG.98

FIG.99

FIG.100

FIG.101

EP 2 849 313 A1

FIG.102

70   81   10   68

80

78
75

88   66   67a 67b
67

FIG.103

R2   72   O2   R3   20   R1
21  22

73

78

15   71

74

D1  D2

90

FIG.104

FIG.105

FIG.106

FIG.107

## FIG.108

## FIG.109

## FIG.110

FIG.111

## FIG.112

FIG.113

FIG.114

FIG.115

FIG.116

FIG.117

FIG.118

## FIG.119

FIG.120

FIG.121

FIG.122

FIG.123

EP 2 849 313 A1

FIG.124

106

FIG.125

FIG.126

R2    72    O2    R3         20

73

74

78

77        71

D1    D2

FIG.127

## INTERNATIONAL SEARCH REPORT

| | International application No. |
|---|---|
| | PCT/JP2012/061830 |

A.  CLASSIFICATION OF SUBJECT MATTER
*H02J17/00*(2006.01)i, *H02J7/00*(2006.01)i

According to International Patent Classification (IPC) or to both national classification and IPC

B.  FIELDS SEARCHED

Minimum documentation searched (classification system followed by classification symbols)
H02J17/00, H02J7/00

Documentation searched other than minimum documentation to the extent that such documents are included in the fields searched
Jitsuyo Shinan Koho          1922-1996    Jitsuyo Shinan Toroku Koho   1996-2012
Kokai Jitsuyo Shinan Koho    1971-2012    Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 4873016 B2  (Toyota Motor Corp.),<br>08 February 2012 (08.02.2012),<br>paragraphs [0009], [0051], [0058]; fig. 1<br>& US 2010/0038156 A1      & EP 2116405 A1<br>& WO 2008/082012 A1       & CN 101573246 A<br>& KR 10-2009-0096647 A   & RU 2424918 C<br>& KR 10-2012-0006094 A | 1<br>2-22 |
| Y | JP 2010-172084 A  (Saitama University),<br>05 August 2010 (05.08.2010),<br>claim 1; paragraphs [0002], [0033]; fig. 8, 13<br>(Family: none) | 2-22 |

| ☒ | Further documents are listed in the continuation of Box C. | ☐ | See patent family annex. |
|---|---|---|---|

*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 30 July, 2012 (30.07.12) | 07 August, 2012 (07.08.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/061830

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-139566 A  (Autonetworks Technologies, Ltd.), 14 July 2011 (14.07.2011), claim 1; paragraphs [0002], [0011] to [0015]; fig. 1 (Family: none) | 3-22 |
| Y | JP 2005-269687 A  (Mitsui Engineering & Shipbuilding Co., Ltd.), 29 September 2005 (29.09.2005), paragraph [0026]; fig. 1 (Family: none) | 12-22 |

Form PCT/ISA/210 (continuation of second sheet) (July 2009)

EP 2 849 313 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010172084 A
- JP 2011049230 A
- JP 2011193671 A